# EUROPÄISCHE PATENTSCHRIFT

(11) **EP 4 260 978 B1**
(45) Veröffentlichungstag und Bekanntmachung des Hinweises auf die Patenterteilung: **11.02.2026**
(21) Anmeldenummer: 23195398.5
(22) Anmeldetag: 30.08.2019
(51) Int. Cl.: B23Q 39/00

(54) **WERKZEUGMASCHINE ZUM SPANENDEN BEARBEITEN EINES WERKSTÜCKS**
MACHINE TOOL FOR MACHINING A WORKPIECE
MACHINE-OUTIL POUR L'USINAGE D'UNE PIÈCE PAR ENLÈVEMENT DE COPEAUX

(30) Priorität: 30.08.2018 DE 102018214794; 18.01.2019 DE 102019200661
(43) Veröffentlichungstag der Anmeldung: 18.10.2023
(62) Teilanmeldung aus: 19762938.9
(73) Patentinhaber: DMG MORI Pfronten GmbH, 87459 Pfronten (DE)
(72) Erfinder: GEISSLER, Alfred, 87459 Pfronten (DE); TRENKLE, Michael, 87459 Pfronten (DE); RIEDEL, Sebastian, 87637 Eisenberg (DE)
(74) Vertreter: MERH-IP Matias Erny Reichl Hoffmann Patentanwälte PartG mbB

(56) Entgegenhaltungen:
- EP-A1- 2 987 761
- WO-A1-2018/092222
- JP-A- H01 257 543
- MAKINO EUROPE: "Introducing iAssist, autonomous collaborative robot for the machine-tool industry", 8 December 2017 (2017-12-08), XP093303993, Retrieved from the Internet <URL:https://www.youtube.com/watch?v=-2rMRd5vWL8>

## Beschreibung

Die vorliegende Erfindung betrifft eine Werkzeugmaschine zum spanenden Bearbeiten eines Werkstücks. Des Weiteren betrifft die vorliegende Erfindung ein System mit einer oder mehreren Werkzeugmaschinen.

### HINTERGRUND DER ERFINDUNG

Transportfahrzeuge zum Aufnehmen und Transportieren von Gütern innerhalb einer Werkhalle sind bekannt. Hierbei sind der Gabelstapler und der zum Teil motorisierte Hubwagen die bekanntesten Beispiele. Dabei ist es ein erklärtes Ziel bei solchen Zulieferungen durch entsprechende Fahrzeuge, den Automatisierungsgrad immer weiter zu erhöhen und bevorzugt die Zulieferungen mit den Produktionsprozessen zu synchronisieren.

Hierfür werden bevorzugt fahrerlose Transportsysteme, kurz FTS, eingesetzt, welche neben fahrerlosen Transportfahrzeugen, kurz FTF, auch festgelegte Plätze zum Aufnehmen oder Ablegen von Transportgut durch die Transportfahrzeuge aufweisen, gegebenenfalls auch spezifisch eingerichtete Plätze oder Haltepunkte, um zum Beispiel das Transportgut für den bevorstehenden Fertigungsprozess vorzubereiten.

So ist beispielsweise aus der WO 2018/092222 A1 ein Transportsystem mit einer Vielzahl von fahrerlosen Transportfahrzeugen (FTF) bekannt, die jeweils einen Roboterarm aufweisen, über den Werkstücke oder Werkzeuge gehandhabt werden können, um diese beispielsweise einer Bearbeitungsstation bereitzustellen.

Nachteilig erweisen sich hierbei jedoch FTS, bei denen die Transportfahrzeuge durch ein Schienensystem zu den jeweiligen Stationen geführt werden. Nicht nur, dass ein solches Schienensystem sehr aufwendig ist im Hinblick auf Fertigung, Aufbau sowie Ausrichtung der Schienen und Schienensegmente zueinander. Es ist auch immer nur für den einen konkreten Fall konzipiert und kann daher nicht kurzfristig auf Änderungen der Positionen der Plätze oder des Produktionsablaufes reagieren bzw. angepasst werden.

Derartige Systeme sind daher immens nachteilig im Hinblick auf Flexibilität.

Weiterhin bieten die derzeit bekannten FTS den Nachteil, dass die FTF in der Regel der Fälle keine Möglichkeit aufweisen, ein Werkstück direkt auf dem FTF bearbeiten zu lassen, um eine flexible und damit effektive Produktion/Bearbeitung von Werkstücken zu gewährleisten.

Weiterer Stand der Technik ist zudem aus der Online-Video-Veröffentlichung "Introducing I-assist, autonomous collaborative robot for the machine-tool industry" (URL: www.youtube.com/watch?v=-2rMRd5vWL8) bekannt, die ein FTS mit einem darauf montierten Roboterarm zeigt.

### ZUSAMMENFASSUNG DER ERFINDUNG

Eine Aufgabe der vorliegenden Erfindung ist es daher, eine Werkzeugmaschine zum spanenden Bearbeiten eines Werkstücks bereitzustellen, mit der die obigen Probleme vermieden werden.

Diese Aufgaben werden gelöst durch eine Werkzeugmaschine nach Anspruch 1. Die abhängigen Ansprüche beziehen sich auf vorteilhafte Ausführungsbeispiele der erfindungsgemäßen Werkzeugmaschine und des erfindungsgemäßen Systems.

Die erfindungsgemäße Werkzeugmaschine zum spanenden Bearbeiten eines Werkstücks umfasst zumindest einen auf einer Grundfläche frei verfahrbaren ersten Werkzeugmaschinenaufbau, der ein fahrerloses Transportfahrzeug und einen Industrieroboter umfasst, und zumindest einen auf der Grundfläche aufstellbaren, stationären zweiten Werkzeugmaschinenaufbau mit einer Arbeitsspindel für Werkzeuge. Das fahrerlose Transportfahrzeug des ersten Werkzeugmaschinenaufbaus ist eingerichtet, zur Positionierung des ersten Werkzeugmaschinenaufbaus am zweiten Werkzeugmaschinenaufbau unabhängig von einer Art Schienensystem auf der Grundfläche verfahren zu werden. Der erste Werkzeugmaschinenaufbau umfasst weiter ein Werkzeugmagazin zum Tragen verschiedener Werkzeuge, wobei der Industrieroboter eingerichtet ist, ein vom Werkzeugmagazin getragenes Werkzeug direkt in die Arbeitsspindel des zweiten Werkzeugmaschinenaufbaus einzuwechseln und/oder ein von der Arbeitsspindel getragenes Werkzeug in das Werkzeugmagazin einzuwechseln, wenn der erste Werkzeugmaschinenaufbau an dem zweiten Werkzeugmaschinenaufbau positioniert ist. Das Werkzeugmagazin ist dabei als Radmagazin oder als Kettenmagazin ausgeführt.

Durch die erfindungsgemäße Werkzeugmaschine konnte das Konzept einer modularen Werkzeugmaschine, die nicht mehr fest aus einem Maschinentisch und einer in mehreren Achsen relativ zu dem Maschinentisch verfahrbaren Spindeleinheit bestehen muss, umgesetzt werden.

Diese birgt den immensen Vorteil, dass nun in beliebiger Weise ein bereits bestehendes Maschinenkonzept um weitere Bearbeitungsmöglichkeiten erweitert bzw. ergänzt werden kann. Zudem kann durch die relativ zueinander beweglichen und x-beliebig positionierbaren Module an jeder erdenklichen Stelle in der Werkhalle eine Werkzeugmaschine bzw. ein Bearbeitungszentrum entstehen, so dass auch hier auf individuelle Anforderungen der Fertigungsprozesse und der Fertigungskette eingegangen werden kann.

Hierdurch besteht nun die Möglichkeit, Fertigungsschritte flexibel zu planen und ortsungebunden durchzuführen.

Insbesondere kann durch die Ausgestaltung der erfindungsgemäßen Werkzeugmaschine eine individuelle und freie Positionierungder Werkzeugmaschinenaufbauten zueinander erfolgen, ohne dabei auf eine Art Schienensystem oder dergleichen angewiesen zu sein.

Die erfindungsgemäße Werkzeugmaschine kann dadurch vorteilhaft weitergebildet werden, dass der zumindest eine zweite Werkzeugmaschinenaufbau zumindest einen auf der Grundfläche aufstellbaren, stationären Werkzeugmaschinenaufbau aufweist.

Weiterhin kann die erfindungsgemäße Werkzeugmaschine dadurch vorteilhaft weitergebildet werden, dass der zumindest eine auf der Grundfläche aufstellbare, stationäre Werkzeugmaschinenaufbau und der zumindest eine frei verfahrbare erste Werkzeugmaschinenaufbau zusammen die zur Bearbeitung des Werkstücks eingerichtete Werkzeugmaschine ausbilden, wenn der zumindest eine frei verfahrbare erste Werkzeugmaschinenaufbau an dem zumindest einen stationären Werkzeugmaschinenaufbau positioniert ist.

Hierdurch können, je nach Anforderung an das Layout der Fertigung, teilweise Module der modularen Werkzeugmaschine auch als stationäre Module ausgebildet sein, an die die mobilen Module heranfahren können um den entsprechenden Fertigungsschritt durchzuführen.

Überdies kann die erfindungsgemäße Werkzeugmaschine dadurch vorteilhaft weitergebildet werden, dass der zumindest eine zweite Werkzeugmaschinenaufbau zumindest einen weiteren auf der Grundfläche frei verfahrbaren Werkzeugmaschinenaufbau mit zumindest einem Werkzeugmaschinenbauteil aufweist.

Eine besonders vorteilhafte Weiterbildung der erfindungsgemäßen Werkzeugmaschine besteht darin, dass der zumindest eine weitere frei verfahrbare Werkzeugmaschinenaufbau und der zumindest eine frei verfahrbare erste Werkzeugmaschinenaufbau zusammen die zur Bearbeitung des Werkstücks eingerichtete Werkzeugmaschine ausbilden, wenn der zumindest eine frei verfahrbare erste Werkzeugmaschinenaufbau an dem zumindest einen weiteren frei verfahrbaren Werkzeugmaschinenaufbau positioniert ist und/oder der zumindest eine weitere frei verfahrbare Werkzeugmaschinenaufbau an dem zumindest einen frei verfahrbaren ersten Werkzeugmaschinenaufbau positioniert ist.

Hierdurch können nun sämtliche Module der modularen Werkzeugmaschine frei im Raum und zueinander positioniert werden, um ein Maximum an Flexibilität bei der Abarbeitung der Fertigungsaufträge zu gewährleisten und jegliche erdenkliche Konstellation und Kombination von Modulen der modularen Werkzeugmaschine zu ermöglichen.

Die erfindungsgemäße Werkzeugmaschine kann dadurch vorteilhaft weitergebildet werden, dass die Werkzeugmaschine zur bohrenden und/oder fräsenden Werkstückbearbeitung eingerichtet ist.

Weiterhin kann die erfindungsgemäße Werkzeugmaschine dadurch vorteilhaft weitergebildet werden, dass der zumindest eine zweite Werkzeugmaschinenaufbau eine werkzeugtragende Arbeitsspindel aufweist, und der zumindest eine auf der Grundfläche frei verfahrbare erste Werkzeugmaschinenaufbau eine Werkstückspanneinrichtung aufweist.

Zudem kann die erfindungsgemäße Werkzeugmaschine dadurch vorteilhaft weitergebildet werden, dass der zumindest eine auf der Grundfläche frei verfahrbare erste Werkzeugmaschinenaufbau eine werkzeugtragende Arbeitsspindel aufweist, und der zumindest eine zweite Werkzeugmaschinenaufbau eine Werkstückspanneinrichtung aufweist.

Hierdurch können nun verschiedenste Maschinenkonzepte zur fräsenden oder bohrenden Bearbeitung eines Werkstücks umgesetzt werden, unabhängig davon, welcher Werkzeugmaschinenaufbau nun die Arbeitsspindel aufweist und welcher die Werkstückspanneinrichtung.

Überdies kann die erfindungsgemäße Werkzeugmaschine dadurch vorteilhaft weitergebildet werden, dass die Werkzeugmaschine zur drehenden Werkstückbearbeitung eingerichtet ist.

Insbesondere kann die erfindungsgemäße Werkzeugmaschine dadurch vorteilhaft weitergebildet werden, dass der zumindest eine zweite Werkzeugmaschinenaufbau eine werkstücktragende Arbeitsspindel aufweist, und der zumindest eine auf der Grundfläche frei verfahrbare erste Werkzeugmaschinenaufbau eine Werkzeugspanneinrichtung, insbesondere einen Werkzeugrevolver, einen der werkstücktragenden Arbeitsspindel des zumindest einen zweiten Werkzeugmaschinenaufbaus zugeordneten Reitstock, und/oder eine weitere werkstücktragende Arbeitsspindel als Gegenspindel zur werkstücktragenden Arbeitsspindel des zumindest einen zweiten Werkzeugmaschinenaufbaus aufweist.

Diesbezüglich kann die erfindungsgemäße Werkzeugmaschine ferner dadurch vorteilhaft weitergebildet werden, dass der zumindest eine auf der Grundfläche frei verfahrbare erste Werkzeugmaschinenaufbau eine werkstücktragende Arbeitsspindel aufweist, und der zumindest eine zweite Werkzeugmaschinenaufbau eine Werkzeugspanneinrichtung, insbesondere einen Werkzeugrevolver, einen der werkstücktragenden Arbeitsspindel des zumindest einen frei verfahrbaren ersten Werkzeugmaschinenaufbaus zugeordneten Reitstock, und/oder eine weitere werkstücktragende Arbeitsspindel als Gegenspindel zur werkstücktragenden Arbeitsspindel des zumindest einen frei verfahrbaren ersten Werkzeugmaschinenaufbaus aufweist.

Hierdurch können nun verschiedenste Maschinenkonzepte zur drehenden Bearbeitung eines Werkstücks umgesetzt werden, unabhängig davon, welcher Werkzeugmaschinenaufbau nun die Arbeitsspindel zum Tragen des Werkstücks aufweist und welcher den Werkzeugrevolver oder Werkzeugschlitten.

Eine weitere sehr vorteilhafte Weiterbildung der erfindungsgemäßen Werkzeugmaschine besteht darin, dass die Werkzeugmaschine zur materialauftragenden Werkstückbearbeitung eingerichtet ist.

Dabei kann die erfindungsgemäße Werkzeugmaschine zudem dadurch vorteilhaft weitergebildet werden, dass der zumindest eine zweite Werkzeugmaschinenaufbau eine Material auftragende Bearbeitungseinheit aufweist, und der zumindest eine auf der Grundfläche frei verfahrbare erste Werkzeugmaschinenaufbau eine Werkstückspanneinrichtung aufweist.

Weiterhin kann aber auch die erfindungsgemäße Werkzeugmaschine dadurch vorteilhaft weitergebildet werden, dass der zumindest eine auf der Grundfläche frei verfahrbare erste Werkzeugmaschinenaufbau eine Material auftragende Bearbeitungseinheit aufweist, und der zumindest eine zweite Werkzeugmaschinenaufbau eine Werkstückspanneinrichtung aufweist.

Hierdurch kann nun neben der fräsenden/bohrenden und der drehenden Bearbeitung, die ja für den Materialabtrag am Werkstück zum Einsatz kommen, aber eben auch Material auf das Werkstück aufgetragen werden. Durch entsprechende Verfahren wie Laser-Auftragschweißen oder auch anderen Verfahren können so, direkt am Ort des Werkstücks, weitere Materialschichten oder Materialbereiche auf das Werkstück aufgetragen werden.

Zudem kann die erfindungsgemäße Werkzeugmaschine dadurch vorteilhaft weitergebildet werden, dass der zumindest eine zweite Werkzeugmaschinenaufbau ein Maschinengestell aufweist, an dem ein oder mehrere Werkzeugmaschinenbauteile angeordnet sind.

Zudem kann die erfindungsgemäße Werkzeugmaschine dadurch vorteilhaft weitergebildet werden, dass der zumindest eine zweite Werkzeugmaschinenaufbau ein oder mehrere an dem Maschinengestell verfahrbare Werkzeugmaschinenschlitten aufweist.

Hierdurch können nun die Werkzeugmaschinenbauteile entlang verschiedener Richtungen, bevorzugt entlang der x-, y- und der z-Richtung, verfahren werden, um verschiedene Zustellbewegungen der Werkzeugmaschinenbauteile untereinander und auch übergreifend zwischen den einzelnen Werkzeugmaschinenaufbauten zu ermöglichen.

Weiterhin kann aber auch die erfindungsgemäße Werkzeugmaschine dadurch vorteilhaft weitergebildet werden, dass zumindest einer der einen oder mehreren Werkzeugmaschinenschlitten eine Arbeitsspindel oder einen eine Arbeitsspindel tragenden Spindelkopf oder Spindelschwenkkopf trägt.

Weiterhin kann aber auch die erfindungsgemäße Werkzeugmaschine dadurch vorteilhaft weitergebildet werden, dass das Maschinengestell in Portalbauweise, in Fahrständerbauweise oder in Konsolbauweise ausgestaltet ist.

Neben verschiedenen Zustellbewegungen können hierdurch auch verschiedene Grundtypen von Werkzeugmaschinen als modulare Werkzeugmaschine realisiert werden, je nach dem, welche Anwendung bzw. Bearbeitung erforderlich ist.

Weiterhin kann aber auch die erfindungsgemäße Werkzeugmaschine dadurch vorteilhaft weitergebildet werden, dass zumindest einer der einen oder mehreren Werkzeugmaschinenschlitten eine Horizontalbearbeitungs-Arbeitsspindel und/oder eine Vertikalbearbeitungs-Arbeitsspindel trägt.

Weiterhin kann aber auch die erfindungsgemäße Werkzeugmaschine dadurch vorteilhaft weitergebildet werden, dass die Horizontalbearbeitungs-Arbeitsspindel und/oder die Vertikalbearbeitungs-Arbeitsspindel des zumindest einen der einen oder mehreren Werkzeugmaschinenschlitten durch eine zusätzliche Rotationsachse schwenkbar zu dem einen oder mehreren Werkzeugmaschinenschlitten ausgebildet ist.

Hierdurch kann in besonders vorteilhafter Weise ein Vertikal-Bearbeitungszentrum in ein Horizontal-Bearbeitungszentrum umgewandelt werden, was zusätzlich die Flexibilität bei der Fertigung von Bauteilen/Werkstücken erhöht.

Weiterhin kann aber auch die erfindungsgemäße Werkzeugmaschine dadurch vorteilhaft weitergebildet werden, dass der zumindest eine frei verfahrbare erste Werkzeugmaschinenaufbau und/oder der zumindest eine zweite Werkzeugmaschinenaufbau einen eine Arbeitsspindel tragenden Fräsroboter aufweist.

Hierdurch kann nun auf jegliche spanabhebende Bearbeitung flexibel eingegangen werden, da der Fräsroboter neben verschiedensten Werkzeugen auch seine Arbeitsspindel in verschiedenste Lagen bringen kann, um effektiv und präzise ein Werkstück zu bearbeiten.

Weiterhin kann aber auch die erfindungsgemäße Werkzeugmaschine dadurch vorteilhaft weitergebildet werden, dass der zumindest eine frei verfahrbare erste Werkzeugmaschinenaufbau einen Werkstückspanntisch aufweist, der insbesondere als Drehtisch, Rundtisch und/oder Schwenk-/Rundtisch ausgebildet ist.

Auch diese Weiterbildung ermöglicht einen höheren Grad an Flexibilität für die Fertigung bzw. Bearbeitung von Werkstücken.

Weiterhin kann aber auch die erfindungsgemäße Werkzeugmaschine dadurch vorteilhaft weitergebildet werden, dass der zumindest eine frei verfahrbare erste Werkzeugmaschinenaufbau einen Industrieroboter zum Werkstück- und/oder Werkzeughandling aufweist.

Neben den reinen Bearbeitungsmodulen wie Maschinentisch und/oder Fräsroboter bzw. Arbeitsspindel-Einheiten können auch Hilfsmodule durch die Werkzeugmaschinenaufbauten getragen werden und so die Fertigung bzw. Bearbeitung des Werkstücks unterstützen und so eine effizientere Fertigung ermöglichen.

Weiterhin kann aber auch die erfindungsgemäße Werkzeugmaschine dadurch vorteilhaft weitergebildet werden, dass der zumindest eine frei verfahrbare erste Werkzeugmaschinenaufbau ein fahrerloses Transportfahrzeug umfasst.

Hierdurch kann es insbesondere vorteilhaft ermöglicht werden, den Automatisierungsgrad der gesamten Fertigung um ein vielfaches zu steigern, da die Koordinierung und allgemein die Steuerung der fahrerlosen Transportfahrzeuge bzw. Transporteinrichtungen beispielsweise durch eine zentrale Rechner-/Steuereinrichtung übernommen werden kann, so dass hier ein Werker vorrangig eine überwachende Funktion einnehmen kann.

Weiterhin kann eine vorteilhafte Weiterbildung der erfindungsgemäßen Werkzeugmaschine erreicht werden durch: einen Antrieb zum Verfahren des Transportfahrzeugs, und eine Steuereinheit zum Steuern des Transportfahrzeugs.

Weiterhin kann aber auch die erfindungsgemäße Werkzeugmaschine dadurch vorteilhaft weitergebildet werden, dass der zumindest eine frei verfahrbare erste Werkzeugmaschinenaufbau einen internen Energiespeicher, der den zumindest einen frei verfahrbaren ersten Werkzeugmaschinenaufbau mit Energie, insbesondere elektrischer Energie versorgt, und/oder eine Sensoreinheit, die zur Überwachung der Umgebung des frei verfahrbaren ersten Werkzeugmaschinenaufbaus einen oder mehrere optische, Infrarot- und/oder Radarsensoren umfasst, aufweist.

Hierdurch können neben einer zeitlich begrenzten autarken Energieversorgung des frei verfahrbaren Werkzeugmaschinenaufbaus auch die Sicherheit der Umgebung, insbesondere Personen, die in der Werkhalle anwesend sind und womöglich umherlaufen, erreicht werden, da die frei verfahrbaren Werkzeugmaschinenaufbauten diese registrieren und entsprechend eine Safety-Funktion auslösen können, sollte es zu einer Kollision kommen oder diese bevorstehen.

Weiterhin kann aber auch die erfindungsgemäße Werkzeugmaschine dadurch vorteilhaft weitergebildet werden, dass der zumindest eine frei verfahrbare erste Werkzeugmaschinenaufbau eine oder mehrere Antriebsketten und/oder eine Mehrzahl von Rädern zum Bewegen bzw. Verfahren des frei verfahrbaren ersten Werkzeugmaschinenaufbaus aufweist, wobei eines, mehrere oder alle Räder einzeln ansteuer- und/oder lenkbar sind, wobei insbesondere eines, mehrere oder alle Räder der Transporteinrichtung als einzeln ansteuerbare Mecanum-Räder ausgebildet sind.

Mecanum-Räder können, da sie bereits in der Robotertechnik weitgehend bekannt sind, auch für die frei verfahrbaren Werkzeugmaschinenaufbauten hervorragend genutzt werden, um eine ebenso große Flexibilität bei der Bewegung bzw. bei den Bewegungsmöglichkeiten der frei verfahrbaren Werkzeugmaschinenaufbauten zu gewährleisten.

Weiterhin kann aber auch die erfindungsgemäße Werkzeugmaschine dadurch vorteilhaft weitergebildet werden, dass der zumindest eine frei verfahrbare erste Werkzeugmaschinenaufbau dazu eingerichtet ist, mit einer externen Steuereinrichtung zu kommunizieren, insbesondere mit einer zentralen Steuereinrichtung, die dazu eingerichtet ist, mit mehreren frei verfahrbaren Werkzeugmaschinenaufbauten gleichzeitig in Verbindung zu stehen, insbesondere mittels einer drahtlosen Kommunikationsverbindung, und die mehreren frei verfahrbaren Werkzeugmaschinenaufbauten zu steuern, insbesondere per automatischer Fernsteuerung.

Durch die zentrale Steuereinrichtung können nun eine Vielzahl an frei verfahrbaren Werkzeugmaschinenaufbauten sowie stationäre Werkzeugmaschinenaufbauten untereinander abgestimmt werden, um einen reibungslosen Fertigungsprozess bzw. eine reibungslose Fertigungskette zu gewährleisten.

Weiterhin kann aber auch die erfindungsgemäße Werkzeugmaschine dadurch vorteilhaft weitergebildet werden, dass der zumindest eine frei verfahrbare erste Werkzeugmaschinenaufbau dazu eingerichtet ist, über eine Kommunikationsschnittstelle mit einer Steuereinrichtung der Werkzeugmaschine zu kommunizieren, wobei die Steuereinrichtung der Werkzeugmaschine an dem zumindest einen zweiten Werkzeugmaschinenaufbau angeordnet ist.

Hier können in vorteilhafter Weise der frei verfahrbare Werkzeugmaschinenaufbau und die Werkzeugmaschine auch direkt miteinander kommunizieren, ohne dabei auf eine zentrale Steuereinrichtung angewiesen zu sein.

Weiterhin kann aber auch die erfindungsgemäße Werkzeugmaschine dadurch vorteilhaft weitergebildet werden, dass die Kommunikationsschnittstelle eine drahtlose Kommunikationsschnittstelle aufweist und der zumindest eine frei verfahrbare erste Werkzeugmaschinenaufbau dazu eingerichtet ist, über die drahtlose Kommunikationsschnittstelle mit der Steuereinrichtung der Werkzeugmaschine per drahtloser Kommunikationsverbindung zu kommunizieren.

Weiterhin kann aber auch die erfindungsgemäße Werkzeugmaschine dadurch vorteilhaft weitergebildet werden, dass der zumindest eine frei verfahrbare erste Werkzeugmaschinenaufbau eine Andockeinrichtung aufweist und dazu eingerichtet ist, mittels der Andockeinrichtung an einer auf der Grundfläche installierten Andockstation der Werkzeugmaschine oder an einer Andockstation des zumindest einen zweiten Werkzeugmaschinenaufbaus zum Ausbilden der Werkzeugmaschine zusammen mit dem zweiten Werkzeugmaschinenaufbau anzudocken.

Weiterhin kann aber auch die erfindungsgemäße Werkzeugmaschine dadurch vorteilhaft weitergebildet werden, dass der zumindest eine frei verfahrbare erste Werkzeugmaschinenaufbau zusammen mit dem zumindest einen zweiten Werkzeugmaschinenaufbau die zur Bearbeitung des Werkstücks eingerichtete Werkzeugmaschine ausbilden, wenn der zumindest eine frei verfahrbare erste Werkzeugmaschinenaufbau an der Andockstation der Werkzeugmaschine bzw. der Andockstation des zumindest einen zweiten Werkzeugmaschinenaufbaus angedockt ist.

Weiterhin kann aber auch die erfindungsgemäße Werkzeugmaschine dadurch vorteilhaft weitergebildet werden, dass der zumindest eine frei verfahrbare erste Werkzeugmaschinenaufbau weiterhin dazu eingerichtet ist, mittels der Andockeinrichtung an einer auf der Grundfläche installierten Andockstation einer weiteren Werkzeugmaschine oder an einer Andockstation zumindest eines dritten Werkzeugmaschinenaufbaus zum Ausbilden einer weiteren Werkzeugmaschine zusammen mit dem dritten Werkzeugmaschinenaufbau anzudocken.

Über verschiedenste Andockstationen können die frei verfahrbaren Werkzeugmaschinenaufbauten mit den Werkzeugmaschinen kommunizieren und aber auch Energie übertragen. Insbesondere eignet es sich hierfür, die Andockstation auf der Grundfläche vorzusehen, da hier die frei verfahrbaren Werkzeugmaschinenaufbauten problemlos hinfahren können und sich im Anschluss daran über ihre Andockeinrichtungen mit den Andockstationen auf der Grundfläche verbinden können.

Weiterhin kann aber auch die erfindungsgemäße Werkzeugmaschine dadurch vorteilhaft weitergebildet werden, dass der zumindest eine frei verfahrbare erste Werkzeugmaschinenaufbau weiterhin dazu eingerichtet ist, zusammen mit dem zumindest einen dritten Werkzeugmaschinenaufbau eine weitere zur Bearbeitung des Werkstücks eingerichtete Werkzeugmaschine auszubilden, wenn der zumindest eine frei verfahrbare erste Werkzeugmaschinenaufbau an der Andockstation der weiteren Werkzeugmaschine bzw. der Andockstation des zumindest einen dritten Werkzeugmaschinenaufbaus angedockt ist.

Weiterhin kann aber auch die erfindungsgemäße Werkzeugmaschine dadurch vorteilhaft weitergebildet werden, dass die Andockeinrichtung der Transporteinrichtung dazu eingerichtet ist, die Transporteinrichtung zum Andocken an der Andockstation anzuheben und/oder abzusenken.

Hierdurch kann nun in vorteilhafter Weise die Transporteinrichtung auf der Andockstation der Grundfläche abgesetzt werden und ein Verbindungsschluss ermöglicht werden.

Das erfindungsgemäße System umfasst eine oder mehrere der erfindungsgemäßen Werkzeugmaschinen.

Das erfindungsgemäße System kann vorteilhaft weitergebildet werden, durch zumindest einen dritten Werkzeugmaschinenaufbau mit zumindest einem weiteren Werkzeugmaschinenbauteil, wobei der dritte Werkzeugmaschinenaufbau beabstandet von dem zumindest einen zweiten Werkzeugmaschinenaufbau positionierbar ist, und wobei der zumindest eine frei verfahrbare erste Werkzeugmaschinenaufbau zusammen mit dem zumindest einen dritten Werkzeugmaschinenaufbau eine weitere zur Bearbeitung des Werkstücks eingerichtete Werkzeugmaschine ausbildet, wenn der zumindest eine frei verfahrbare erste Werkzeugmaschinenaufbau an dem zumindest einen dritten Werkzeugmaschinenaufbau positioniert ist.

Das erfindungsgemäße System kann vorteilhaft weitergebildet werden, durch zumindest einen weiteren frei verfahrbaren Werkzeugmaschinenaufbau mit zumindest einem weiteren Werkzeugmaschinenbauteil, wobei der zumindest eine weitere frei verfahrbare Werkzeugmaschinenaufbau zusammen mit dem zumindest einen zweiten Werkzeugmaschinenaufbau eine weitere zur Bearbeitung des Werkstücks eingerichtete Werkzeugmaschine ausbildet, wenn der zumindest eine weitere frei verfahrbare Werkzeugmaschinenaufbau an dem zumindest einen zweiten Werkzeugmaschinenaufbau positioniert ist.

Durch die erfindungsgemäße Werkzeugmaschine kann der Produktions- und Bearbeitungsprozess von Werkstücken deutlich flexibler gestaltet werden. Zudem kann die erfindungsgemäße Werkzeugmaschine sowohl bei bereits bestehenden Fertigungsstrukturen integriert werden, als auch für völlig neue Abläufe bei der Fertigung und Bearbeitung von Werkstücken verwendet werden.

Zudem sollen im Folgenden Beispiele einer Transporteinrichtung, einer Werkzeugmaschine und eines Verfahrens zur Handhabung von einer Palette oder eines Werkstücks und ihre jeweiligen Vorteile beschrieben werden.

Eine beispielhafte Transporteinrichtung zum Transportieren einer Handhabungseinrichtung zur Handhabung einer Palette und/oder eines Werkstücks an eine Werkzeugmaschine zur spanenden Bearbeitung des Werkstücks, wobei die Werkzeugmaschine eine Arbeitsspindel zum Aufnehmen eines Werkzeugs oder des Werkstücks und eine Palette zum Aufnehmen des Werkzeugs oder des Werkstücks aufweist, ist ferner dazu eingerichtet, die Handhabungseinrichtung innerhalb eines Bereiches vor einem Arbeitsraum der Werkzeugmaschine entlang der den Bereich aufspannenden Raumrichtungen zu positionieren.

Durch die beispielhafte Transporteinrichtung ist es nun möglich, gänzlich auf Schienensysteme zur Führung der Transportfahrzeuge zu verzichten, da die Transportfahrzeuge sich frei auf einer Ebene wie dem Hallenboden bewegen können.

Zusätzlich können hierdurch die Fahrzeuge und ihre "Fahrbahnen" individuell an die Gegebenheiten angepasst werden und ermöglichen so eine deutliche Steigerung der Flexibilität in Produktion und Logistik.

Weiterhin verfügt die beispielhafte Transporteinrichtung über eine Vielzahl an Schnittstellen, an diesen verschiedenste Handhabungseinrichtungen wie Palettenwechsler, Roboter, Behälter und Boxen etc. aufgenommen werden können, was dadurch weiterhin die Flexibilität im Produktionsprozess wie auch im Bereich der Logistik steigern kann.

Die beispielhafte Transporteinrichtung kann dadurch vorteilhaft weitergebildet werden, dass die Transporteinrichtung ferner ein fahrerloses Transportfahrzeug ist, mit einer Plattform, die mehrere Aufnahmevorrichtungen zum Aufnehmen von Handhabungseinrichtungen aufweist, einem Antrieb zum Bewegen der Plattform, und einer Steuereinheit zum Steuern der Aufnahmevorrichtungen und des Antriebs der Plattform.

Um den Automatisierungsgrad zu erhöhen, ist die beispielhafte Transporteinrichtung als fahrerloses Transportfahrzeug mit entsprechender Steuerung und Vernetzung ausgebildet, so dass auch mehrere Transportfahrzeuge / Transporteinrichtungen aufeinander abgestimmt bewegt werden können.

Die beispielhafte Transporteinrichtung kann dadurch vorteilhaft weitergebildet werden, dass an zumindest einer Seite der Transporteinrichtung mindestens eine Aufnahmevorrichtung vorgesehen ist, vorzugsweise an mindestens zwei Seiten der Transporteinrichtung mindestens eine Aufnahmevorrichtung vorgesehen ist, und besonders bevorzugt an jeder Seite der Transporteinrichtung mindestens eine Aufnahmevorrichtung vorgesehen ist.

Hierdurch können nun deutlich mehr technische Vorrichtungen und/oder Behälter zu ihrem jeweiligen Bestimmungsort mit nur einer Fahrt gebracht werden, als dies bei bisher bekannten Transportfahrzeugen möglich ist.

Die beispielhafte Transporteinrichtung kann dadurch vorteilhaft weitergebildet werden, dass die Plattform ferner einen internen Energiespeicher aufweist, der die Aufnahmevorrichtungen, den Antrieb und die Steuereinheit der Plattform mit Energie, insbesondere elektrischer Energie versorgt.

Dadurch kann sich die Transporteinrichtung frei durch Werkhallen und Produktions- bzw. Fertigungsbereiche bewegen, ohne dass dafür ein aufwändiges Führungssystem für Kabel zur Energie- und/oder Signalübertragung vorgesehen werden muss.

Die beispielhafte Transporteinrichtung kann dadurch vorteilhaft weitergebildet werden, dass die Steuereinheit ferner eine Sensoreinheit aufweist, die zur Überwachung der Umgebung der Transporteinrichtung optische, Infrarot- und/oder Radarsensoren umfasst.

Zur Überwachung der Umgebung und zur Detektion eventueller Hindernisse ist es vorteilhaft, derartige Sensoren an einem fahrerlosen Transportfahrzeug vorzusehen. Dies erhöht zusätzlich den Schutz der Werksarbeiter in der Halle.

Die beispielhafte Transporteinrichtung kann dadurch vorteilhaft weitergebildet werden, dass die Transporteinrichtung ferner dazu eingerichtet ist, die Handhabungseinrichtung nach der Positionierung an der Werkzeugmaschine abzusetzen.

Diese Möglichkeit ist dahingehend besonders vorteilhaft, da die Transporteinrichtung nicht mit der Handhabungseinrichtung an Ort und Stelle verbleiben muss, sondern weitere Handhabungseinrichtungen transportieren kann, während z.B. die abgesetzte Handhabungseinrichtung ihre Funktion an der jeweiligen Werkzeugmaschine ausführt.

Die beispielhafte Transporteinrichtung kann dadurch vorteilhaft weitergebildet werden, dass die Aufnahmevorrichtungen ferner Anschlusselemente aufweisen, die für eine Übertragung von Steuerungssignalen und/oder Energie von der Transporteinrichtung an die Handhabungseinrichtung eingerichtet sind.

Hierdurch können in vorteilhafter Weise Energie und Signale zur Steuerung der Handhabungseinrichtung von der Transporteinrichtung an die Handhabungseinrichtung übertragen werden. Dies ist insbesondere auch dadurch vorteilhaft, da die Transporteinrichtung mit einer zentralen Leitrechnersteuerung in Kontakt (per Funksignal, WLAN, etc.) stehen kann und hierdurch eine zentrale Steuerung aller Handhabungseinrichtungen, die zu dem Zeitpunkt von Transporteinrichtungen bewegt werden, stattfinden kann.

Die beispielhafte Transporteinrichtung kann dadurch vorteilhaft weitergebildet werden, dass die Anschlusselemente der Aufnahmevorrichtungen der Transporteinrichtung bei der Aufnahme der Handhabungseinrichtung eine Verbindung mit der Handhabungseinrichtung zur Übertragung von Steuerungssignalen und/oder Energie automatisch herstellen.

Hierdurch entfällt das händische Eingreifen eines Werkarbeiters und der Automatisierungsgrad der Produktions- und Logistikabläufe kann weiter gesteigert werden.

Die beispielhafte Transporteinrichtung kann dadurch vorteilhaft weitergebildet werden, dass die Aufnahmevorrichtungen jeweils eine Kontrollvorrichtung zum Überwachen des Zustands der Aufnahme der jeweiligen Handhabungseinrichtung aufweisen.

Die beispielhafte Transporteinrichtung kann dadurch vorteilhaft weitergebildet werden, dass die Kontrollvorrichtung dazu eingerichtet ist, die Steuerungssignale, die Energieübertragung, und/oder einen Arretierzustand der an der jeweiligen Aufnahmevorrichtung aufgenommenen Handhabungseinrichtung zu überwachen.

Dies ist insbesondere dahingehend von Vorteil, um eventuell auftretende Fehlfunktionen der Handhabungseinrichtungen zu vermeiden und um die Sicherheit der Handhabungseinrichtung an der Transporteinrichtung wie auch die Sicherheit der Werkarbeiter in unmittelbarer Nähe der Handhabungseinrichtung zu gewährleisten.

Zudem können hierdurch fehlerhafte Aufnahmen bzw. fehlerhafte Bestandteile (beschädigte Kontakte der Verbindungen für Energie- und/oder Signalübertragung etc.) schneller lokalisiert werden und entsprechend schneller ausgetauscht / repariert werden.

Die beispielhafte Transporteinrichtung kann dadurch vorteilhaft weitergebildet werden, dass der Antrieb eine Vielzahl an Rädern zum Bewegen der Plattform aufweist, wobei die Räder einzeln ansteuer- und/oder anlenkbar sind.

Insbesondere ist es vorteilhaft, wenn die Räder als einzelne Einheiten separat zueinander angesteuert bzw. angelenkt werden können, wodurch die Beweglichkeit und Manövrierfähigkeit der Transporteinrichtung im Vergleich mit Fahrzeugen mit nur einer lenkbaren Achse deutlich verbessert werden kann.

Die beispielhafte Transporteinrichtung kann dadurch vorteilhaft weitergebildet werden, dass die Räder als einzeln ansteuerbare Mecanum-Räder ausgebildet sind.

Der große Vorteil bei Mecanum-Rädern besteht darin, dass auf eine Lenkung der Räder gänzlich verzichtet werden kann und allein durch die Rotationsrichtung der einzelnen Räder die Fahrrichtung bzw. auch die Rotationsrichtung der Transporteinrichtung gesteuert werden kann. Voraussetzung für die Funktion bei Mecanum-Räder ist dabei aber, dass stets jedes Rad ausreichend Kontakt zum Boden hat.

Die beispielhafte Transporteinrichtung kann dadurch vorteilhaft weitergebildet werden, dass der Antrieb eine Vielzahl an Ketten zum Bewegen der Plattform aufweist.

Neben den klassischen Rädern und Mecanum-Rädern können aber auch Ketten zum Bewegen der Transporteinrichtung verwendet werden. Vorteilhaft kann dies sein, wenn die Transporteinrichtung große Lasten tragen muss und sich diese Lasten möglichst großflächig auf dem Boden, auf dem die Transporteinrichtung fährt, verteilen müssen / sollten.

Die beispielhafte Transporteinrichtung kann dadurch vorteilhaft weitergebildet werden, dass die Handhabungseinrichtung ein Palettenwechsler zum Ein- und Auswechseln der Palette in der Werkzeugmaschine ist, und der Palettenwechsler für das Ein- und Auswechseln der Palette im Arbeitsraum und/oder auf einem Rüstplatz der Werkzeugmaschine eingerichtet ist.

Insbesondere ist es von Vorteil, wenn die Handhabungseinrichtung, die durch die Transporteinrichtung transportiert werden kann, ein Palettenwechsler ist. Hierdurch können verschiedene Paletten mit nur einem Palettenwechsler und einer Transporteinrichtung zu den einzelnen Werkzeugmaschinen transportiert und eingelegt bzw. ausgetauscht werden.

Die beispielhafte Transporteinrichtung kann dadurch vorteilhaft weitergebildet werden, dass der Palettenwechsler zur Aufnahme der Palette eine Aufnahmeklaue oder eine gabelförmige Aufnahme aufweist.

Die beispielhafte Transporteinrichtung kann dadurch vorteilhaft weitergebildet werden, dass die Handhabungseinrichtung ein Industrieroboter zur Handhabung und/oder Bearbeitung des Werkstücks ist.

Es kann aber auch überaus vorteilhaft sein, neben oder statt dem Palettenwechsler einen Roboter (Industrieroboter) durch die Transporteinrichtung aufzunehmen und an Werkzeugmaschinen bzw. Bearbeitungsplätze zu transportieren, an denen ein Roboter gebraucht wird. Dies kann zum Beispiel bei Aufgaben des Werkstückhandlings sein (z.B. Bestückung des Maschinentisches/Palette oder der Arbeitsspindel mit Werkstücken, Ein- und Auswechseln von Werkzeugen aus einer Arbeitsspindel oder einem Werkzeugrevolver, Nacharbeiten von Werkstücken wie der Gratentfernung etc.). Die Anwendungsgebiete eines Roboters sind im Bereich der spanenden Bearbeitung mannigfaltig.

Die beispielhafte Transporteinrichtung kann dadurch vorteilhaft weitergebildet werden, dass die Aufnahmevorrichtungen der Transporteinrichtung ferner zur Aufnahme von Materialträgern, insbesondere Gitterboxen mit Rohteilen und/oder Fertigteilen, und zur Aufnahme eines Wechselgreifers eingerichtet sind.

Die beispielhafte Transporteinrichtung kann dadurch vorteilhaft weitergebildet werden, dass die Aufnahmevorrichtungen der Transporteinrichtung einheitlich ausgebildet sind.

Insbesondere ist es von Vorteil, wenn die Aufnahmevorrichtungen, durch die die Handhabungseinrichtungen wie Palettenwechsler, Roboter, Materialpaletten, Gitterboxen etc. von der Transporteinrichtung aufgenommen werden können, einheitlich, also standardisiert sind. Hierdurch können alle erdenklichen Handhabungseinrichtungen mit einer und dergleichen Schnittstelle versehen werden, so dass auch, egal welche Handhabungseinrichtung aufgenommen werden soll, die Herstellung der Verbindung für Energie- und/oder Signalübertragung automatisiert erfolgen kann.

Eine beispielhafte Werkzeugmaschine zur spanenden Bearbeitung eines Werkstücks, weist auf: eine Arbeitsspindel zum Aufnehmen eines Werkzeugs oder des Werkstücks, eine Palette zum Aufnehmen des Werkzeugs oder des Werkstücks, und eine Handhabungseinrichtung zur Handhabung der Palette und/oder des Werkstücks, wobei die Handhabungseinrichtung durch eine beispielhafte Transporteinrichtung an der Werkzeugmaschine positionierbar ist.

Hierdurch bietet sich eine Reihe von Vorteilen, da die Transporteinrichtung jede beliebige Handhabungseinrichtung zu der Werkzeugmaschine bringen kann, welche für die jeweilig anstehenden Bearbeitungsschritte erforderlich oder gar notwendig ist. Dabei kann die Werkzeugmaschine, insbesondere die Bestückung mit Werkstücken und/oder Werkzeugen, einen höheren Automatisierungsgrad erreichen und Zeiten, in denen die Werkzeugmaschinen autonom arbeiten, verlängert werden.

Die beispielhafte Werkzeugmaschine kann dadurch vorteilhaft weitergebildet werden, dass die Werkzeugmaschine ferner Positioniereinrichtungen zur Lagepositionierung der Handhabungseinrichtung relativ zur Werkzeugmaschine aufweisen, für den Fall, dass die Handhabungseinrichtung durch die Transporteinrichtung an der Werkzeugmaschine abgesetzt wird.

Eine exakte Positionierung der Handhabungseinrichtung kann zum einen nicht nur vorteilhaft, sondern auch erforderlich sein. Zum Beispiel wenn Paletten sehr präzise auf eine Palettenaufnahme gesetzt werden müssen oder zum Beispiel Bestückungsarbeiten oder Nachbearbeitungen eines Werkstücks mit einem Roboter bei kleinen Toleranzen erfolgen müssen.

Die beispielhafte Werkzeugmaschine kann dadurch vorteilhaft weitergebildet werden, dass die Positioniereinrichtungen Anschlusselemente aufweisen, die für eine Übertragung von Steuerungssignalen und/oder Energie von der Werkzeugmaschine an die abgesetzte Handhabungseinrichtung eingerichtet sind.

Hierdurch können in vorteilhafter Weise Energie und Signale zur Steuerung der Handhabungseinrichtung von der Werkzeugmaschine an die Handhabungseinrichtung übertragen werden und so unabhängig von der Übertragung der Energie bzw. der Signale seitens der Transporteinrichtung sein.

Die beispielhafte Werkzeugmaschine kann dadurch vorteilhaft weitergebildet werden, dass die Anschlusselemente der Positioniereinrichtungen der Werkzeugmaschine bei Absetzen der Handhabungseinrichtung durch die Transporteinrichtung eine Verbindung mit der Handhabungseinrichtung zur Übertragung von Steuerungssignalen und/oder Energie automatisch herstellen.

Hierdurch kann vorteilhafterweise der Automatisierungsgrad weiter erhöht werden und ein händischen Eingreifen eines Werkarbeiters kann entfallen.

Ein beispielhaftes Verfahren zur Handhabung einer Palette und/oder eines Werkstücks an der beispielhaften Werkzeugmaschine, weist die folgenden Schritte auf: Aufnehmen einer Handhabungseinrichtung zur Handhabungder Palette und/oder des Werkstücks mittels der beispielhaften Transporteinrichtungvon einem Ablageplatz, Transportieren der Handhabungseinrichtung durch die Transporteinrichtung vom Ablageplatz zur Werkzeugmaschine, Positionieren der Handhabungseinrichtung durch die Transporteinrichtung an der Werkzeugmaschine, insbesondere vor einem Arbeitsraum der Werkzeugmaschine, und Handhaben der Palette und/oder des Werkstücks durch die Handhabungseinrichtung an der Werkzeugmaschine.

Das beispielhafte Verfahren kann dadurch vorteilhaft weitergebildet werden, dass während des Schrittes Aufnehmen der Handhabungseinrichtung eine Verbindung zwischen Transporteinrichtung und Handhabungseinrichtung mittels Anschlusselemente der Transporteinrichtung hergestellt wird, über die Steuerungssignale und/oder Energie von der Transporteinrichtung zur Handhabungseinrichtung übertragen werden.

Das beispielhafte Verfahren kann dadurch vorteilhaft weitergebildet werden, dass vor dem Schritt Handhaben der Palette und/oder des Werkstücks folgende Schritte durchgeführt werden: Absetzen der Handhabungseinrichtung vor dem Arbeitsraum der Werkzeugmaschine durch die Transporteinrichtung, und Positionieren der Handhabungseinrichtung durch Positioniereinrichtungen der Werkzeugmaschine.

Das beispielhafte Verfahren kann dadurch vorteilhaft weitergebildet werden, dass beim Absetzen der Handhabungseinrichtung die Positioniereinrichtungen der Werkzeugmaschine eine Verbindung zwischen Werkzeugmaschine und Handhabungseinrichtung mittels Anschlusselemente der Werkzeugmaschine hergestellt wird, über die Steuerungssignale und/oder Energie von der Werkzeugmaschine zur Handhabungseinrichtung übertragen werden.

Das beispielhafte Verfahren kann dadurch vorteilhaft weitergebildet werden, dass vor dem Schritt Handhaben der Palette und/oder des Werkstücks folgende Schritte durchgeführt werden: Trennen der Verbindung zur Übertragung von Steuerungssignalen und/oder Energie von der Transporteinrichtung zur Handhabungseinrichtung, und Weiterfahren der Transporteinrichtung von der Werkzeugmaschine zu dem Ablageplatz oder einer weiteren Werkzeugmaschine.

Das beispielhafte Verfahren kann dadurch vorteilhaft weitergebildet werden, dass nach dem Schritt Handhaben der Palette und/oder des Werkstücks folgende Schritte durchgeführt werden: Aufnehmen der Handhabungseinrichtung von den Positioniereinrichtungen der Werkzeugmaschine durch die Transporteinrichtung, wobei während des Aufnehmens der Handhabungseinrichtung die Verbindung zur Übertragungvon Steuerungssignalen und/oder Energie von der Werkzeugmaschine zur Handhabungseinrichtung getrennt wird, und Weiterfahren der Transporteinrichtung mit wiederaufgenommener Handhabungseinrichtung von der Werkzeugmaschine zu dem Ablageplatz oder einer weiteren Werkzeugmaschine.

Das beispielhafte Verfahren kann dadurch vorteilhaft weitergebildet werden, dass zur Steuerung der einzelnen Schritte eine zentrale Rechnereinheit mit der Steuereinheit der Transporteinrichtung in Verbindung steht, wobei die zentrale Rechnereinheit dazu eingerichtet ist, mit mehreren Transporteinrichtungen gleichzeitig in Verbindung zu stehen und zu steuern.

Durch den Einsatz der beispielhaften Transporteinrichtung konnte die Flexibilität in den Produktionsabläufen erheblich verbessert werden sowie schnell auf Veränderungen in der Produktion reagiert werden.

Gemäß einer bevorzugten Ausführungsform der Werkzeugmaschine umfasst diese zumindest ein auf einer Grundfläche frei verfahrbarer erster Werkzeugmaschinenaufbau mit zumindest einem Werkzeugmaschinenbauteil, und zumindest ein zweiter Werkzeugmaschinenaufbau mit zumindest einem weiteren Werkzeugmaschinenbauteil, wobei der zumindest eine frei verfahrbare erste Werkzeugmaschinenaufbau zusammen mit dem zumindest einen zweiten Werkzeugmaschinenaufbau die zur Bearbeitung des Werkstücks eingerichtete Werkzeugmaschine ausbildet, wenn der zumindest eine frei verfahrbare erste Werkzeugmaschinenaufbau an dem zumindest einen zweiten Werkzeugmaschinenaufbau positioniert ist.

Gemäß einer weiteren bevorzugten Ausführungsform, weist der zumindest eine zweite Werkzeugmaschinenaufbau zumindest einen auf der Grundfläche aufstellbaren, stationären Werkzeugmaschinenaufbau auf.

Gemäß einer weiteren bevorzugten Ausführungsform, bildet der zumindest eine auf der Grundfläche aufstellbare, stationäre Werkzeugmaschinenaufbau und der zumindest eine frei verfahrbare erste Werkzeugmaschinenaufbau zusammen die zur Bearbeitung des Werkstücks eingerichtete Werkzeugmaschine aus, wenn der zumindest eine frei verfahrbare erste Werkzeugmaschinenaufbau an dem zumindest einen stationären Werkzeugmaschinenaufbau positioniert ist.

Gemäß einer weiteren bevorzugten Ausführungsform, weist der zumindest eine zweite Werkzeugmaschinenaufbau zumindest einen weiteren auf der Grundfläche frei verfahrbaren Werkzeugmaschinenaufbau mit zumindest einem Werkzeugmaschinenbauteil auf.

Gemäß einer weiteren bevorzugten Ausführungsform, bildet der zumindest eine weitere frei verfahrbare Werkzeugmaschinenaufbau und der zumindest eine frei verfahrbare erste Werkzeugmaschinenaufbau zusammen die zur Bearbeitung des Werkstücks eingerichtete Werkzeugmaschine aus, wenn der zumindest eine frei verfahrbare erste Werkzeugmaschinenaufbau an dem zumindest einen weiteren frei verfahrbaren Werkzeugmaschinenaufbau positioniert ist und/oder der zumindest eine weitere frei verfahrbare Werkzeugmaschinenaufbau an dem zumindest einen frei verfahrbaren ersten Werkzeugmaschinenaufbau positioniert ist.

Gemäß einer weiteren bevorzugten Ausführungsform, weist der zumindest eine zweite Werkzeugmaschinenaufbau eine werkzeugtragende Arbeitsspindel auf, und/oder der zumindest eine auf der Grundfläche frei verfahrbare erste Werkzeugmaschinenaufbau eine Werkstückspanneinrichtung aufweist, wobei die Werkzeugmaschine insbesondere zur bohrenden und/oder fräsenden Werkstückbearbeitung eingerichtet ist; und/oder der zumindest eine auf der Grundfläche frei verfahrbare erste Werkzeugmaschinenaufbau eine werkzeugtragende Arbeitsspindel aufweist, und/oder der zumindest eine zweite Werkzeugmaschinenaufbau eine Werkstückspanneinrichtung aufweist, wobei die Werkzeugmaschine insbesondere zur bohrenden und/oder fräsenden Werkstückbearbeitung eingerichtet ist.

Gemäß einer weiteren bevorzugten Ausführungsform, weist der zumindest eine zweite Werkzeugmaschinenaufbau eine werkstücktragende Arbeitsspindel auf, und/oder der zumindest eine auf der Grundfläche frei verfahrbare erste Werkzeugmaschinenaufbau eine Werkzeugspanneinrichtung, insbesondere einen Werkzeugrevolver, einen der werkstücktragenden Arbeitsspindel des zumindest einen zweiten Werkzeugmaschinenaufbaus zugeordneten Reitstock, und/oder eine weitere werkstücktragende Arbeitsspindel als Gegenspindel zur werkstücktragenden Arbeitsspindel des zumindest einen zweiten Werkzeugmaschinenaufbaus aufweist, wobei die Werkzeugmaschine insbesondere zur drehenden Werkstückbearbeitung eingerichtet ist; und/oder
der zumindest eine auf der Grundfläche frei verfahrbare erste Werkzeugmaschinenaufbau eine werkstücktragende Arbeitsspindel aufweist, und/oder der zumindest eine zweite Werkzeugmaschinenaufbau eine Werkzeugspanneinrichtung, insbesondere einen Werkzeugrevolver, einen der werkstücktragenden Arbeitsspindel des zumindest einen frei verfahrbaren ersten Werkzeugmaschinenaufbaus zugeordneten Reitstock, und/oder eine weitere werkstücktragende Arbeitsspindel als Gegenspindel zur werkstücktragenden Arbeitsspindel des zumindest einen frei verfahrbaren ersten Werkzeugmaschinenaufbaus aufweist, wobei die Werkzeugmaschine insbesondere zur drehenden Werkstückbearbeitung eingerichtet ist.

Gemäß einer weiteren bevorzugten Ausführungsform, ist die Werkzeugmaschine zur materialauftragenden Werkstückbearbeitung eingerichtet, wobei:
der zumindest eine zweite Werkzeugmaschinenaufbau eine Material auftragende Bearbeitungseinheit aufweist, und der zumindest eine auf der Grundfläche frei verfahrbare erste Werkzeugmaschinenaufbau eine Werkstückspanneinrichtung aufweist; und/oder
der zumindest eine auf der Grundfläche frei verfahrbare erste Werkzeugmaschinenaufbau eine Material auftragende Bearbeitungseinheit aufweist, und der zumindest eine zweite Werkzeugmaschinenaufbau eine Werkstückspanneinrichtung aufweist.

Gemäß einer weiteren bevorzugten Ausführungsform, weist der zumindest eine zweite Werkzeugmaschinenaufbau ein Maschinengestell auf, an dem ein oder mehrere Werkzeugmaschinenbauteile angeordnet sind.

Gemäß einer weiteren bevorzugten Ausführungsform, weist der zumindest eine zweite Werkzeugmaschinenaufbau ein oder mehrere an dem Maschinengestell verfahrbare Werkzeugmaschinenschlitten auf.

Gemäß einer weiteren bevorzugten Ausführungsform, trägt zumindest einer der einen oder mehreren Werkzeugmaschinenschlitten eine Arbeitsspindel oder einen eine Arbeitsspindel tragenden Spindelkopf oder Spindelschwenkkopf.

Gemäß einer weiteren bevorzugten Ausführungsform, gestaltet das Maschinengestell in Portalbauweise, in Fahrständerbauweise oder in Konsolbauweise aus ist.

Gemäß einer weiteren bevorzugten Ausführungsform, trägt zumindest einer der einen oder mehreren Werkzeugmaschinenschlitten eine Horizontalbearbeitungs-Arbeitsspindel und/oder eine Vertikalbearbeitungs-Arbeitsspindel.

Gemäß einer weiteren bevorzugten Ausführungsform, bildet eine oder mehrere Arbeitsspindeln zumindest eines der einen oder mehreren Werkzeugmaschinenschlitten aus, welche um eine oder mehrere Rotationsachsen schwenkbar bzw. drehbar sind.

Gemäß einer weiteren bevorzugten Ausführungsform, weist der zumindest eine frei verfahrbare erste Werkzeugmaschinenaufbau und/oder der zumindest eine zweite Werkzeugmaschinenaufbau einen eine Arbeitsspindel tragenden Fräsroboter auf.

Gemäß einer weiteren bevorzugten Ausführungsform, weist der zumindest eine frei verfahrbare erste Werkzeugmaschinenaufbau einen Werkstückspanntisch auf, der insbesondere als Drehtisch, Rundtisch und/oder Schwenk-/Rundtisch ausgebildet ist.

Gemäß einer weiteren bevorzugten Ausführungsform, weist der zumindest eine frei verfahrbare erste Werkzeugmaschinenaufbau einen Industrieroboter zum Werkstück- und/oder Werkzeughandling auf.

Gemäß einer weiteren bevorzugten Ausführungsform, umfasst der zumindest eine frei verfahrbare erste Werkzeugmaschinenaufbau ein fahrerloses Transportfahrzeug.

Gemäß einer weiteren bevorzugten Ausführungsform umfasst die Werkzeugmaschine- einen Antrieb zum Verfahren des Transportfahrzeugs, und- eine Steuereinheit zum Steuern des Transportfahrzeugs.

Gemäß einer weiteren bevorzugten Ausführungsform, weist der zumindest eine frei verfahrbare erste Werkzeugmaschinenaufbau einen internen Energiespeicher auf, der den zumindest einen frei verfahrbaren ersten Werkzeugmaschinenaufbau mit Energie, insbesondere elektrischer Energie versorgt, und/oder eine Sensoreinheit, die zur Überwachung der Umgebung des frei verfahrbaren ersten Werkzeugmaschinenaufbaus einen oder mehrere optische, Infrarot- und/oder Radarsensoren umfasst, aufweist.

Gemäß einer weiteren bevorzugten Ausführungsform, weist der zumindest eine frei verfahrbare erste Werkzeugmaschinenaufbau eine oder mehrere Antriebsketten und/oder eine Mehrzahl von Rädern zum Bewegen bzw. Verfahren des frei verfahrbaren ersten Werkzeugmaschinenaufbaus auf, wobei eines, mehrere oder alle Räder einzeln ansteuer- und/oder lenkbar sind, wobei insbesondere eines, mehrere oder alle Räder der Transporteinrichtung als einzeln ansteuerbare Mecanum-Räder ausgebildet sind.

Gemäß einer weiteren bevorzugten Ausführungsform, ist der zumindest eine frei verfahrbare erste Werkzeugmaschinenaufbau dazu eingerichtet, mit einer externen Steuereinrichtung zu kommunizieren, insbesondere mit einer zentralen Steuereinrichtung, die dazu eingerichtet ist, mit mehreren frei verfahrbaren Werkzeugmaschinenaufbauten gleichzeitig in Verbindung zu stehen, insbesondere mittels einer drahtlosen Kommunikationsverbindung, und die mehreren frei verfahrbaren Werkzeugmaschinenaufbauten zu steuern, insbesondere per automatischer Fernsteuerung.

Gemäß einer weiteren bevorzugten Ausführungsform, ist der zumindest eine frei verfahrbare erste Werkzeugmaschinenaufbau dazu eingerichtet, über eine Kommunikationsschnittstelle mit einer Steuereinrichtung der Werkzeugmaschine zu kommunizieren, wobei die Steuereinrichtung der Werkzeugmaschine an dem zumindest einen zweiten Werkzeugmaschinenaufbau angeordnet ist.

Gemäß einer weiteren bevorzugten Ausführungsform, weist die Kommunikationsschnittstelle eine drahtlose Kommunikationsschnittstelle auf und der zumindest eine frei verfahrbare erste Werkzeugmaschinenaufbau ist dazu eingerichtet, über die drahtlose Kommunikationsschnittstelle mit der Steuereinrichtung der Werkzeugmaschine per drahtloser Kommunikationsverbindung zu kommunizieren.

Gemäß einer weiteren bevorzugten Ausführungsform, weist der zumindest eine frei verfahrbare erste Werkzeugmaschinenaufbau eine Andockeinrichtung auf und ist dazu eingerichtet, mittels der Andockeinrichtung an einer auf der Grundfläche installierten Andockstation der Werkzeugmaschine oder an einer Andockstation des zumindest einen zweiten Werkzeugmaschinenaufbaus zum Ausbilden der Werkzeugmaschine zusammen mit dem zweiten Werkzeugmaschinenaufbau anzudocken.

Gemäß einer weiteren bevorzugten Ausführungsform, bildet der zumindest eine frei verfahrbare erste Werkzeugmaschinenaufbau zusammen mit dem zumindest einen zweiten Werkzeugmaschinenaufbau die zur Bearbeitung des Werkstücks eingerichtete Werkzeugmaschine aus, wenn der zumindest eine frei verfahrbare erste Werkzeugmaschinenaufbau an der Andockstation der Werkzeugmaschine bzw. der Andockstation des zumindest einen zweiten Werkzeugmaschinenaufbaus angedockt ist.

Gemäß einer weiteren bevorzugten Ausführungsform, ist der zumindest eine frei verfahrbare erste Werkzeugmaschinenaufbau weiterhin dazu eingerichtet, mittels der Andockeinrichtung an einer auf der Grundfläche installierten Andockstation einer weiteren Werkzeugmaschine oder an einer Andockstation zumindest eines dritten Werkzeugmaschinenaufbaus zum Ausbilden einer weiteren Werkzeugmaschine zusammen mit dem dritten Werkzeugmaschinenaufbau anzudocken.

Gemäß einer weiteren bevorzugten Ausführungsform, ist der zumindest eine frei verfahrbare erste Werkzeugmaschinenaufbau weiterhin dazu eingerichtet, zusammen mit dem zumindest einen dritten Werkzeugmaschinenaufbau eine weitere zur Bearbeitung des Werkstücks eingerichtete Werkzeugmaschine auszubilden, wenn der zumindest eine frei verfahrbare erste Werkzeugmaschinenaufbau an der Andockstation der weiteren Werkzeugmaschine bzw. der Andockstation des zumindest einen dritten Werkzeugmaschinenaufbaus angedockt ist.

Weiterhin wird ein System bereitgestellt, dass eine oder mehrere Werkzeugmaschinen gemäß einer der vorstehenden Ausführungsformen umfasst.

Gemäß einer bevorzugten Ausführungsform des Systems, umfasst das System zumindest einen dritten Werkzeugmaschinenaufbau mit zumindest einem weiteren Werkzeugmaschinenbauteil, wobei der dritte Werkzeugmaschinenaufbau beabstandet von dem zumindest einen zweiten Werkzeugmaschinenaufbau positionierbar ist, und wobei der zumindest eine frei verfahrbare erste Werkzeugmaschinenaufbau zusammen mit dem zumindest einen dritten Werkzeugmaschinenaufbau eine weitere zur Bearbeitung des Werkstücks eingerichtete Werkzeugmaschine ausbildet, wenn der zumindest eine frei verfahrbare erste Werkzeugmaschinenaufbau an dem zumindest einen dritten Werkzeugmaschinenaufbau positioniert ist.

Gemäß einer bevorzugten Ausführungsform des Systems, umfasst das System zumindest einen weiteren frei verfahrbaren Werkzeugmaschinenaufbau mit zumindest einem weiteren Werkzeugmaschinenbauteil, wobei der zumindest eine weitere frei verfahrbare Werkzeugmaschinenaufbau zusammen mit dem zumindest einen zweiten Werkzeugmaschinenaufbau eine weitere zur Bearbeitung des Werkstücks eingerichtete Werkzeugmaschine ausbildet, wenn der zumindest eine weitere frei verfahrbare Werkzeugmaschinenaufbau an dem zumindest einen zweiten Werkzeugmaschinenaufbau positioniert ist.

Weitere Aspekte und deren Vorteile als auch Vorteile und speziellere Ausführungsmöglichkeiten der vorstehend beschriebenen Aspekte und Merkmale werden aus den folgenden, jedoch in keinster Weise einschränkend aufzufassenden Beschreibungen und Erläuterungen zu den angehängten Figuren beschrieben.

### KURZBESCHREIBUNG DER FIGUREN

- Fig. 1: zeigt schematisch eine Ausführungsform der erfindungsgemäßen Transporteinrichtung mit Aufnahmevorrichtungen zum Aufnehmen von Handhabungseinrichtungen
- Fig. 2a: zeigt schematisch eine Detailansicht einer Aufnahmevorrichtung zum Aufnehmen von Handhabungseinrichtungen
- Fig. 2b: zeigt schematisch eine weitere Ausführungsform der Aufnahmevorrichtung der Transporteinrichtung zum Aufnehmen einer Handhabungseinrichtung
- Fig. 2c: zeigt schematisch eine weitere Ausführungsform der Aufnahmevorrichtung, diesmal ohne den Antrieb
- Fig. 2d: zeigt schematisch einen Stecker, der Medien, Energie und Signale von der Aufnahmevorrichtung auf die aufgenommene Einrichtung übertragen kann
- Fig. 3: zeigt schematisch eine Ausführungsform der erfindungsgemäßen Transporteinrichtung, beispielhaft mit einem Palettenwechsler und einer Palette
- Fig. 4a: zeigt schematisch eine Ausführungsform der erfindungsgemäßen Transporteinrichtung bei einem Palettenwechsel, wobei die Transporteinrichtung eine Drehung vollzieht
- Fig. 4b: zeigt schematisch die erfindungsgemäße Transporteinrichtung mit einer Ausführungsform eines gabelförmigen Palettenwechslers
- Fig. 5: zeigt schematisch eine Ausführungsform der erfindungsgemäßen Transporteinrichtung bei einem Palettenwechsel, wobei die Transporteinrichtung in ihrer Position verbleibt und der Palettenwechsler, wie in Fig. 3 gezeigt ein H-förmiger Palettenwechsler, sich dreht
- Fig. 6: zeigt schematisch eine Ausführungsform der erfindungsgemäßen Transporteinrichtung bei einem Palettenwechsel, wobei der Palettenwechsler als Doppel-H ausgebildet ist und sich, wie gezeigt, drehen kann
- Fig. 7: zeigt schematisch eine Ausführungsform der erfindungsgemäßen Transporteinrichtung bei einem Palettenwechsel, wobei der Palettenwechsler die Paletten in einer 60°-Verteilung aufnehmen kann
- Fig. 8: zeigt schematisch eine Ausführungsform der erfindungsgemäßen Transporteinrichtung mit einem verschiebbaren Palettenwechsler
- Fig. 9a: zeigt schematisch eine Ausführungsform der erfindungsgemäßen Transporteinrichtung mit einem Palettenwechsler, welcher über eine verstellbare Gabelbreite verfügt
- Fig. 9b: zeigt schematisch eine Ausführungsform der erfindungsgemäßen Transporteinrichtung mit einem Palettenwechsler, welcher über eine verstellbare Gabellänge verfügt
- Fig. 10: zeigt schematisch eine Ausführungsform der erfindungsgemäßen Transporteinrichtung mit einem Palettenwechsler für eine mehrstöckige Palettenablage
- Fig. 11: zeigt schematisch eine weitere Ausführungsform der erfindungsgemäßen Transporteinrichtung mit einem Palettenwechsler für eine mehrstöckige Palettenablage
- Fig. 12a: zeigt schematisch die erfindungsgemäße Transporteinrichtung bei der Beladung eines Rundspeichers einer Werkzeugmaschine mit Paletten
- Fig. 12b: zeigt schematisch eine erfindungsgemäße Transporteinrichtung beim Beladen eines Zwischenspeichers, an dem Paletten bzw. Palettenhalter durch Andocken an einer Aufnahme des Zwischenspeichers für eine Zuführeinrichtung bereitgestellt werden können
- Fig. 12c: zeigt schematisch eine erfindungsgemäße Transporteinrichtung beim Beladen eines Palettenwechslers
- Fig. 13: zeigt schematisch eine beispielhafte Ausgestaltung eines Linearspeichers für Paletten-Handling mit mehreren Rüstplätzen und Ablageplätzen und mehreren Werkzeugmaschinen
- Fig. 14a: zeigtschematisch eine Positionierungeines Palettenwechslers an einem Ablageplatz mittels konischer Aufnahmen
- Fig. 14b: zeigt schematisch eine Positionierung eines Palettenwechslers bei einem Ablageplatz mit Rollentechnik
- Fig. 15: zeigt schematisch eine Positionierung der erfindungsgemäßen Transporteinrichtung an einer Werkzeugmaschine mittels eines Prismas
- Fig. 16a: zeigt schematisch eine Positionierung der erfindungsgemäßen Transporteinrichtung an einer Werkzeugmaschine mittels konischer Aufnahmen
- Fig. 16b: zeigt schematisch eine weitere Ausführungsform der erfindungsgemäßen Transporteinrichtung bei einer Positionierung und Energie- und/oder Signalverbindungsschluss mittels konischer Aufnahmen
- Fig. 16c: zeigt schematisch eine erfindungsgemäße Transporteinrichtung, bei der ein Palettenhalter mit einer Palette mittels der Transporteinrichtung an eine Palettenhalteraufnahme andockt
- Fig. 16d: zeigt schematisch eine weitere Ausführungsform der erfindungsgemäßen Transporteinrichtung mit einem Palettenhalter
- Fig. 16e: zeigt schematisch eine weitere Ausführungsform der erfindungsgemäßen Transporteinrichtung mit einem Palettenhalter
- Fig. 16f: zeigt schematisch eine weitere Ausführungsform der erfindungsgemäßen Transporteinrichtung mit einem Palettenhalter, ähnlich wie dies bereits aus Fig. 16e bekannt ist
- Fig. 16g: zeigt nun den Zustand der erfindungsgemäßen Transporteinrichtung aus Fig. 16f, wenn lediglich die Palette von der Aufnahme aufgenommen wurde
- Fig. 16h: zeigt nun den Zustand der erfindungsgemäßen Transporteinrichtung aus Fig. 16f, wenn der Palettenhalter samt Palette von der Aufnahme aufgenommen wurde
- Fig. 16i: zeigt eine Konfiguration einer Aufnahme einer Werkzeugmaschine zur Aufnahme eines Palettenhalters und/oder Palette
- Fig. 16j: zeigt die Konfiguration der Aufnahme einer Werkzeugmaschine wie in Fig. 16i, jedoch aus einer anderen Perspektive zur besseren Übersicht der einzelnen Komponenten der Aufnahme
- Fig. 17a: zeigt schematisch eine Ausführungsform der erfindungsgemäßen Transporteinrichtung mit einer Höhenverstellung der erfindungsgemäßen Transporteinrichtung mittels Hubzylindern
- Fig. 17b: zeigt schematisch eine weitere Ausführungsform der erfindungsgemäßen Transporteinrichtung mit einer Höhenverstellung der erfindungsgemäßen Transporteinrichtung mittels Hubzylindern und einem Fahrwerk
- Fig. 18a: zeigt schematisch eine Ausführungsform der erfindungsgemäßen Transporteinrichtung mit einem Palettenhalter und einer Palette
- Fig. 18b: zeigt schematisch eine weitere Ausführungsform der erfindungsgemäßen Transporteinrichtung mit einem Palettenhalter und einer Palette
- Fig. 19: zeigt schematisch eine Ausführungsform der erfindungsgemäßen Transporteinrichtung mit einer Höhenverstellung der Aufnahmevorrichtung zur Aufnahme von Handhabungseinrichtungen der erfindungsgemäßen Transporteinrichtung
- Fig. 20a: zeigt schematisch eine weitere Ausführungsform der erfindungsgemäßen Transporteinrichtung mit einem Palettenwechsler und einer Haube zum Schutz der transportierten Palette
- Fig. 20b: zeigt schematisch eine weitere Ausführungsform der erfindungsgemäßen Transporteinrichtung, die eine Palette in einen Arbeitsraum einer Werkzeugmaschine transportiert
- Fig. 20c: zeigt schematisch eine weitere Ausführungsform der erfindungsgemäßen Transporteinrichtung, die eine Palette in einen Arbeitsraum einer Werkzeugmaschine transportiert
- Fig. 21a: zeigt schematisch einen Hallenboden/Platte mit rasterförmig angeordneten Konen zur Positionierung der Transporteinrichtungen bzw. Handhabungseinrichtungen
- Fig. 21b: zeigt eine weitere Möglichkeit, die Konen an der Unterseite der Transporteinrichtung für die Positionierung vorzusehen
- Fig. 22a: zeigt schematisch eine weitere Ausführungsform der erfindungsgemäßen Transporteinrichtung mit einem Industrieroboter als Handhabungseinrichtung
- Fig. 22b: zeigt schematisch zwei konkretere Ausführungsbeispiele der erfindungsgemäßen Transporteinrichtung mit aufgenommenen Roboter für Werkzeug- bzw. Werkstück-Handling
- Fig. 23: zeigt schematisch eine weitere Ausführungsform der erfindungsgemäßen Transporteinrichtung mit einem Industrieroboter und einer Vermessungseinheit zur Werkzeugprüfung
- Fig. 24a: zeigt schematisch eine weitere Ausführungsform der erfindungsgemäßen Transporteinrichtung mit einem Industrieroboter und Mess- und Prüfmitteln zur Bauteilprüfung
- Fig. 24b: zeigt Detailansicht der Ausführungsform der erfindungsgemäßen Transporteinrichtung nach Fig. 24a
- Fig. 25: zeigt schematisch eine weitere Ausführungsform der erfindungsgemäßen Transporteinrichtung mit einem Industrieroboter und einem Aufsatz zur Nachbearbeitung von Bauteilen
- Fig. 26: zeigt schematisch eine weitere Ausführungsform der erfindungsgemäßen Transporteinrichtung mit einem Industrieroboter und einer Einheit zum Schärfen und Abrichten von Werkzeugen
- Fig. 27: zeigt schematisch eine weitere Ausführungsform der erfindungsgemäßen Transporteinrichtung mit einem Industrieroboter und einem Magazin zur Mitführung von verschiedenen Werkzeugen
- Fig. 28: zeigtschematisch die Ausführungsform der erfindungsgemäßen Transporteinrichtung in Fig. 21 bei der Interaktion von dem Industrieroboter mit einer Arbeitsspindel einer Werkzeugmaschine, um beispielsweise das Werkzeug zu wechseln
- Fig. 29a: zeigt schematisch eine weitere Ausführungsform der erfindungsgemäßen Transporteinrichtung zur Späneentsorgung an einem Spänewagen einer Werkzeugmaschine
- Fig. 29b: zeigt schematisch eine weitere Ausführungsform der erfindungsgemäßen Transporteinrichtung zur Späneentsorgung mit Hebemechanismus und zusätzlichem Spänebehälter
- Fig. 29c: zeigt schematisch eine weitere Ausführungsform der Transporteinrichtung, bei der das Modul zum Auffangen der Späne auf der Oberseite der Transporteinrichtung aufgenommen ist
- Fig. 30: zeigt schematisch eine weitere Ausführungsform der erfindungsgemäßen Transporteinrichtung zur Aufbereitung und Wiederbefüllung einer Werkzeugmaschine mit Kühl-Schmierstoff
- Fig. 31: zeigt schematisch eine weitere Ausführungsform der erfindungsgemäßen Transporteinrichtung zur Bereitstellung und Einführung von Werkstücken in eine Werkzeugmaschine für Drehbearbeitung
- Fig. 32a: zeigt schematisch eine weitere Ausführungsform der erfindungsgemäßen Transporteinrichtung als Materialspeicher für eine Werkzeugmaschine mit Gantry-Lader
- Fig. 32b: zeigt schematisch eine weitere Ausführungsform der erfindungsgemäßen Transporteinrichtung als Materialspeicher für eine Werkzeugmaschine mit Roboter zum Ein- und Auswechseln von Werkstücken in die Werkzeugmaschine
- Fig. 33a: zeigt schematisch eine weitere Ausführungsform der erfindungsgemäßen Transporteinrichtung als Förderband zwischen zwei Werkzeugmaschinen mit Gantry-Lader
- Fig. 33b: zeigt schematisch eine Detailansicht der erfindungsgemäßen Transporteinrichtung nach Fig. 33a
- Fig. 33c: zeigt schematisch eine weitere Ausführungsform der erfindungsgemäßen Transporteinrichtung mit klappbarem Förderband
- Fig. 34: zeigt schematisch eine weitere Ausführungsform der erfindungsgemäßen Transporteinrichtung für die unterstützende Absaugung des Arbeitsraumes einer Werkzeugmaschine
- Fig. 35: zeigt schematisch eine weitere Ausführungsform der erfindungsgemäßen Transporteinrichtung mit Roboter und einer von dem Roboter aufgenommenen Auftragvorrichtung für additives Fertigen
- Fig. 36: zeigt schematisch eine weitere Ausführungsform der erfindungsgemäßen Transporteinrichtung mit einem Werkzeugwechsler, einer Wechsler-Speicher-Kombination oder einem Werkzeugspeicher
- Fig. 37: zeigt schematisch eine weitere Ausführungsform der erfindungsgemäßen Transporteinrichtung zum Transport von Fräsköpfen zu einer Werkzeugmaschine
- Fig. 38: zeigt schematisch eine weitere Ausführungsform der erfindungsgemäßen Transporteinrichtung mit einer Werkstückaufnahme für Großteile
- Fig. 39: zeigt schematisch eine weitere Ausführungsform der erfindungsgemäßen Transporteinrichtung als Bestandteil verschiedener Maschinenkonzepte einer Werkzeugmaschine
- Fig. 40a: zeigt schematisch eine Ausführungsform der erfindungsgemäßen Transporteinrichtung mit aufgenommener Palette an einer Konsolmaschine
- Fig. 40b: zeigt schematisch eine weitere Ausführungsform der erfindungsgemäßen Transporteinrichtung als Bestandteil weiterer verschiedener Maschinenkonzepte einer Werkzeugmaschine
- Fig. 40c: zeigt schematisch eine weitere Ausführungsform der erfindungsgemäßen Transporteinrichtung als Bestandteil weiterer verschiedener Maschinenkonzepte einer Werkzeugmaschine
- Fig. 41: zeigt schematisch eine weitere Ausführungsform der erfindungsgemäßen Transporteinrichtung, die mehrere Paletten bzw. Werkstücke trägt, in Interaktion mit einen stationären Industrieroboter zur Handhabung der Werkstücke (links) und eine weitere Ausführungsform der erfindungsgemäßen Transporteinrichtung mit einem Fräsroboter (rechts)
- Fig. 42: zeigt schematisch eine weitere Ausführungsform der erfindungsgemäßen Transporteinrichtung als Bestandteil eines Maschinenkonzeptes einer Werkzeugmaschine mit Portalbauweise und mehreren Transporteinrichtungen
- Fig. 43: zeigt schematisch eine weitere Ausführungsform der erfindungsgemäßen Transporteinrichtung, bei der mehrere Transporteinrichtungen durch Kupplungen miteinander zu einer Einheit verbunden sind
- Fig. 44: zeigt schematisch eine weitere Ausführungsform der erfindungsgemäßen Transporteinrichtung bei einer Positionierung und Energie- und/oder Signalverbindungsschluss unterhalb einer Werkzeugmaschine in Portalbauweise
- Fig. 45: zeigt schematisch eine (modulare) Werkzeugmaschine, die mehrere erfindungsgemäße Transporteinrichtungen mit unterschiedlichen Teilaufgaben umfasst
- Fig. 46: zeigt schematisch eine weitere Ausführungsform der erfindungsgemäßen Transporteinrichtung mit einem Reitstockaufsatz für das Dreh-Bearbeiten von Werkstücken
- Fig. 47: zeigt schematisch eine Vielzahl an erfindungsgemäßen Transporteinrichtungen mit unterschiedlichen Aufgaben innerhalb einer Produktionskette
- Fig. 48: zeigt schematisch das erfindungsgemäße Verfahren zur Handhabung einer Palette und/oder eines Werkstücks an einer Werkzeugmaschine

### DETAILLIERTE BESCHREIBUNG DER FIGUREN UND BEVORZUGTER AUSFÜHRUNGSBEISPIELE DER VORLIEGENDEN ERFINDUNG

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikation der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

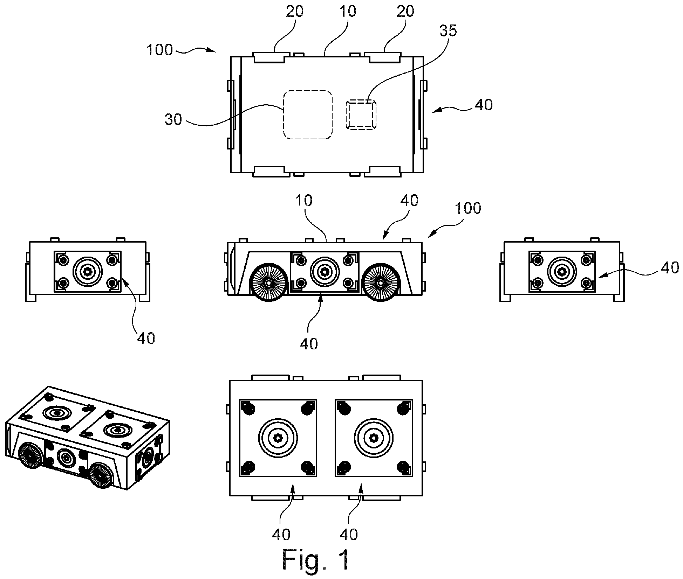

Fig. 1 zeigt schematisch eine Ausführungsform der erfindungsgemäßen Transporteinrichtung 100 mit Aufnahmevorrichtungen 40 zum Aufnehmen von Handhabungseinrichtungen.

Die in Fig. 1 gezeigte Ausführungsform der erfindungsgemäßen Transporteinrichtung 100 ist in einer besonders bevorzugten Ausführungsform als Fahrerloses Transportfahrzeug (FTF) eines Fahrerlosen Transportsystems (FTS) ausgestaltet.

Dabei weist die Transporteinrichtung 100 ein Fahrgestell 10 (Plattform) und einen Antrieb 20 auf. Dabei ist das Fahrgestell zur Aufnahme eines Energiespeichers 30 eingerichtet, wobei hierfür vorzugsweise ein elektrischer Energiespeicher 30 wie eine Batterie Anwendung findet. Jedoch ist der Energiespeicher 30 nicht auf elektrische Energie beschränkt, so dass auch mechanische Energie im Bedarfsfall gespeichert werden kann in Form von z.B. unter Druck gesetzte Fluide oder Verformungsenergie (z.B. eines federnden Elementes). Weitere Energiespeicher für z.B. Hydraulik oder Pneumatik können ebenso in dem Fahrgestell 10 untergebracht sein.

Weiterhin umfasst die erfindungsgemäße Transporteinrichtung 100 in besonders bevorzugter Weise Räder 20, um die Transporteinrichtung 100 z.B. in einer Werkshalle zu bewegen. Dabei können diese Räder 20 über einen Antriebsstrang (nicht dargestellt) mit einem zentralen Antriebsmotor verbunden sein, sie können aber auch jeweils über einen eigenen Antriebsmotor (z.B. einen oder mehrere Elektromotoren) verfügen, welche durch eine interne Steuerung 35 einzeln angesteuert werden können.

Weiterhin können die Räder 20 einzeln angelenkt werden, so dass eine überaus flexible Fahrweise und Positionierung (beispielsweise Drehen auf der Stelle, Seitwärtsfahrten etc.) der erfindungsgemäßen Transporteinrichtung 100 ermöglicht werden. Die Räder 20 können aber auch durch eine gegensätzlich gerichtete Bewegung die Transporteinrichtung 100 in eine drehende Bewegung versetzen, um eine Positionierung der Transporteinrichtung 100 herbeizuführen.

Alternativ können statt der Räder 20 auch Ketten bzw. ein Raupenfahrwerk bzw. eine Kombination aus Rädern 20 und Ketten / Raupenfahrwerk genutzt werden, um die Beweglichkeit bzw. die Flexibilität der erfindungsgemäßen Transporteinrichtung 100 weiter zu erhöhen.

Eine besonders bevorzugte Ausführungsform der Räder 20 sind sogenannte Mecanum-Räder. Sie ermöglichen durch bloße Steuerung ihrer Drehrichtung eines jeden Rades 20 eine Rotationsbewegung (Drehbewegung) der Transporteinrichtung 100 auf der Stelle, eine Translationsbewegung der Transporteinrichtung 100 sowohl in Längsrichtung (Vorwärts, Rückwärts) als auch in Querrichtung (Seitwärtsbewegung) der Transporteinrichtung 100, sowie im 45°-Winkel zur Längs- bzw. Querrichtung.

Durch den Einsatz von Mecanum-Rädern kann in vorteilhafter Weise auf einen Lenkmechanismus für die Räder 20 gänzlich verzichtet werden und einzig allein mit der internen Steuerung 35 eine entsprechende Positionierbewegung der Transporteinrichtung 100 erzeugt werden.

Ferner ist das Fahrgestell 10 vorzugsweise als Plattformträger ausgestaltet, welcher verschiedenste Aufnahmevorrichtungen 40 für Handhabungseinrichtungen (z.B. Automationskomponenten oder Transportkomponenten etc.) aufweist.

Dabei verfügt der Plattformträger besonders bevorzugt über n+1 Aufnahmevorrichtungen 40 für die verschiedenen Handhabungseinrichtungen, wobei die Aufnahmevorrichtungen 40 besonders bevorzugt am gesamten Plattformträger angeordnet sind. Insbesondere werden bevorzugt alle Seiten (Raumebenen) der Transporteinrichtung 100 für das Vorsehen einer Aufnahmevorrichtung 40 genutzt (siehe hierzu auch die verschiedenen Ansichten der Transporteinrichtung 100 in Fig. 1). Hierdurch können nun weit mehr Handhabungseinrichtungen aufgenommen und entsprechend bewegt werden als dies zum Beispiel mit einem handelsüblichen Transportfahrzeug wie einem Gabelstapler oder einem motorisierten Hubwagen möglich ist.

Jedoch sei darauf hingewiesen, dass die Anzahl und/oder die Verteilung der Aufnahmevorrichtungen 40 auf der Transporteinrichtung 100 nicht auf die in Fig. 1 gezeigte Anzahl/Verteilung beschränkt ist. Es kann beispielweise auch nur eine einzelne Aufnahmevorrichtung 40 beispielsweise auf der Oberseite der Transporteinrichtung 100 vorgesehen sein, und/oder aber auch zwei und mehr Aufnahmevorrichtungen 40 an einer oder mehreren Seiten der Transporteinrichtung 100 vorgesehen sein.

Ferner können die Aufnahmevorrichtungen 40, die auf der Oberseite der Transporteinrichtung 100 vorgesehene sind, von ihrer Größe und ihren Eigenschaften von den Aufnahmevorrichtungen 40 an den Seiten der Transporteinrichtung 100 abweichen. Dies kann beispielsweise dann vorteilhaft sein, wenn kleinere Handhabungseinrichtungen mit einem vergleichsweise geringen Gewicht an den Seiten der Transporteinrichtung 100 aufgenommen werden sollen und die schwereren Handhabungseinrichtungen vorzugsweise über den Achsen/dem Antrieb 20 der Transporteinrichtung 100 positioniert werden sollen.

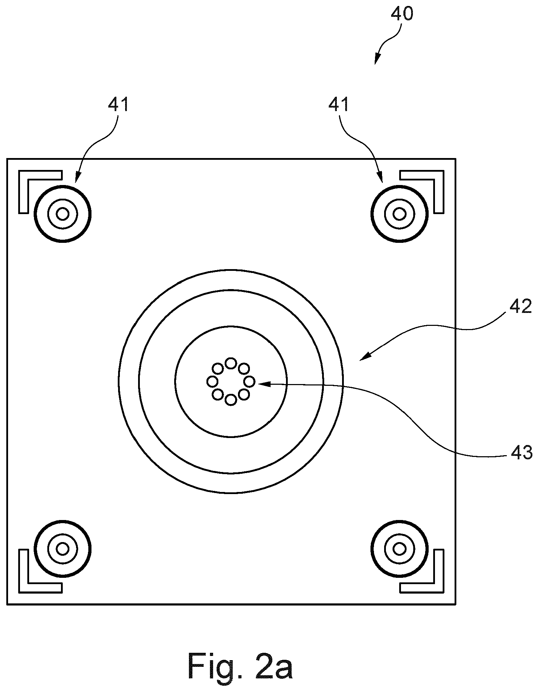

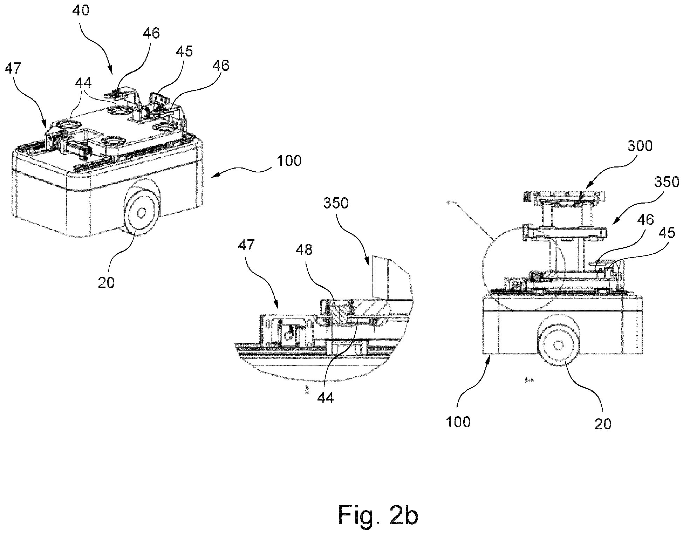

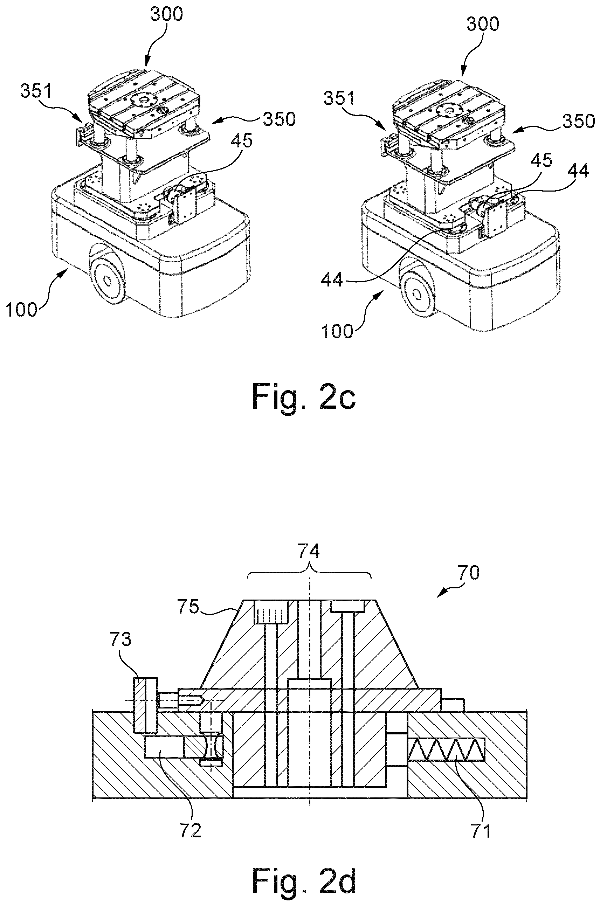

Weiterhin können beispielsweise aber auch die kleineren Aufnahmevorrichtungen 40 an den Seiten der Transporteinrichtung 100 über eine geringere Anzahl an Anschlüssen (siehe hierfür die Erläuterungen zur Fig. 2) im Vergleich zu den größeren Aufnahmevorrichtungen 40 auf der Oberseite der Transporteinrichtung 100 verfügen.

Vorzugsweise ist die Transporteinrichtung 100 mit einer Einheit zur optischen Überwachung seiner Umgebung (hier nicht gezeigt) und der angekoppelten Handhabungseinrichtungen ausgestattet. Diese Einrichtung ist vorzugsweise mit der Steuerungssoftware der internen Steuerung 35 gekoppelt und ermöglicht es auf Basis der Erkennung eine Handlung durchzuführen.

Zudem sind vorzugsweise weitere Sensoren in der Transporteinrichtung 100 verbaut, welche es ermöglichen, die Umgebung und Komponenten geeignet zu überwachen. Beispielsweise können Infrarot oder Radarsensoren eingesetzt werden.

Fig. 2a zeigt schematisch eine Detailansicht einer Aufnahmevorrichtung 40 zum Aufnehmen von Handhabungseinrichtungen (oder jeglicher anderer Einrichtungen).

Dabei sind die Aufnahmevorrichtungen 40 vorzugsweise zur mechanischen Fixierung der Handhabungseinrichtungen, zur Signalübertragung und Energieübertragung an die jeweilige Handhabungseinrichtung eingerichtet. Es kann je nach Handhabungseinrichtung nur eine der Übertragungsmöglichkeiten oder aber auch eine beliebige Kombination daraus genutzt werden.

Ferner sind besonders bevorzugt die Aufnahmevorrichtungen 40 automatisiert ausgeführt. Somit kann die Transporteinrichtung 100 selbständig die Handhabungseinrichtungen austauschen und ist dadurch flexibel für verschiedenste Aufgaben einsetzbar. Bei automatisierten Ausführungen der Transporteinrichtung 100 eignen sich zudem insbesondere Schnellkupplungen (z.B. Frontlader-Schnellkupplung) um automatisiert eine Verbindung für Energieübertragung bzw. Signalübertragung zwischen der Transporteinrichtung 100 und der Handhabungseinrichtung herzustellen.

Wie in Fig. 2a gezeigt, können beispielsweise konenförmige Abschnitte 41 der Aufnahmevorrichtung 40 dazu vorgesehen sein, die entsprechende Handhabungseinrichtung gegenüber der Aufnahmevorrichtung 40 auszurichten und zu fixieren. Für ein derartigen Ausrichten und gleichzeitiges Fixieren der Handhabungseinrichtung an der Aufnahmevorrichtung 40 können hier vorteilhaft Spannkonen verwendet werden, wie sie beispielsweise bereits von der Aufnahme für Paletten in einer Werkzeugmaschine bekannt sind.

Weiterhin kann die Aufnahmevorrichtung 40 eine Schnittstelle 42 zur Übertragung von mechanischer Energie (beispielsweise eine Rotation eines in der Transporteinrichtung 100 vorgesehenen Motors auf die Handhabungseinrichtung) und/oder elektrischer, hydraulischer und/oder pneumatischer Energie aufweisen. Ferner könnten aber auch beispielsweise Betriebsmittel wie Kühl-Schmierstoff von der Transporteinrichtung der entsprechend an der Aufnahmevorrichtung 40 aufgenommenen Handhabungseinrichtung zugeleitet werden. Hierfür können beispielsweise entsprechende Befestigungsmittel und elektrische und/oder Fluide leitende Anschlüsse (Befestigungsmittel und Anschlüsse 43) vorgesehen sein.

Zudem kann in vorteilhafter Weise die Schnittstelle 42 eine Einrichtung zur kontaktlosen Übertragung von Signalen zwischen der Aufnahmevorrichtung 40 der Transporteinrichtung 100 und der Handhabungseinrichtung aufweisen. Diese Einrichtung zur kontaktlosen Signalübertragung kann beispielsweise als Sender-/Empfängerspule ausgebildet sein, oder aber als Induktivkoppler mit I/O-Link zur berührungslosen Übertragung der Signale.

Dabei kann die Einrichtung an jeder beliebigen Stelle an der Schnittstelle 42 oder auch außerhalb der Schnittstelle 42 vorgesehen sein, wobei in vorteilhafter Weise die Einrichtungzur kontaktlosen Signalübertragung zentral/mittig in der Schnittstelle 42 vorgesehen ist.

Es sei an dieser Stelle darauf hingewiesen, dass beispielsweise die elektrischen und/oder Fluid leitenden Anschlüsse nicht zwingend auf der Schnittstelle 42 vorgesehen sein müssen. Sie können ebenfalls außerhalb der Schnittstelle 42 vorgesehen sein, um beispielsweise die Übertragung von rotatorischer Energie von der Übertragung der elektrischen/fluiden Energie zu trennen/zu separieren.

Zudem sind in besonders bevorzugter Weise die Aufnahmevorrichtungen 40 einheitlich bzw. standardisiert ausgeführt, so dass beliebige Komponenten bzw. Handhabungseinrichtungen mit entsprechend einheitlich ausgebildeten Aufnahmeelementen angebracht werden können und dabei im Wesentlichen die gleichen Schnellkupplungen zur Energie- bzw. Signalübertragung genutzt werden können.

Weiterhin verfügen die Aufnahmevorrichtungen 40 vorzugsweise über die Möglichkeit, den Zustand der aufgenommenen Handhabungseinrichtung zu überwachen. Dazu gehören vorzugsweise die Überwachung der Spannsituation der gekoppelten Handhabungseinrichtung (beispielsweise an den Spannkonen), deren Status und Signale, sowie deren Energieübertragung.

Bei der Überwachung des Spannungszustandes können hierfür vorzugsweise eine Auflagekontrolle oder eine Spannkontrolle in den Aufnahmevorrichtungen 40 verwendet werden, wobei die Auflagekontrolle vorzugsweise über elektrische Signale den Zustand ermittelt, oder aber alternativ Blasluft dafür verwenden kann.

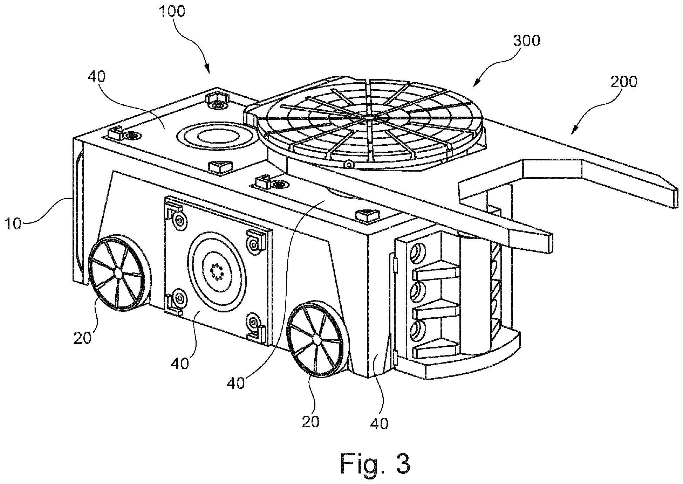

Beispielhaft kann die Transporteinrichtung 100 die folgenden Handhabungseinrichtungen aufnehmen: Palettenwechsler (z. B. bekannt aus Werkzeugmaschinen), Roboter, Materialpaletten, Gitterboxen und weitere Materialträger, Ablageplätze für Roboterzubehör (z. B. Wechselgreifer), Entgratstationen, Waschstationen, Werkzeuge für z. B. Werkzeugmaschinen, Staplergabel etc. Für weitere Details sei an dieser Stelle auf die Figuren 3 bis 11 und 22 bis 36 verwiesen.

Es sei an dieser Stelle darauf hingewiesen, dass die Möglichkeiten an Handhabungseinrichtungen, die durch die Aufnahmevorrichtungen 40 der Transporteinrichtung 100 aufgenommen werden können, in keinster Weise durch die oben genannte Aufzählung erschöpft sind.

Weiterhin ist die Transporteinrichtung 100 vorteilhafterweise derart gestaltet, dass sich die Handhabungseinrichtungen beliebig miteinander kombinieren lassen, um so eine größere Flexibilität bei spezifischen Anwendungen zu ermöglichen.

Vorzugsweise verfügt die interne Steuerung 35 der Transporteinrichtung 100 über eine eigene Steuersoftware, welche die Verfahr- und Transportbewegungen steuern und überwachen kann. Die Steuersoftware könnte zum Beispiel um einzelne Softwarebausteine erweitert werden, welche für die jeweiligen Komponenten bzw. Handhabungseinrichtungen notwendigsind. Dabei kann es sich z.B. um die Anbindung einer Robotersteuerung oder um die Anbindung der Ansteuerung eines Palettenwechslers handeln.

Fig. 2b zeigt schematisch eine weitere Ausführungsform der Aufnahmevorrichtung 40 der Transporteinrichtung 100 zum Aufnehmen einer Handhabungseinrichtung (oder jeglicher anderer Einrichtungen).

Dabei weist die Aufnahmevorrichtung 40 mindestens eine Vertiefung 44 (beispielsweise eine Ausfräsung oder eine Bohrung) auf, durch die ein Bolzen 48 einer Einrichtung (beispielsweise Handhabungseinrichtung, Palettenhalter 350 oder jegliche andere Einrichtung) aufgenommen werden kann. Dabei weist die Vertiefung 44 eine größere Ausdehnung auf als beispielsweise der Durchmesser des Bolzens 48, so dass der Bolzen 48 auf dem Grund der Vertiefung 44 verschiebbar gelagert werden kann. Ferner kann die Vertiefung 44 an ihrer Oberseite zusätzlich oder alternativ zum Grund mindestens eine Aufnahmefläche (zur Auflage der aufgenommenen Einrichtung) aufweisen, durch die die Einrichtung aufgenommen werden kann.

Es sei an dieser Stelle bereits darauf hingewiesen, dass die Vertiefungen 44 an der Einrichtung vorgesehen sind, und die Bolzen 48 dafür an der Aufnahmevorrichtung 40 vorgesehen sind. Zudem sei darauf hingewiesen, dass es neben der Kombination Vertiefung 44/Bolzen 48 auch noch andere Formpaarungen zur Aufnahme der Einrichtung an der Aufnahmevorrichtung 40 denkbar sind, beispielsweise Prisma und Kegel. Die hier genannten und beschriebenen Möglichkeiten sind nicht als abschließend aufzufassen.

Ferner kann die Aufnahmevorrichtung 40 eine Vorrichtung 46 zur Zentrierung der von der Aufnahmevorrichtung 40 aufgenommenen Einrichtung (hier Palettenhalter 350) gegenüber der Transporteinrichtung 100 bzw. der Aufnahmevorrichtung 40 aufweisen. Dies ist insbesondere von Vorteil, um eventuelle Positionierungenauigkeiten der aufgenommenen Einrichtung auf der Aufnahmevorrichtung 40 durch die Transporteinrichtung 100 auszugleichen.

Dabei erfolgt die Aufnahme und gegebenenfalls eine Zentrierung des beispielhaften Palettenhalters 350 an der Aufnahmevorrichtung 40 bzw. durch die Zentriervorrichtung 46 wie folgt:
Zu Beginn fährt die Transporteinrichtung 100 mit der jeweiligen Aufnahmevorrichtung 40 (und einer gewissen Positionierungenauigkeit) unter die aufzunehmende Einrichtung (hier beispielsweise der Palettenhalter 350). Dabei kann der Palettenhalter 350 gegen ein Druckstück 45 gedrückt werden, dass an der Seite der Aufnahmevorrichtung 40 vorgesehen ist, wie die Zentriervorrichtung 46. Dieses Druckstück 45 sorgt für eine Vorspannung des Palettenhalters 350 gegenüber der Aufnahmevorrichtung 40 in entgegengesetzter Richtung zur Zentriervorrichtung 46.

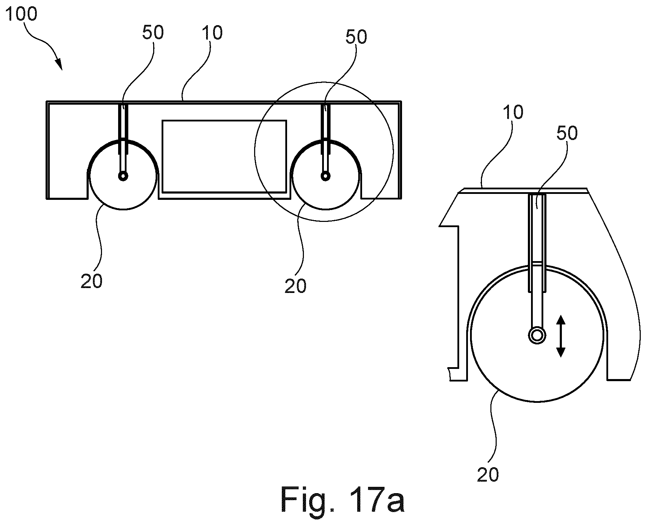

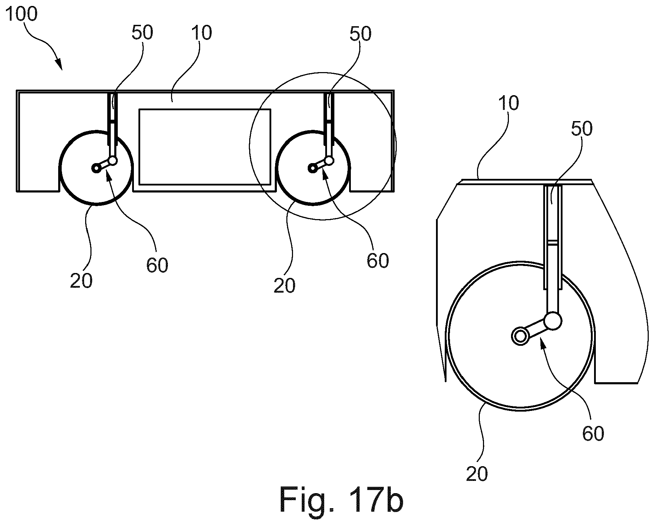

Anschließend hebt sich die Transporteinrichtung 100 an (beispielsweise durch einen Mechanismus wie in Fig. 17a und 17b gezeigt), so dass die Bolzen 48 in die Vertiefungen 44 einfädeln, wobei die Transporteinrichtung 100 so lange weiter angehoben wird, bis der Palettenhalter 350 vollständig in den Vertiefungen 44 bzw. an deren Oberseite aufliegt.

Danach hebt sich die Transporteinrichtung 100 weiter an, bis der Palettenhalter 350 aus seiner Aufnahme (hier nicht gezeigt) herausgehoben wird und damit vollständig von der Transporteinrichtung 100 getragen wird.

Im Anschluss daran kann nun der Palettenhalter 350 auf der Aufnahmevorrichtung 40 zentriert (und dabei auch fixiert) werden. Hierbei kann beispielsweise der Antrieb 47 zur Verschiebung der Vertiefungen 44, die beispielsweise auf einer Gleit- oder Kugelführung gleitend gelagert sind, in Richtung der Zentriervorrichtung 46 aktiv werden.

Durch ihn wird der bisher auf der Aufnahmevorrichtung 40 (bzw. in und/oder auf den Vertiefungen 44) schwimmend gelagerte Palettenhalter 350 in Richtung der Zentriervorrichtung 46 verschoben und gegen die Zentriervorrichtung 46 (und evtl. auch stärker gegen das Druckstück 45) gedrückt, so dass eine Ausrichtung des Palettenhalters 350 an der Zentriervorrichtung 46 erfolgt (beispielsweise in dem die Zentriervorrichtung 46 ein Prisma/zwei Prismen aufweist und sich entsprechende Stifte/Bolzen des Palettenhalters 350 an diesem Prisma/diesen Prismen ausrichtet).

Dabei kann der Antrieb 47 zwei Endlagen aufweisen: Zum einen, wenn der Antrieb 47 die Vertiefungen so weit wie möglich in Richtung Zentriervorrichtung 46 verschoben/verfahren hat, dann ist der Palettenhalter 350 fixiert und ausgerichtet. Und zum anderen, wenn der Antrieb 47 die Vertiefungen 44 mit dem größtmöglichen Abstand zur Zentriervorrichtung 47 verfahren hat, der Palettenhalter 350 frei ist und sich dieser anhand anderer Elemente (beispielsweise anhand einer Aufnahme an einer Werkzeugmaschine, einem Rüstplatz, einem Magazinplatz oder Ähnlichem) ausrichten kann. In diesem Zustand kann der Palettenhalter 350 entsprechend an eine Aufnahme übergeben oder von der Aufnahme aufgenommen werden.

Die Fixierung des Palettenhalters 350 auf der Aufnahmevorrichtung 40 kann nun derart erfolgen, dass zum einen die Zentriervorrichtung 46 selbst einen Fixierabschnitt aufweist, in den der Palettenhalter 350 eingefädelt wird und dort arretiert wird.

Oder aber die Vertiefungen 44 werden durch den Antrieb 47 derart weit in Richtung der Zentriervorrichtung 46 verschoben, dass mindestens ein Bolzen 48 des Palettenhalters 350 gegen der der Zentriervorrichtung 46 abgewandten Seite einer der Vertiefungen 44 gedrückt wird (siehe hierfür das mittlere Bild der Fig. 2b) und dadurch eine Fixierung des Palettenhalters 350 gegenüber der Aufnahmevorrichtung 40 erfolgt.

Ferner kann eine Fixierung des Palettenhalters 350 an der Aufnahmevorrichtung 40 auch dadurch herbeigeführt werden, dass das Druckstück 45 den Palettenhalter 350 gegen die der Zentriervorrichtung 46 abgewandten Seite einer der Vertiefungen 44 drückt (siehe hierfür das mittlere Bild der Fig. 2b).

Es sei an der Stelle darauf hingewiesen, dass aber auch alle genannten Möglichkeiten der Fixierung des Palettenhalters 350 gegenüber der Aufnahmevorrichtung 40 in Kombination miteinander stattfinden können. Zudem sei darauf hingewiesen, dass die genannten Möglichkeiten der Fixierung nicht als abschließend aufzufassend sind, es können hier noch weitere Möglichkeiten in Betracht kommen.

Es sei zudem darauf hingewiesen, dass der Antrieb 47 nicht zwingend notwendig ist, um den Palettenhalter 350 zu fixieren bzw. zu zentrieren. Es können vielmehr auch noch weitere Möglichkeiten zur Zentrierung des Palettenhalters 350 gegenüber der Aufnahmevorrichtung 40 der Transporteinrichtung 100 genutzt werden.

Fig. 2c zeigt schematisch eine weitere Ausführungsform der Aufnahmevorrichtung 40, diesmal ohne den Antrieb 47.

Hierbei weist die Aufnahmevorrichtung 40 wieder zumindest eine Vertiefung 44 sowie ein Druckstück 45 auf, wobei die zumindest eine Vertiefung 44 nicht weiter gegenüber der Transporteinrichtung 100 positioniert werden kann (wie dies beispielswiese durch den Antrieb 47 wie in Fig. 2b beschrieben möglich war).

Stattdessen wirkt einzig das Druckstück 45 als vorspannendes Element, der den Palettenhalter 350 gegen die zumindest eine Vertiefung 44 drückt und dadurch den Palettenhalter 350 fixiert (und ein Stück weit auch ausrichtet) gegenüber der Aufnahmevorrichtung 40 (siehe rechtes Bild der Fig. 2c). Diese Relativlage von Palettenhalter 350 zu Aufnahmevorrichtung 40 liegt vor, wenn der Palettenhalter 350 durch die Transporteinrichtung 100 verfahren wird.

Soll jedoch der Palettenhalter 350 an eine Aufnahme übergeben werden, so richtet sich, aufgrund des Anfahrens des Palettenhalters 350 an die Aufnahme, der Palettenhalter 350 mittels der Ausrichtelemente 351 an der aufnehmenden Aufnahme (mechanisch) aus und drückt dabei das Druckstück 45 zusammen (siehe linkes Bild der Fig. 2c).

Fig. 2d zeigt schematisch einen Stecker 70, der Medien, Energie und Signale von der Aufnahmevorrichtung 40 auf die aufgenommene Einrichtung (beispielsweise Handhabungseinrichtung, Palettenhalter 350 oder jegliche andere Einrichtung) übertragen kann und dabei automatisiert die entsprechenden Verbindungen zwischen Aufnahmevorrichtung 40 und der aufgenommenen Einrichtung herstellt.

Die Besonderheit des Steckers 70 liegt nun darin, dass er so eingerichtet ist, dass er ebenfalls eventuelle Positionierungenauigkeiten der Transporteinrichtung 100 ausgleichen kann.

Hierfür weist der Stecker 70 ebenfalls ein (gefedertes) Druckstück 71 auf, das den schwimmend gelagerten Steckerkörper 75 in Richtung einer Steckerfixierung 72 vorspannt, wobei ferner ein mechanischer Anschlag 73 vorhanden sein kann, gegen den der Steckerkörper 75 vorgespannt wird. Dieser mechanische Anschlag 73 kann beispielsweise als Prisma ausgeführt sein, dass zusätzlich eine Ausrichtung des Steckerkörpers 75 ermöglicht.

Wird nun die Transporteinrichtung 100 für das Aufnehmen der Einrichtung unter die Einrichtung gefahren und angehoben, so kann sich der Stecker 70 aufgrund der schwimmenden Lagerung und der konischen Form des Steckerkörpers 75 in die entsprechend ausgebildete (konische) Vertiefung des Palettenhalters 350 (oder einer anderen Einrichtung) eingeführt und ausgerichtet werden, so dass die Anschlussschnittstellen 74 des Steckers 70 mit den entsprechenden Gegenstücken an dem Palettenhalter 350 eine Verbindung eingehen können. Umgekehrt kann natürlich durch Absenken der Aufnahmevorrichtung 40 in Relation zur aufgenommenen Einrichtung die Verbindung des Steckers 70 (mit den Anschlussschnittstellen 74) wieder vom Palettenhalter 350 gelöst werden.

Fig. 3 zeigt schematisch eine Ausführungsform der erfindungsgemäßen Transporteinrichtung 100, beispielhaft mit einem Palettenwechsler 200 und einer Palette 300.

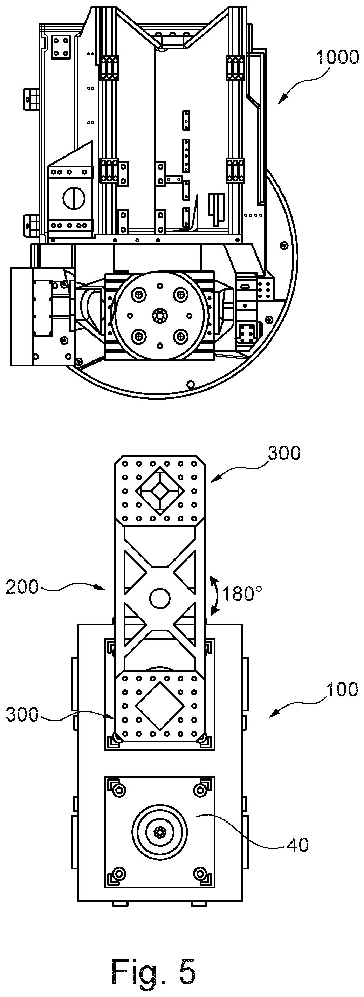

Dabei sind neben den bereits beschriebenen Elementen des Fahrgestells 10, der Räder 20 und der Aufnahmevorrichtungen 40 ein Palettenwechsler 200 als Handhabungseinrichtung in einer Doppelgabel-Ausführung (H-förmige Gabel; siehe hierzu auch Fig. 5) und beispielhaft eine Palette 300 dargestellt.

Dabei wurde die Handhabungseinrichtung (Palettenwechsler 200) an der Vorderseite der Transporteinrichtung 100 durch eine der Aufnahmevorrichtungen 40 aufgenommen und entsprechend mechanisch fixiert und Verbindungen zur Energie- wie auch zur Signalübertragung zur Ansteuerung und zum Antreiben des Palettenwechslers 200 geschlossen.

Nun kann die erfindungsgemäße Transporteinrichtung 100 mittels des aufgenommenen Palettenwechslers 200 als Handhabungseinrichtung zu einer entsprechenden Werkzeugmaschine 1000 (hier nicht dargestellt) fahren und die getragene Palette 300 in der Werkzeugmaschine 1000 einsetzen bzw. mit der bereits in der Werkzeugmaschine 1000 vorhandenen Palette 300 austauschen.

Ein besonderer Vorteil des angekoppelten Palettenwechslers 200, insbesondere bei mehreren durch die Transporteinrichtung 100 aufgenommenen Palettenwechslern 200, besteht im Gegensatz zu Transportfahrzeugen mit nur einer Gabel darin, dass dadurch notwendige Verfahrbewegungen beim Austausch von Paletten vermieden, bzw. reduziert werden.

Der Palettenwechsler 200 verfügt vorzugsweise über entsprechende Aufnahmeelemente für die Aufnahmevorrichtungen 40 der Transporteinrichtung 100 inkl. mechanischer Fixierung, Positionierung, Signalübertragung und Energieübertragung. Ferner sollte der Palettenwechsler 200 passend zu den zu automatisierenden Werkzeugmaschinen gestaltet sein.

Vorzugsweise verfügt der Palettenwechsler 200 über n+1 Aufnahmen (Aufnahmeklaue oder eine Gabel-förmige Aufnahme, vorzugsweise für verschiedene Palettengrößen) für Paletten 300, wobei der Palettenwechsler 200 zudem mit einer Drehachse ausgestattet ist, welche einen Austausch der Paletten 300 durch eine Drehbewegung ermöglicht.

Vorzugsweise hat der Palettenwechsler 200 noch eine weitere Achse um die Paletten 300 aus ihrer Spannsituation in der Werkzeugmaschine 1000 zu bewegen. Meist handelt es sich hierbei um eine Hubachse.

Eine Gabel-förmige Aufnahme könnte zudem in ihren Abmessungen verstellbar sein, um mehrere Varianten und Größen von Paletten 300 aufnehmen zu können. Ferner könnte auch die Aufnahmeklaue der Palettengröße anpassbar sein.

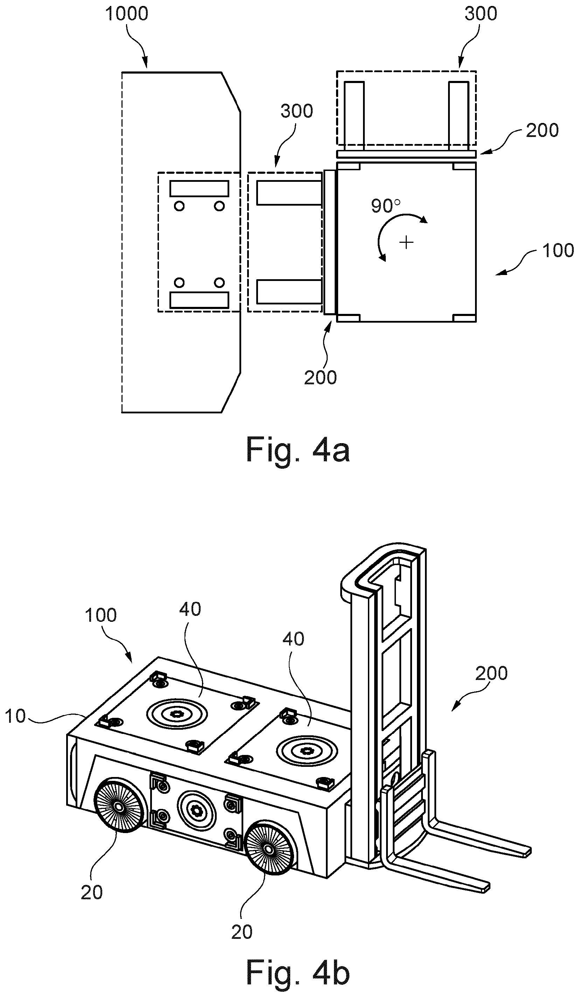

Fig. 4a zeigt schematisch eine Ausführungsform der erfindungsgemäßen Transporteinrichtung 100 bei einem Palettenwechsel mittels zweier gabelförmiger Palettenwechsler 200, wobei die Transporteinrichtung 100 eine Drehung vollzieht (im gezeigten Beispiel um 90°, wobei auch andere Winkel, insbesondere 180°, möglich sind), um den Wechsel der Paletten 300 durchzuführen.

Dabei fährt die Transporteinrichtung 100 an einen Arbeitsraum der Werkzeugmaschine 1000 heran und positioniert sich derart vor den Arbeitsraum, dass die in dem Arbeitsraum bereits vorhandene Palette 300 von dem unbeladenen gabelförmigen Palettenwechsler 200 aufgenommen werden kann (z.B. mittels einer Schwenkbewegung der Transporteinrichtung 100, oder einer an der Transporteinrichtung 100 aufgenommenen Teleskop-Mechanik zum Ausheben der Palette 300, oder durch bloßes Verfahren der Transporteinrichtung 100). Danach dreht sich die Transporteinrichtung 100 um 90°, so dass der zweite Palettenwechsler 200 seine mitgeführte Palette 300 in den Arbeitsraum der Werkzeugmaschine 1000 einlegen kann.

Fig. 4b zeigt schematisch die erfindungsgemäße Transporteinrichtung 100 mit einer Ausführungsform eines gabelförmigen Palettenwechslers 200.

Insbesondere kann hierbei der gabelförmige Palettenwechsler 200 als Hubgabel, wie dies beispielsweise von Gabelstaplern bekannt ist, ausgeführt sein. Eine entsprechend an dem gabelförmigen Palettenwechsler 200 vorgesehene Hubmechanik kann dabei die Hubgabel in ihrer Höhe verstellen und so die Einsatzmöglichkeiten des gabelförmigen Palettenwechslers 200 deutlich vergrößern. Die Hubmechanik muss jedoch nicht zwingend an dem gabelförmigen Palettenwechsler 200 vorgesehen sein.

Fig. 5 zeigt schematisch eine Ausführungsform der erfindungsgemäßen Transporteinrichtung 100 bei einem Palettenwechsel, wobei die Transporteinrichtung 100 an ihrer Position verbleibt und der Palettenwechsler 200, wie in Fig. 3 gezeigt ein H-förmiger Palettenwechsler 200, sich dreht.

Dabei fährt die Transporteinrichtung 100, wie bereits bei Fig. 4a beschrieben, an den Arbeitsraum der Werkzeugmaschine 1000 heran und positioniert sich derart vor den Arbeitsraum, dass die in dem Arbeitsraum bereits vorhandene Palette 300 von einer freien Gabel des Doppelgabel-förmigen (oder H-förmigen) Palettenwechslers 200 aufgenommen werden kann.

Nun wird im Anschluss daran der Palettenwechsler 200 derart auf der Transporteinrichtung 100 gedreht, dass die auf der anderen Gabel mitgeführte Palette 300 in den Arbeitsraum der Werkzeugmaschine 1000 eingelegt werden kann.

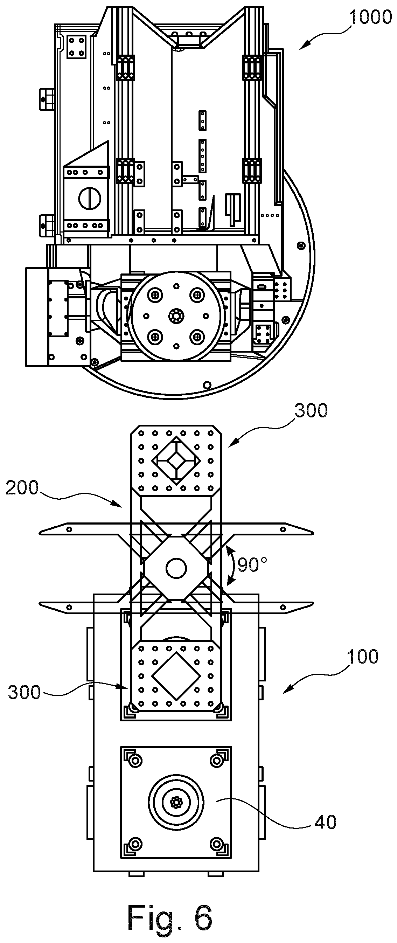

Fig. 6 zeigt schematisch eine Ausführungsform der erfindungsgemäßen Transporteinrichtung 100 bei einem Palettenwechsel, wobei der Palettenwechsler 200 als Doppel-H ausgebildet ist und sich, wie gezeigt, drehen kann. Dabei wird im Wesentlichen der gleiche Ablauf vollzogen wie in Fig. 5 beschrieben.

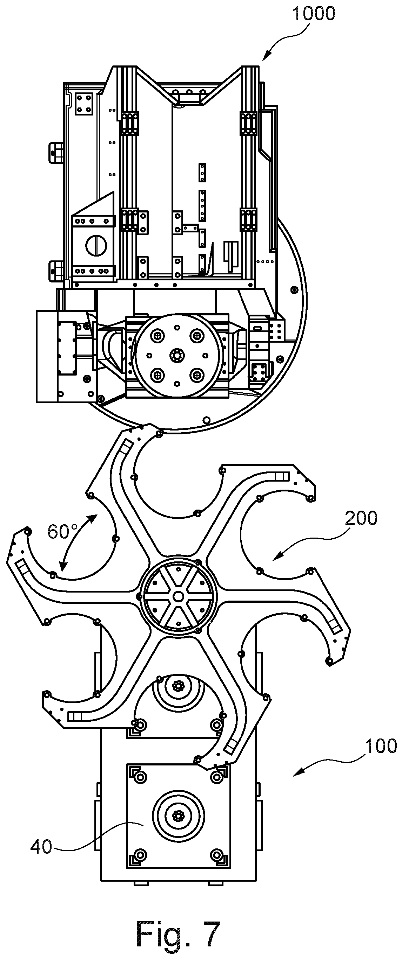

Fig. 7 zeigt schematisch eine Ausführungsform der erfindungsgemäßen Transporteinrichtung 100 bei einem Palettenwechsel, wobei der Palettenwechsler 200 nun Paletten 300 in einer 60°-Verteilung aufnehmen und sich, wie gezeigt, drehen kann. Dabei wird im Wesentlichen der gleiche Ablauf vollzogen wie in Fig. 5 beschrieben.

Dabei weisen die Palettenwechsler 200 der Figuren 6 und 7 den Vorteil auf, dass sie deutlich mehr Paletten 300 mit sich führen können und so mehrere Werkzeugmaschinen 1000 mit Paletten 300 versorgt werden können, ohne dass die Transporteinrichtung 100 gleich wieder zu einem Rüstplatz oder ähnlichem zurück fahren muss, um eine andere Palette 300 zu holen. Eine enorme Zeit- und Energieeinsparung ist hierdurch möglich.

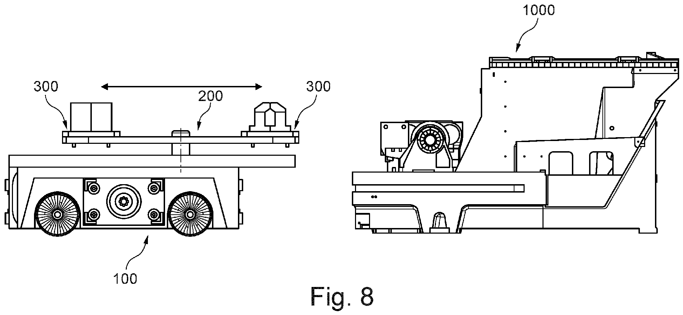

Fig. 8 zeigtschematisch eine Ausführungsform der erfindungsgemäßen Transporteinrichtung 100 (sowie Fahrgestell 10 und Rädern 20) mit einem verschiebbarem Palettenwechsler 200.

Weiterhin kann es vorteilhaft sein, wenn neben der Möglichkeit des Drehens des Palettenwechslers 200 die Möglichkeit besteht, den Palettenwechsler 200 gegenüber der Transporteinrichtung 100 zu verschieben, so dass beispielsweise die Drehachse des Palettenwechslers 200 gegenüber der Transporteinrichtung 100 individuell positioniert werden kann.

Dabei kann es zusätzlich von Vorteil sein, wenn die Verschiebung des Palettenwechslers 200 nicht nur, wie in Fig. 8 gezeigt, in einer Richtung, sondern mindestens noch in einer weiteren, senkrecht dazu verlaufenden Richtung stattfinden kann, um die Positionierung des Palettenwechslers 200 gegenüber der Transporteinrichtung 100 und/oder der Werkzeugmaschine 1000 noch individueller zu ermöglichen.

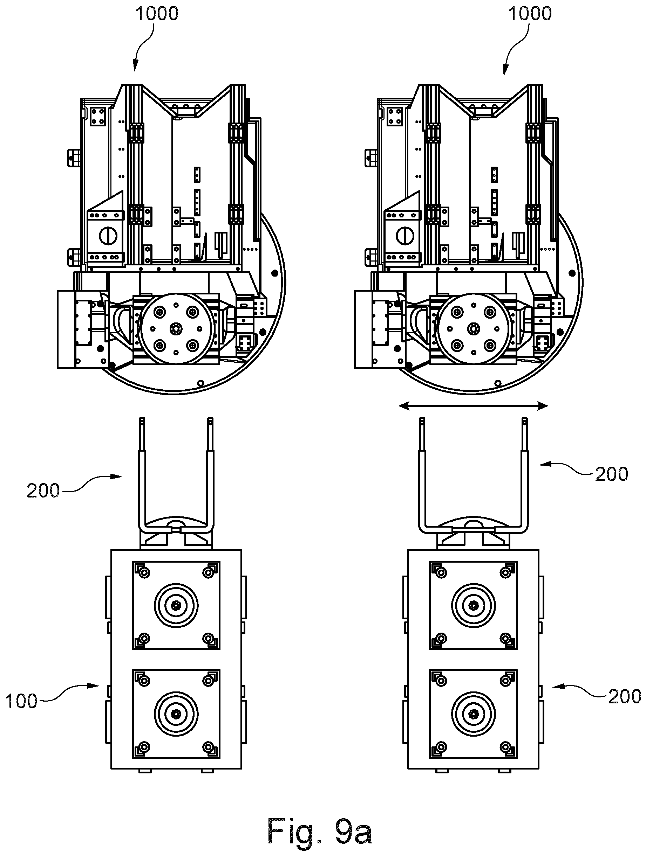

Fig. 9a zeigt schematisch eine Ausführungsform der erfindungsgemäßen Transporteinrichtung 100 mit einem Palettenwechsler 200, welcher über eine verstellbare Gabelbreite verfügt.

Hierdurch kann nun der Palettenwechsler 200 auf die verschiedenen Größen der Palette 300 angepasst werden, welche durch die Transporteinrichtung 100 zur Werkzeugmaschine 1000 gebracht werden soll. Dies steigert weiterhin die Flexibilität und die Anwendungsbreite eines einzelnen Palettenwechslers 200.

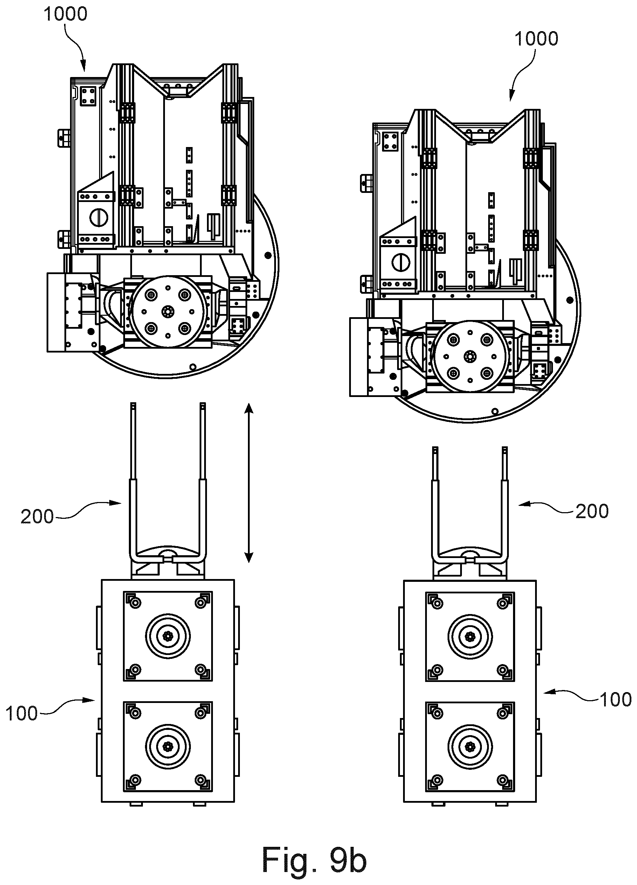

Zudem kann, wie in Fig. 9b gezeigt, der Palettenwechsler 200 in seiner Länge verstellt werden, um zusätzlich auf die verschiedenen Größen der Palette 300 angepasst zu werden. Dies steigert weiterhin die Flexibilität und die Anwendungsbreite eines einzelnen Palettenwechslers 200.

Ferner kann beispielsweise eine veränderbare Länge des Palettenwechslers 200 aber auch dafür genutzt werden, um eine Palette 300 weiter hinein in die Werkzeugmaschine 1000 zu legen. Dies kann bei bestimmten Bauformen von Werkzeugmaschinen 1000 von Vorteil sein oder wenn beispielsweise die Transporteinrichtung 100 die Palettenaufnahme der Werkzeugmaschine 1000 nicht bis unmittelbar davor anfahren kann.

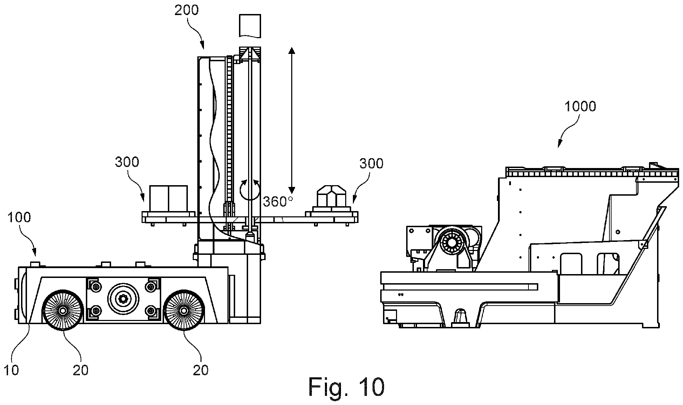

Fig. 10 zeigt schematisch eine Ausführungsform der erfindungsgemäßen Transporteinrichtung 100 (sowie Fahrgestell 10 und Rädern 20) mit einem Palettenwechsler 200 für eine mehrstöckige Palettenablage.

Durch die Aufnahmevorrichtungen 40 ist es zudem möglich, einen mehrstöckigen Palettenwechsler 200 an der Transporteinrichtung 100 aufzunehmen und so mehrstöckige Palettenablagen zu bedienen.

Vorzugsweise wird hierfür eine Hub-Dreheinheit mit Aufnahmen für n+1 Paletten 300 vorgesehen, wobei die Hubachse des Palettenwechslers 200 zur Anordnung n+1 übereinander liegender Paletten 300 genutzt werden kann. Dadurch wird gegenüber einer nur flächigen Anordnung von Paletten 300 eine höhere Packungsdichte der Paletten 300 erreicht.

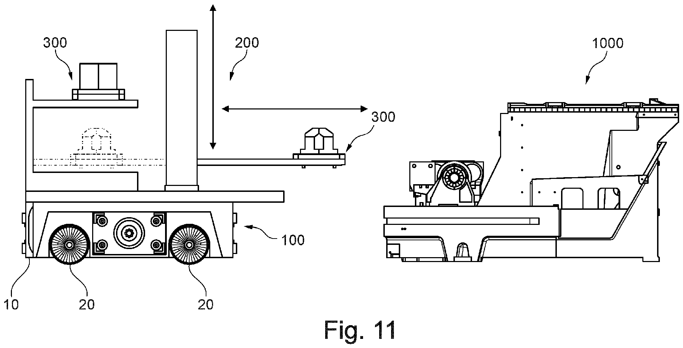

Fig. 11 zeigt schematisch eine weitere Ausführungsform der erfindungsgemäßen Transporteinrichtung 100 (sowie Fahrgestell 10 und Rädern 20) mit einem Palettenwechsler 200 für eine mehrstöckige Palettenablage.

Dabei weist die Transporteinrichtung 100 ferner eine eigene, mehrstöckige Palettenablage auf (links neben dem Palettenwechsler 200 gezeigt), um zusätzlich Speicherkapazitäten für Paletten 300 aufzuweisen und somit mehr Paletten 300 zu transportieren.

Zudem kann es vorteilhaft sein, den Palettenwechsler 200 derart auszuführen, dass er durch eine Hub-Schiebeeinheit für die Anordnung n+1 übereinander liegender Paletten 300 genutzt werden kann und somit ebenfalls optimal die mehrstöckige Palettenablage, die auf der Transporteinrichtung 100 vorgesehen ist, zu bedienen.

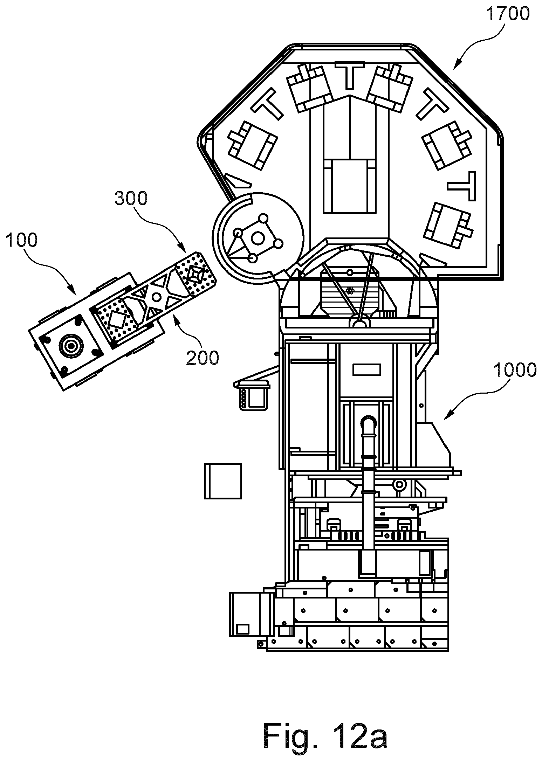

Fig. 12a zeigt schematisch die erfindungsgemäße Transporteinrichtung 100 bei der Beladung eines Rundspeichers 1700 einer Werkzeugmaschine mit Paletten 300.

Hierdurch kann vorteilhaft gezeigt werden, dass eine mit einem Palettenwechsler 200 ausgerüstete Transporteinrichtung 100 eine Werkzeugmaschine 1000 nicht nur direkt (beispielsweise direkt den Arbeitsraum der Werkzeugmaschine 1000) beladen kann, sondern ebenfalls verschiedene Speicher (wie beispielsweise einen Rundspeicher 1700 der Werkzeugmaschine 1000) mit Paletten 300 beladen kann.

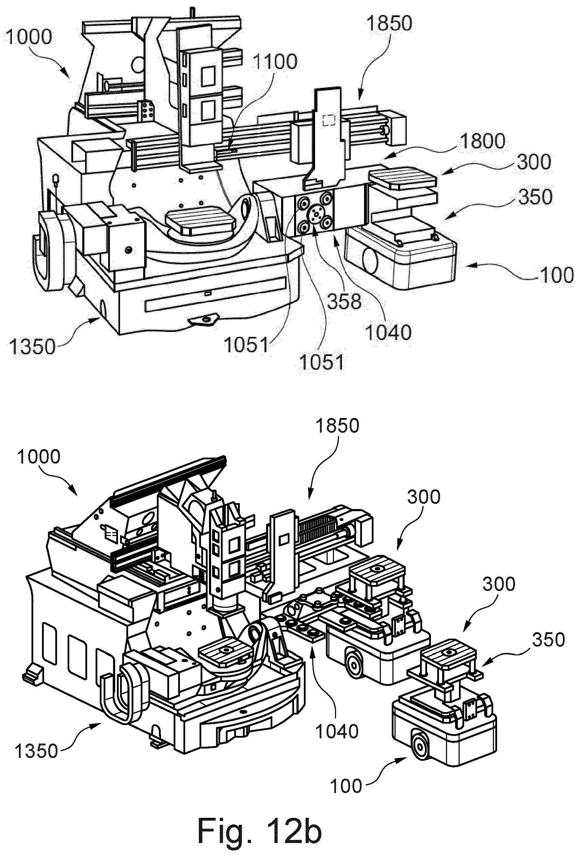

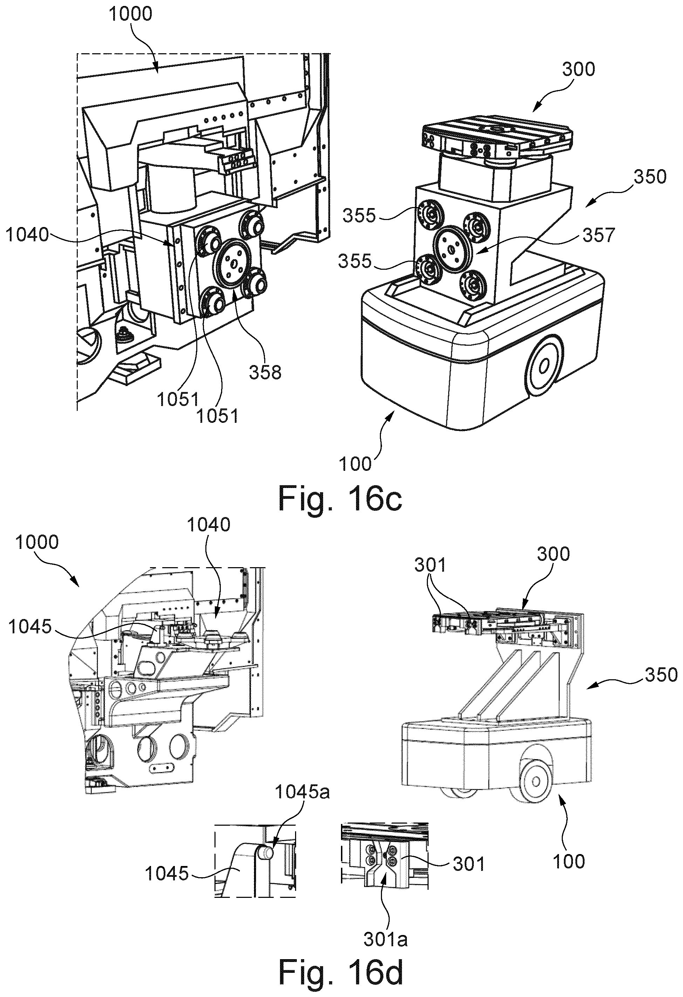

Fig. 12b zeigt eine erfindungsgemäße Transporteinrichtung 100 beim Beladen eines Zwischenspeichers 1800, an dem Paletten 300 bzw. Palettenhalter 350 durch Andocken an einer Aufnahme 1040 (umfassend konische Aufnahmen (beispielsweise konische Aufnahmen 1051) und Schnittstelle 358; siehe hierfür beispielsweise auch Fig. 16c) des Zwischenspeichers 1800 für eine Zuführeinrichtung 1850 bereitgestellt werden können (siehe oberes Bild der Fig. 12b). In vorteilhafter Weise kann hierfür der Zwischenspeicher 1800 mindestens einen Andock-Platz aufweisen, in besonders vorteilhafter Weise jedoch mehrere Andock-Plätze vorhalten.

Die Zuführeinrichtung 1850 kann nun die Paletten 300 aus dem Zwischenspeicher 1800 heraus einer Palettenaufnahme (beispielsweise eines Dreh-Schwenktisches oder einer anderen Palettenaufnahme) der Werkzeugmaschine 1000 zuführen bzw. eine bereits auf der Palettenaufnahme befindliche Palette 300 austauschen. Hierdurch ist es möglich, dass die Transporteinrichtung 100 nicht an dem Zwischenspeicher 1800 verbleiben muss, sondern diese für weitere Aufgaben zur Verfügung stehen kann.

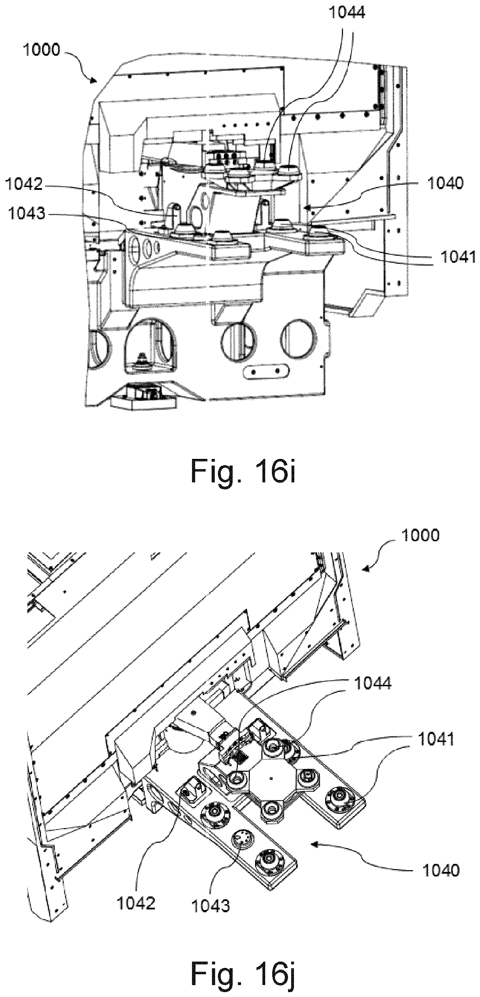

Neben dem Andocken an einer Aufnahme 1040, die durch eine horizontale Verfahrbewegung der Transporteinrichtung 100 angefahren wird und bei der das Andocken selbst auch durch eine horizontale Bewegung des Palettenhalters 350 gegenüber der Aufnahme 1040 stattfindet, kann die Palette 300/der Palettenhalter 350 auch über eine Aufnahme 1040 durch die Transporteinrichtung 100 positioniert werden und dann auf dieser Aufnahme 1040 abgesetzt werden (siehe unteres Bild der Fig. 12b), wobei die Aufnahme 1040 im Detail in Fig. 16i und 16j beschrieben ist.

Zunächst wird hierfür die Transporteinrichtung 100 an der Aufnahme 1040 vorpositioniert, wobei die Transporteinrichtung 100 (beispielsweise durch einen Mechanismus nach den Fig. 17a oder 17b) angehoben ist.

Danach erfolgt eine Zustellbewegung, bei der die Palette 300 oder der Palettenhalter 350 (beispielsweise mittels der Ausrichtelemente 351) gegen eine Zentriervorrichtung (beispielsweise Zentriervorrichtung 1042, siehe hierfür Fig. 16i und 16j) der Werkzeugmaschine 1000 geschoben werden und bereits hier eine Ausrichtung des Palettenhalters 350 erfolgen kann, da dieser beispielsweise schwimmend auf der Aufnahmevorrichtung 40 der Transporteinrichtung 100 gelagert ist.

Nun senkt sich die Transporteinrichtung 100 ab, wodurch eine Vorzentrierung stattfindet (Palette 300 bzw. der Palettenhalter 350 richten sich gegenüber der Aufnahme 1040 aus), da beispielsweise die Ausrichtelemente 351 des Palettenhalters 350 eine V-Form aufweisen.

Nun kann ein weiteres Absenken der Transporteinrichtung 100 erfolgen, bis die Palette 300 oder der Palettenhalter 350 auf den entsprechenden Konen (beispielsweise Palettenkonen 1044 und/oder Einrichtungskonen 1041, siehe Fig. 16i und 16j) aufgesetzt ist. Die Konen (Palettenkonen 1044 / Einrichtungskonen 1041) können nun beispielsweise eine Andockeinheit aufweisen, die die aufgenommene Palette 300 oder Einrichtung (hier Palettenhalter 350) verriegeln und sichern kann, und/oder auch Medienschnittstellen aufweisen, ähnlich wie dies bereits in Fig. 2d beschrieben ist oder in Fig. 16i und 16j beschrieben wird.

Danach kann die Transporteinrichtung 100 weiter abgesenkt werden, bis die Einrichtung/ Palette 300 von der Aufnahme 1040 aufgenommen wurde und die Transporteinrichtung 100 frei ist. Danach kann die Transporteinrichtung 100 entweder mit Palettenhalter 350 (und ohne Palette 300) oder komplett ohne Palettenhalter 350 und Palette 300 wieder von der Werkzeugmaschine 1000 (oder einer anderen Einheit, beispielsweise Rüstplatz, Magazinplatz etc.) wegfahren und eine andere/neue Aufgabe übernehmen.

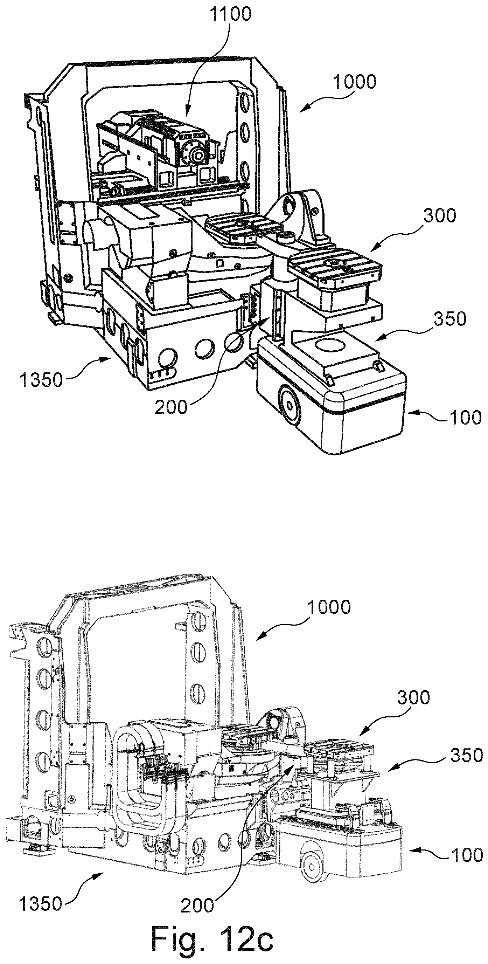

Fig. 12c zeigt schematisch eine erfindungsgemäße Transporteinrichtung 100 beim Beladen eines Palettenwechslers 200.

Dabei kann die Palette 300 bzw. der Palettenhalter 350 durch die Transporteinrichtung 100 an einen Palettenwechsler 200 mittels der bereits beschriebenen Aufnahme 1040 (siehe hierfür auch Fig. 16c) andocken, so dass der Palettenwechsler 200 unabhängig von der Transporteinrichtung 100 den Maschinentisch mit einer Palette 300 beladen kann.

Auch hier kann, neben dem Andocken an einer Aufnahme 1040 durch eine horizontale Verfahrbewegung der Transporteinrichtung 100 und das Andocken selbst durch eine horizontale Bewegung des Palettenhalters 350 gegenüber der Aufnahme 1040, die Palette 300/der Palettenhalter 350 auch über eine Aufnahme 1040 durch die Transporteinrichtung 100 positioniert werden und dann auf dieser Aufnahme 1040 abgesetzt werden (siehe unteres Bild der Fig. 12b), wobei die Aufnahme 1040 im Detail in Fig. 16i und 16j beschrieben ist.

Hierfür wird auf den bereits in Fig. 12b beschriebenen Ablauf zum Andocken/Aufnehmen einer Palette / eines Palettenhalters 350 an einer Aufnahme 1040 verwiesen.

Es sei an dieser Stelle zudem darauf hingewiesen, dass derartige Konzepte des (Zwischen-)Speicherns von Paletten 300 unabhängig von den gezeigten Maschinenkonzepten (Fig. 12b: Werkzeugmaschine 1000 mit Maschinenbett 1350 und vertikal angeordneter Arbeitsspindel 1100 und Dreh-Schwenktisch; Fig. 12c: Werkzeugmaschine 1000 mit Maschinenbett 1350 und horizontal angeordneter Arbeitsspindel 1100 und Dreh-Schwenktisch) sind und daher an jeglicher anderer Werkzeugmaschine 1000 ebenfalls Anwendung finden können.

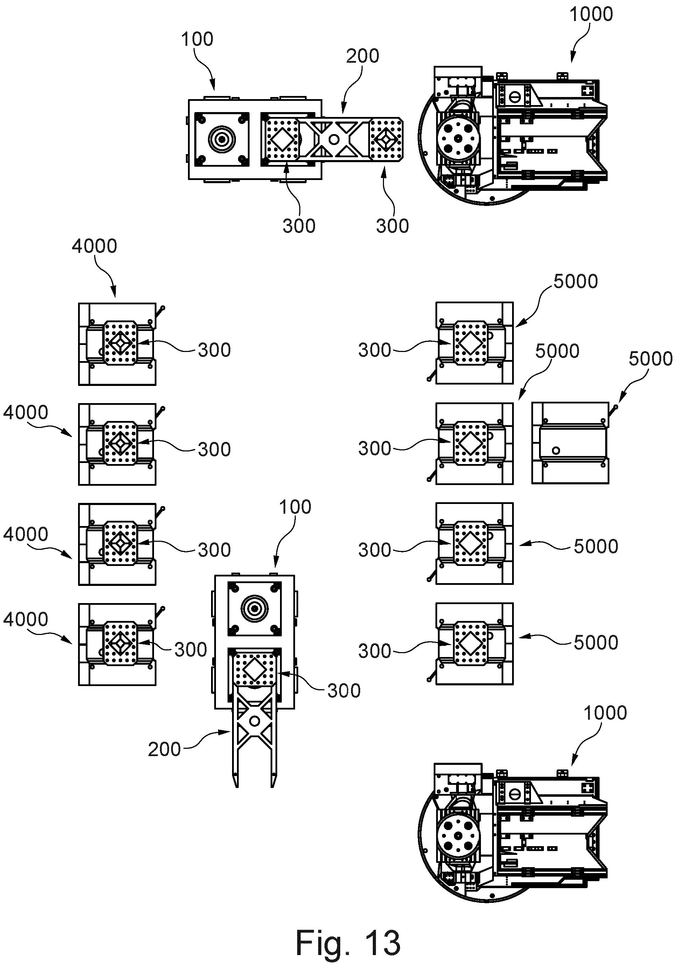

Fig. 13 zeigt schematisch eine beispielhafte Ausgestaltung eines Linearspeichers für Paletten-Handling mit mehreren Rüstplätzen 4000 und Ablageplätzen 5000, die von mehreren Transporteinrichtungen 100 mit entsprechenden Palettenwechslern 200 bedient und entsprechend mehrere Werkzeugmaschinen 1000 mit Paletten 300 beladen werden können. Hierbei können beispielsweise sowohl die Rüstplätze 4000 als auch die Ablageplätze 5000 als mehrstöckige Rüst- und Ablageplätze ausgestaltet sein.

Hierbei kann jede Transporteinrichtung 100 mit mehreren Paletten 300 beladen werden, wie dies beispielsweise durch einen entsprechenden Palettenwechsler 200 mit größerer Kapazität ermöglicht wird (wie beispielsweise in Figuren 5 bis 7 gezeigt) oder aber durch das Mitführen einer Palettenablage auf der Transporteinrichtung 100 (wie in Fig. 11 gezeigt). Weiterhin können aber auch mehrere Palettenwechsler 200 durch die jeweilige Transporteinrichtung 100 aufgenommen sein, um somit gleichzeitig mehrere Paletten 300 transportieren zu können.

Hierdurch kann beispielweise in vorteilhafter Weise erreicht werden, dass eine Vielzahl an Paletten 300 mit nur einer Transporteinrichtung 100 an beliebige Orte innerhalb der Produktionsstätte bzw. innerhalb des zu automatisierenden Bereiches gefahren werden kann. Hinzu kommt, dass die Transporteinrichtungen 100 ferner die Paletten 300 vor, neben oder hinter der jeweiligen Werkzeugmaschine 1000 ablegen und auch wieder holen können.

Insbesondere ermöglichen der flexible Einsatz und das hohe Maß an Automatisierung der Transporteinrichtungen 100 eine unbegrenzte Vielfalt, den Linearspeicher auszugestalten. Insbesondere bei der Verkettung von mehreren Werkzeugmaschinen 1000 verschiedenster Größen kann die Möglichkeit, das Layout des Linearspeichers frei zu gestalten, einen immensen Vorteil darstellen.

Ferner kann durch die Transporteinrichtungen 100 und ihre Überwachung der Umgebung durch entsprechende Sensoren auf eine Umhausung des Linearspeichers gänzlich verzichtet werden,

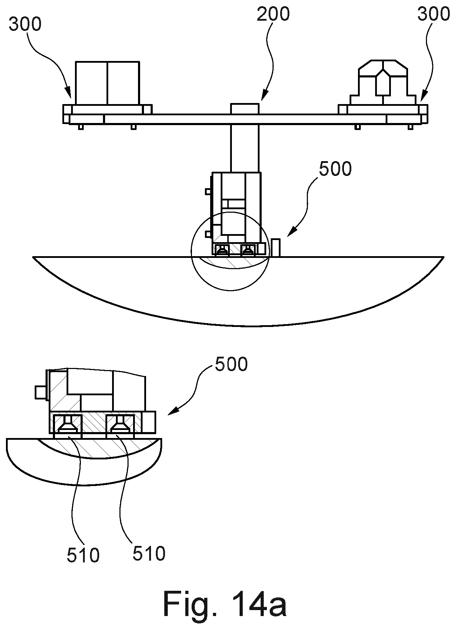

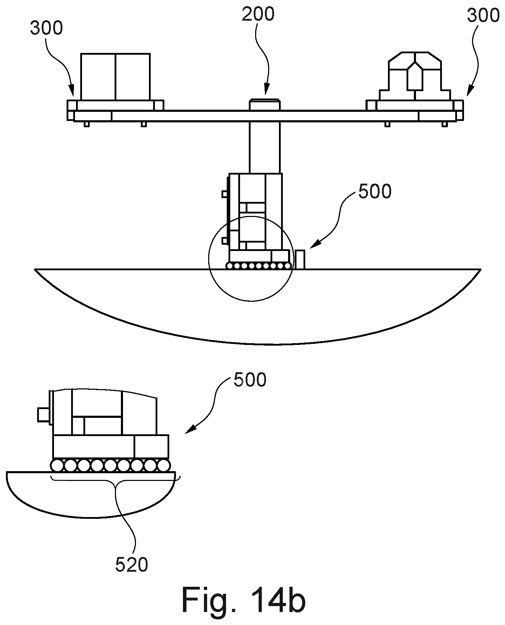

Figuren 14a und 14b zeigen schematisch eine Positionierung eines Palettenwechslers 200 an einem Ablageplatz 500 mittels konischer Aufnahmen 510 (Fig. 14a) und bei einem Ablageplatz 500 mit Rollentechnik 520 (Fig. 14b).

Dabei verfügen die Palettenwechsler 200 (wie an ihrem linken Rand angedeutet) über verschiedene Schnittstellen zur Kopplung des Palettenwechslers 200 an die Transporteinrichtung 100.

Die konischen Aufnahmen 510 können ferner den Palettenwechsler 200 zu allen Seiten positionieren, während bei dem Ablageplatz mit Rollentechnik 520 ein Tiefenanschlag vorgesehen werden muss, damit der Palettenwechsler 200 nicht von dem Ablageplatz 500 herunterfällt, wobei eine Positionierung des Palettenwechslers 200 in senkrechter Richtung zur Blattebene durch die Rollentechnik 520 nicht gewährleistet werden kann.

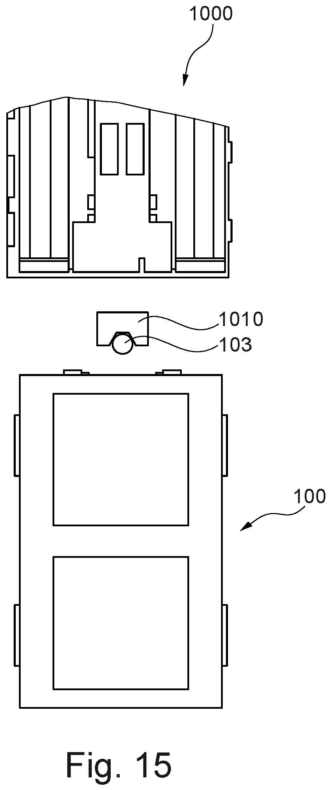

Fig. 15 zeigt schematisch eine Positionierung der erfindungsgemäßen Transporteinrichtung 100 an einer Werkzeugmaschine 1000 mittels eines Prismas 1010.

Dabei verfügt die Transporteinrichtung 100 ferner über ein entsprechendes Gegenstück 103 (hier ein zylindrisches Gegenstück), um in das Prisma mit dem Gegenstück 103 einzufahren und so eine genaue Positionierung vor der Werkzeugmaschine 1000 zu erreichen. Es können jedoch auch mehrere Prismen 1010 und entsprechend mehrere Gegenstücke 103 für eine derartige Positionierung der Transporteinrichtung 100 vor der Werkzeugmaschine 1000 verwendet werden, sowohl in eine Richtung positionierend (z.B. in Längsrichtung der Transporteinrichtung 100) als auch in eine Richtung senkrecht dazu (z.B. Querrichtung der Transporteinrichtung 100).

Es sei an dieser Stelle darauf hingewiesen, dass die oben genannten Ausgestaltungsmöglichkeiten der Positionierung der erfindungsgemäßen Transporteinrichtung 100 nicht auf die Kombination Prisma 1010 und zylindrisches Gegenstück 103 beschränkt ist. Vielmehr könnte beispielsweise ein Teil mit einer V-förmigen Kerbe (als Alternative zum Prisma 1010) ebenfalls Verwendung finden.

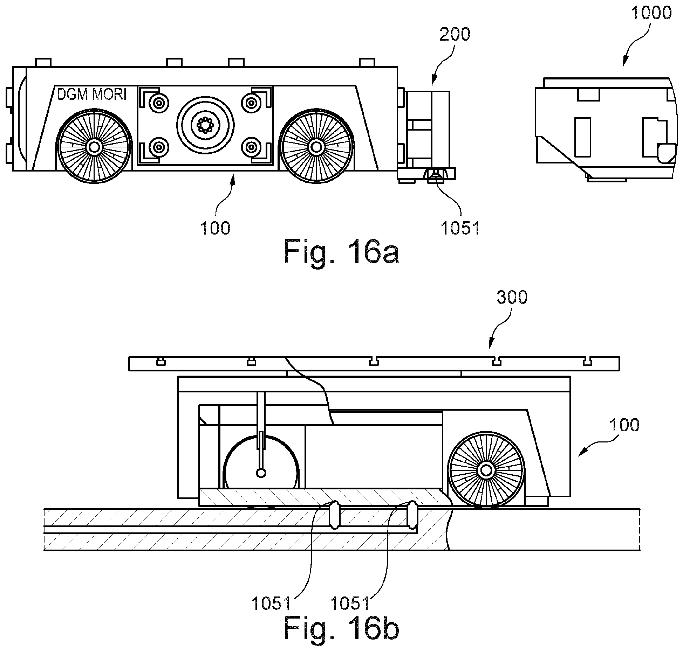

Fig. 16a zeigt schematisch eine Positionierung der erfindungsgemäßen Transporteinrichtung 100 an einer Werkzeugmaschine 1000 mittels konischer Aufnahmen 1051.

Dabei verfügt die Transporteinrichtung 100 über eine Höhenverstellung (hier nicht gezeigt, siehe dazu Figuren 17 bis 19), die es ermöglichen, die Handhabungseinrichtung (hier beispielsweise einen Palettenwechsler 200) auf die konischen Aufnahmen 1051 der Werkzeugmaschine 1000 zu setzen und so eine sehr genaue Positionierung der Handhabungseinrichtung vor der Werkzeugmaschine 1000 zu erreichen.

Ferner ermöglichen die konischen Aufnahmen 1051 eine Lastaufnahme der Handhabungseinrichtung, welche insbesondere dann von entscheidendem Vorteil ist, wenn die Handhabungseinrichtung bei ihrer Verwendung große Massen zu tragen hat, welche eventuell die Lastaufnahmefähigkeit der Transporteinrichtung 100 übersteigen würde, zum Beispiel bei Paletten 300 mit besonders großen bzw. schweren Werkstücken 1 und der auftretenden Belastung beim Entnehmen der Palette 300 mit dem Werkstück 1.

Vorzugsweise verfügt die Transporteinrichtung 100 über eine definierte Position vor der Werkzeugmaschine 1000, bzw. den Ablageplätzen 500 / Rüstplätzen. Die Positionierung kann mechanisch, signaltechnisch oder kombiniert gewährleistet sein.

Diese Positionierung kann vorzugsweise über n mechanische Indexe via horizontal angeordneter Bewegung(en) (siehe Fig. 15) oder vertikaler Bewegung(en) ausgeführt werden. Alternativ können hierfür auch Drehbewegung(en) genutzt, die Bewegungen miteinander gekoppelt oder nacheinander ausgeführt werden.

In einer beispielhaften Ausführung wird die Positionierung durch eine vertikale Bewegung gewährleistet (siehe hierzu im Detail die Figuren 17 bis 19).

Die Indexe können entweder mit den Werkzeugmaschinen 1000, den Ablageplätzen 500 und Rüstplätzen verbunden werden. Vorzugsweise werden die Indexe mit dem Hallenboden verbunden um keinerlei Störgrößen wie z. B. Schwingungen, Stöße auf die Werkzeugmaschine 1000 oder die Plätze zu bringen, während die Transporteinrichtung 100 positioniert wird.

Vorzugsweise werden die Indexe konenförmig ausgeführt (konische Aufnahmen 1051). Dadurch ist eine Positionierung in allen notwendigen Ebenen gewährleistet. Vorzugsweise sind die konischen Aufnahmen 1051 dabei so positioniert, dass sie nicht im eigentlichen Trittbereich vor der Werkzeugmaschine 1000 sind und damit den Bediener beim manuellen Arbeiten ergonomisch nicht behindern.

Vorzugsweise werden die konischen Aufnahmen 1051 dazu genutzt auch vertikal auftretende Lasten, die z. B. beim Palettenwechsel durch die zu entnehmende Palette 300 entstehen, aufzunehmen. Dadurch kann die Transporteinrichtung 100 auf die maximale Transportkapazität ausgelegt werden und muss keine durch Austauschvorgänge kurzfristig auftretenden Zusatzlasten aufnehmen.

Weiterhin können die konischen Aufnahmen 1051 (siehe hierzu auch Fig. 16b und 16c) dazu genutzt werden, eine Verbindung zwischen Werkzeugmaschine 1000, Plätzen und Transporteinrichtung 100 herzustellen. Diese Verbindung kann zur Signalübertragung oder zum Energieaustausch genutzt werden, falls dies nicht berührungslos gestaltet werden kann.

Weiterhin kann die o. g. Verbindung auch durch eine weitere Aufnahme realisiert werden, welche durch den Konenhub angedockt wird.

Zudem können die konischen Aufnahmen 1051 ver- und entriegelt werden um die Positionierung zusätzlich zu stabilisieren bzw. deren Genauigkeit zu erhöhen.

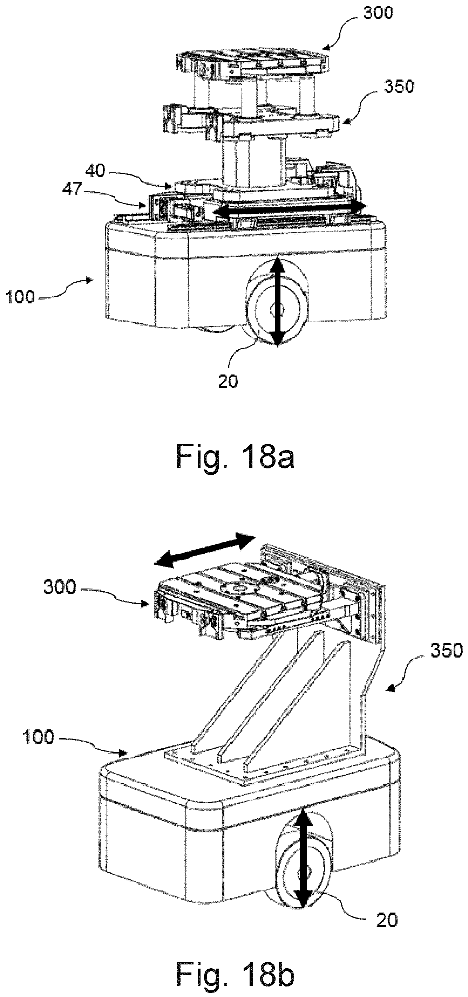

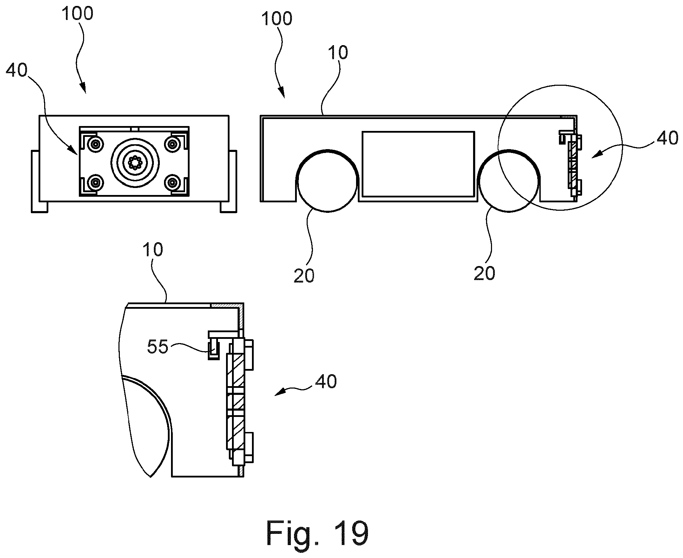

Die vertikalen Bewegungen der Transporteinrichtung 100 können durch Nutzung der auf der Transporteinrichtung 100 vorhandenen Medien angetrieben und angesteuert werden. Vorzugsweise kann jede der Aufnahmevorrichtungen 40 die Vertikalbewegung selbständig und unabhängig voneinander ausführen (siehe hierzu Fig. 19). Alternativ kann die Vertikalbewegung durch Anheben des Rahmens / Gestells des FTS relativ zu den Rädern erfolgen (siehe hierzu Figuren 17 und 18).

Die Hubbewegung kann frei alle notwendigen Positionen anfahren um einen geeigneten Ablauf zu finden. In einer beispielhaften Ausführung sind drei Hauptpositionen vorgesehen:
Hub oben: Position in welcher die Transporteinrichtung 100 verfahren kann.
Hub Mitte: Position in welcher die Handhabungseinrichtungen auf den Konen abgelegt sind.
Hub unten: Ablegen von Handhabungseinrichtungen / Materialträgern / Boxen direkt auf dem Boden.

Weiterhin kann die Hubbewegung auch dazu genutzt werden, die Transporteinrichtung 100 auf einer Ladestation (hier nicht gezeigt) anzudocken und dort den Aufladevorgang zu ermöglichen.

Weiterhin kann die Handhabungseinrichtung durch die Transporteinrichtung 100 temporär direkt an die Werkzeugmaschine 1000 übergeben werden. Die Handhabungseinrichtung wird dabei über die in den konischen Aufnahmen 1051 integrierte Schnittstelle (siehe hierzu auch Fig. 16b und 16c) zur Herstellung einer Verbindung von der Werkzeugmaschine 1000 versorgt und die Transporteinrichtung 100 kann weitere Aufgaben und andere Handhabungseinrichtungen übernehmen. In diesem Fall dient die Transporteinrichtung 100 als Zubringer von temporären Handhabungseinrichtungen für verschiedene Werkzeugmaschinen 1000.

Fig. 16b zeigt schematisch eine weitere Ausführungsform der erfindungsgemäßen Transporteinrichtung 100 bei einer Positionierung und Energie- und/oder Signalverbindungsschluss mittels konischer Aufnahmen 1051.

Dabei sind konische Aufnahmen 1051 der Werkzeugmaschine gezeigt, wobei diese, neben dem Positionieren der Transporteinrichtung 100, wenn diese sich mittels ihrer Hubzylinder (siehe hierfür Fig. 17 und 18) über den konischen Aufnahmen 1051 absenkt, eine Verbindung schließen können, über diese zum Beispiel Energie und/oder Signale zur Steuerung bzw. Überwachung der Transporteinrichtung 100 an die Transporteinrichtung 100 und umgekehrt von der Transporteinrichtung 100 an die Werkzeugmaschine 1000 übertragen werden können.

Durch die konischen Aufnahmen 1051 könnte beispielsweise, wie hier gezeigt, die Palette 300 oder aber eine beliebige Handhabungseinrichtung präzise an der Werkzeugmaschine 1000 positioniert werden und, und das ist im besonderen Maße vorteilhaft, eine Steuerung der Transporteinrichtung 100 bzw. der aufgenommenen Palette 300 erfolgen, ohne dabei den internen Energiespeicher (hier nicht gezeigt) der Transporteinrichtung 100 zu belasten, da die Energie seitens der Werkzeugmaschine 1000 bereitgestellt und über die beschriebene Verbindung in die Transporteinrichtung 100 eingespeist wird.

Ferner kann die Transporteinrichtung 100 über eine Art Ladestation verfügen, an der es seine Energiequellen (Energiespeicher 30; hier nicht gezeigt) auffüllen oder erneuern kann. Dies kann beispielsweise durch das Andocken an den konischen Aufnahmen 1051 erfolgen.

Fig. 16c zeigt schematisch eine weitere Ausführungsform der erfindungsgemäßen Transporteinrichtung 100, bei der ein Palettenhalter 350 mit einer Palette 300 mittels einer Transporteinrichtung 100 an eine Palettenhalteraufnahme 1040 andockt. Dabei kann die Palettenhalteraufnahme 1040 beispielsweise an der Werkzeugmaschine 1000 vorgesehen sein.

Insbesondere unterscheidetsich diese Ausführungsform von der in Fig. 16a gezeigten dadurch, dass der Palettenhalter 350 (oder eine andere Einrichtung, die durch die Transporteinrichtung 100 transportiert wird/werden kann) durch eine Bewegung der Transporteinrichtung 100 in der horizontalen Ebene an der Palettenhalteraufnahme 1040 angedockt wird.

Das Andocken kann beispielsweise mittels konischer Aufnahmen 1051 (hier beispielsweise Spannkonen) an der Palettenhalteraufnahme 1040 oder an dem Palettenhalter 350 und entsprechend ausgebildeten konischen Vertiefungen 355 an dem Palettenhalter 350 oder an der Palettenhalteraufnahme 1040 erfolgen. Die bereits beschriebenen Vorteile wie der Ausrichtung/Zentrierung des Palettenhalters 350 gegenüber der Palettenhalteraufnahme 1040 ergeben sich durch die konischen Aufnahmen 1051 / konischen Vertiefungen 355 auch hier.

Nach erfolgtem Andocken des Palettenhalters 350 (oder einer anderen Einrichtung, die durch die Transporteinrichtung 100 transportiert wird/werden kann) kann sich die Transporteinrichtung 100 beispielsweise wieder von der transportierten Einrichtung (hier Palettenhalter 350) abkoppeln und für eine andere Transportaufgabe verwendet werden.

Ferner kann der Palettenhalter 350, wie beispielsweise auch bei der Transporteinrichtung 100 selbst oder bei der Handhabungseinrichtung, eine Schnittstelle 357 zur Übertragung von mechanischer Energie und/oder elektrischer, hydraulischer und/oder pneumatischer Energie zwischen der Palettenhalteraufnahme 1040 und dem Palettenhalter 350 aufweisen. Entsprechend kann die Palettenhalteraufnahme 1040 ein Gegenstück (Schnittstelle 358) zur Schnittstelle 357 des Palettenhalters 350 aufweisen.

Ferner könnten aber auch beispielsweise Betriebsmittel wie Kühl-Schmierstoff von der Palettenhalteraufnahme 1040 dem Palettenhalter 350 zugeleitet werden. Hierfür können beispielsweise entsprechende Befestigungsmittel und elektrische und/oder Fluide leitende Anschlüsse (vergleichbar den Befestigungsmitteln und Anschlüssen 43) vorgesehen sein.

Zudem kann in vorteilhafter Weise die Schnittstelle 357 eine Einrichtung zur kontaktlosen Übertragung von Signalen zwischen der Palettenhalteraufnahme 1040 der Werkzeugmaschine 1000 (oder einer anderen Vorrichtung) und dem Palettenhalter 350 aufweisen. Diese Einrichtung zur kontaktlosen Signalübertragung kann beispielsweise als Sender-/Empfängerspule ausgebildet sein, oder aber als Induktivkoppler mit I/O-Link zur berührungslosen Übertragung der Signale.

Dabei kann die Einrichtung an jeder beliebigen Stelle an der Schnittstelle 357 oder auch außerhalb der Schnittstelle 357 vorgesehen sein, wobei in vorteilhafter Weise die Einrichtung zur kontaktlosen Signalübertragung zentral/mittig in der Schnittstelle 357 vorgesehen ist.

Es sei an dieser Stelle jedoch darauf hingewiesen, dass die als Palettenhalteraufnahme 1040 bezeichnete Aufnahme an der Werkzeugmaschine 1000 aber auch eine Vielzahl anderer Vorrichtungen, Handhabungseinrichtungen oder dergleichen, oder auch die Transporteinrichtung 100 selbst durch Andocken aufnehmen kann. Die Palettenhalteraufnahme 1040 ist damit nicht auf die Aufnahme von Palettenhaltern 350 beschränkt.

Ferner sei darauf hingewiesen, dass in besonders bevorzugter Weise die für das Andocken beschriebene Aufnahme (mit konischen Aufnahmen 1051, konischen Vertiefungen 355, und Schnittstellen 357/358) mit der Aufnahmevorrichtungen 40 (siehe Fig. 2) einheitlich bzw. standardisiert ausgeführt ist, so dass beliebige Komponenten bzw. Handhabungseinrichtungen mit entsprechend einheitlich ausgebildeten Aufnahmeelementen angebracht werden können und dabei im Wesentlichen die gleichen Schnellkupplungen zur Energie- bzw. Signalübertragung genutzt werden können.

Fig. 16d zeigt schematisch eine weitere Ausführungsform der erfindungsgemäßen Transporteinrichtung 100 mit einem Palettenhalter 350.

Dabei weist die Transporteinrichtung 100 einen Palettenhalter 350 auf, der nicht von einer Werkzeugmaschine 1000 (oder von einem Rüstplatz, Magazinplatz etc.) aufgenommen werden kann und stets auf der Transporteinrichtung 100 verbleibt.

Dieser Palettenhalter 350 ist dazu eingerichtet, eine Palette 300 auf eine Aufnahme 1040 der Werkzeugmaschine 1000 zu setzen, in dem die Palette 300 durch die Transporteinrichtung 100 (in angehobenem Zustand) über der Aufnahme 1040 positioniert wird und dann die Transporteinrichtung 100 abgesenkt wird, bis die Palette 300 von der Aufnahme 1040 aufgenommen ist.

Bereits beim Positionieren der Palette 300 über der Aufnahme 1040 wird eine Ausrichtung (Vorzentrierung) der Palette 300 gegenüber der Aufnahme 1040 durch Ausrichtelemente 301, die sich an der Palette 300 befinden, vorgenommen. Diese Ausrichtelemente 301 werden bei der Positionierungder Palette 300 über der Aufnahme 1040 gegen eine Zentriervorrichtung 1045 gedrückt, so dass die Palette 300 vollständig an der Zentriervorrichtung 1045 anliegt. Wird nun die Palette 300 durch die Transporteinrichtung 100 weiter abgesenkt, so fädelt sich die Zentriervorrichtung 1045 in die Ausrichtelemente 301 ein (da diese beispielsweise eine V-förmige Aussparung aufweisen), so dass auch ein seitlicher Versatz der Palette 300 in Relation zur Aufnahme 1040 ausgeglichen wird. Hierdurch ist die Palette 300 gegenüber der Aufnahme 1040, und insbesondere gegenüber den Konen (hier Palettenkonen 1044), vorzentriert.

Beispielsweise kann die Palette 300 selbst auf dem Palettenhalter 350 (der beispielsweise gabelförmig ausgestaltet sein kann) durch ein Druckstück (hier nicht gezeigt) in Richtung der Ausrichtelemente 301 vorgespannt auf der Gabel aufliegen. Diese Vorspannung kann beispielsweise dazu vorteilhaft genutzt werden, dass die Palette 300 auf der Gabel des Palettenhalters 350 gesichert/fixiert ist.

Wird die Palette 300 bzw. die Ausrichtelemente 301 gegen die Zentriervorrichtung 1045 der Aufnahme 1040 gedrückt (durch die Positionierbewegung der Transporteinrichtung 100), so drückt es das Druckstück weiter zusammen und die Fixierung der Palette 300 gegenüber der Gabel löst sich. So kann ein Absetzen der Palette 300 auf der Aufnahme 1040 erfolgen.

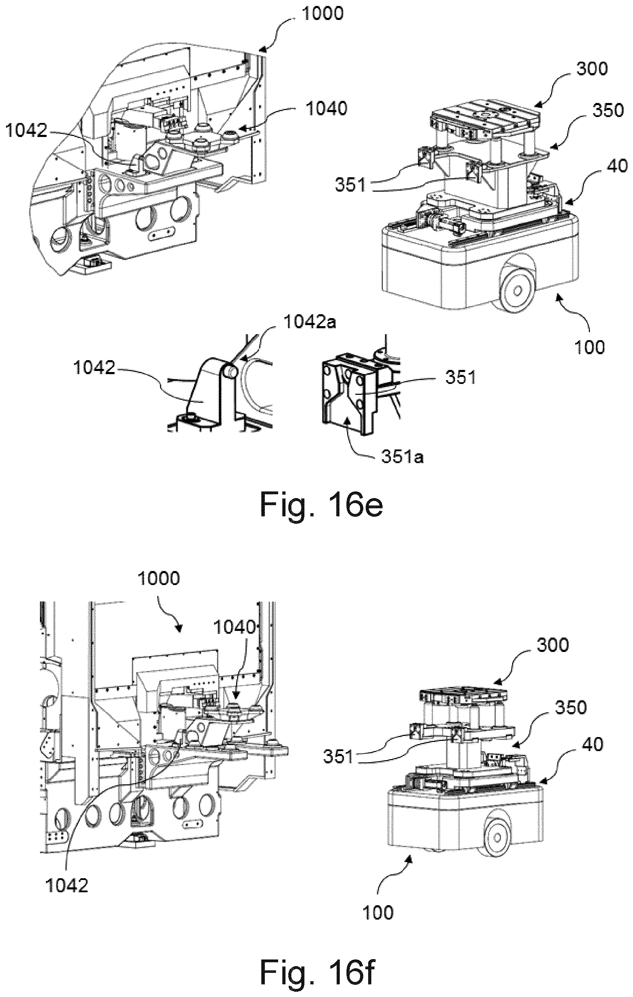

Fig. 16e zeigt schematisch eine weitere Ausführungsform der erfindungsgemäßen Transporteinrichtung 100 mit einem Palettenhalter 350.

Dabei ist der Ablauf der Positionierung/Vorzentrierung der Palette 300 gegenüber der Aufnahme 1040 im Wesentlichen gleich wie der in Fig. 16d beschriebene Ablauf, jedoch wird dabei nicht die Palette 300 selbst an der Aufnahme 1040 ausgerichtet/vorzentriert, sondern der Palettenhalter 350, der die Palette 300 trägt.

Auch hier kann der Palettenhalter 350 nicht an der Werkzeugmaschine 1000 (oder an einer anderen Einrichtung) abgesetzt werden und verbleibt auf der Aufnahmevorrichtung 40 der Transporteinrichtung 100.

Für die Ausrichtung/Vorzentrierung der Palette 300 gegenüber der Aufnahme 1040 weist der Palettenhalter 350 nun Ausrichtelemente 351 auf, die bei der Positionierbewegung der Transporteinrichtung 100 gegenüber der Aufnahme 1040 gegen die Zentriervorrichtung 1042 gedrückt werden und ebenfalls beispielsweise eine V-förmige Aussparung aufweisen, in die die Zentriervorrichtung 1042 eingefädelt werden kann. Hierdurch kommt es zur Vorzentrierung/Ausrichtung des Palettenhalters 350 gegenüber der Aufnahme 1040, was die Grundlage für die Ausrichtung der Palette 300 gegenüber der Aufnahme 1040 bildet.

Gleichzeitig kann durch das Drücken des Palettenhalters 350 gegen die Aufnahme 1040 beispielsweise ein Druckstück (hier nicht gezeigt, vergleichbar aber mit dem in Fig. 2b und 2c beschrieben) weiter zusammengedrückt werden, um den Palettenhalter 350 aus seiner Fixierung gegenüber der Aufnahmevorrichtung 40 zu lösen und eine Positionierung des Palettenhalters 350 gegenüber der Aufnahme 1040 zu ermöglichen.

Senkt sich nun die Transporteinrichtung 100 nach erfolgter Vorzentrierung der Palette 300 weiter ab, kann die Palette 300 auf den entsprechenden Konen (beispielsweise Palettenkonen 1044, siehe hierzu Fig. 16i und 16j) abgesetzt werden. Die Transporteinrichtung 100 ist nun frei und kann sich einer neuen Aufgabe zuwenden, beispielsweise eine neue Palette aufnehmen.

Fig. 16f zeigt schematisch weitere Ausführungsform der erfindungsgemäßen Transporteinrichtung 100 mit einem Palettenhalter 350, ähnlich wie dies bereits aus Fig. 16e bekannt ist.

Jedoch kann nun der Palettenhalter 350 samt Palette 300 an der Werkzeugmaschine 1000 (oder einer anderen Einrichtung) abgelegt werden.

Hierfür wird, wie bereits in Fig. 16e beschrieben, der Palettenhalter 350 gegenüber der Aufnahme 1040 durch die Ausrichtelemente 351 und die Zentriervorrichtung 1042 ausgerichtet/vorzentriert. Auch hier kann es vorteilhaft sein, wenn dabei ein Druckstück weiter zusammengedrückt wird und so zum einen die Positionierung des Palettenhalters 350 gegenüber der Aufnahme 1040 ermöglicht, und aber auch gleichzeitig das Abheben des Palettenhalters 350 von der Aufnahmevorrichtung 40 ermöglicht.

Senkt sich nun die Transporteinrichtung 100 weiter ab, so kann beispielsweise die Palette 300 direkt von der Aufnahme 1040 (Palettenkonen 1044) aufgenommen werden, oder aber es wird zunächst der Palettenhalter 350 samt Palette 300 von der Aufnahme 1040 (Einrichtungskonen 1041, siehe Fig. 16i und 16j) aufgenommen und danach erfolgt eine Aufnahme der Palette 300 mittels der Palettenkonen 1044.

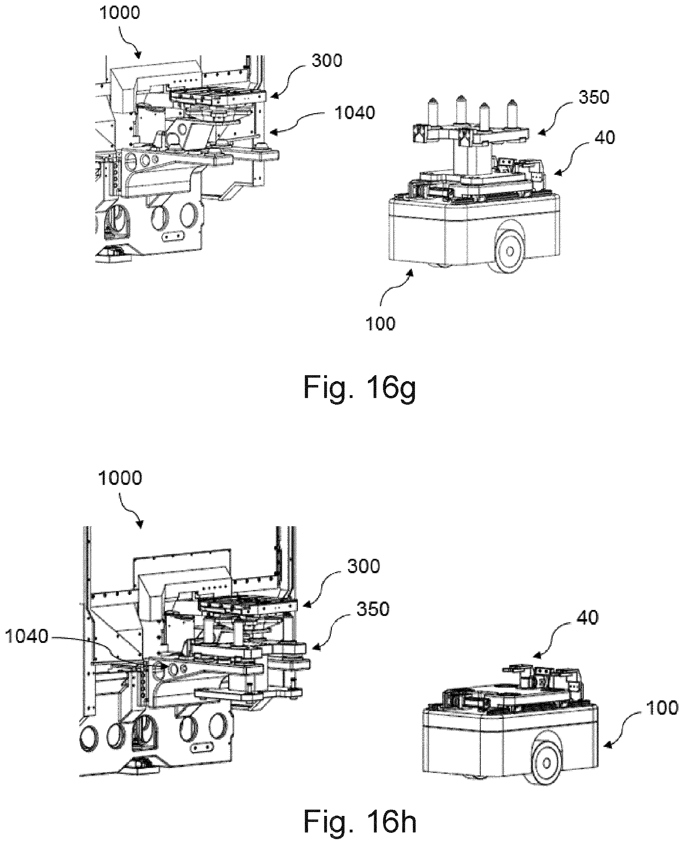

Fig. 16g zeigt nun den Zustand der erfindungsgemäßen Transporteinrichtung 100 aus Fig. 16f, wenn lediglich die Palette 300 von der Aufnahme 1040 aufgenommen wurde. Die Transporteinrichtung 100 kann mit dem auf der Aufnahmevorrichtung 40 aufgenommenen Palettenhalter 350 wieder von der Werkzeugmaschine 1000 wegfahren und eine neue Aufgabe übernehmen.

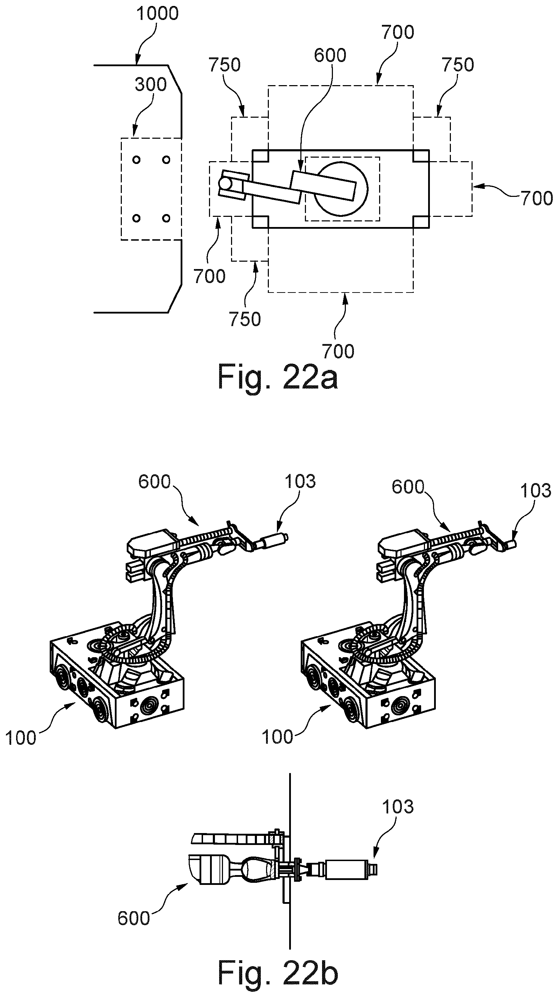

Fig. 16h zeigt nun den Zustand der erfindungsgemäßen Transporteinrichtung 100 aus Fig. 16f, wenn der Palettenhalter 350 samt Palette 300 von der Aufnahme 1040 aufgenommen wurde. Die Transporteinrichtung 100 kann nun wieder von der Werkzeugmaschine 1000 wegfahren und eine neue Aufgabe übernehmen, indem es beispielsweise eine neue Einrichtung (beispielsweise einen neuen Palettenhalter 350, eine Handhabungseinrichtung, eine andere Einrichtung wie beispielsweise in Fig. 22 bis 36 gezeigt) aufnimmt.

Die in den vorherigen Figuren und Ausführungsbeispielen gezeigten und beschriebenen Ausführungsformen der erfindungsgemäßen Transporteinrichtung 100 sind jedoch nicht auf diese beschränkt und können ausdrücklich beliebig miteinander kombiniert werden.

Fig. 16i zeigt eine Konfiguration einer Aufnahme 1040 einer Werkzeugmaschine 1000 zur Aufnahme eines Palettenhalters 350 und/oder Palette 300.

Dabei weist die Aufnahme neben mindestens einem Palettenkonus 1044 zur Aufnahme einer Palette 300 auch mindestens einen Einrichtungskonus 1041 auf, durch den die Aufnahme 1040 ganzer Einrichtungen (wie beispielsweise einen Palettenhalter 350) ermöglicht wird, so dass die Transporteinrichtung 100, nach dem Absetzen der Einrichtung an der Werkzeugmaschine 1000, wieder für andere Aufgaben verwendet werden kann.

Weiterhin weist die Aufnahme 1040 mindestens eine Zentriervorrichtung 1042 auf, an der sich die Einrichtung gegenüber der Aufnahme 1040 ausrichten kann, bevor sie auf den mindestens einen Einrichtungskonus 1041 und/oder die Palette 300 auf den mindestens einen Palettenkonus 1044 gesetzt/abgelegt wird.

Dabei kann sowohl der mindestens eine Palettenkonus 1044 als auch der mindestens eine Einrichtungskonus 1041 über eine Andockeinheit verfügen, die die Palette 300 bzw. die Einrichtung verriegelt/fixiert und/oder Medienanschlüsse, ähnlich wie in Fig. 2d gezeigt, aufweist.

Ferner kann die Aufnahme 1040 auch eine oder mehrere separate Medienschnittstellen 1043 aufweisen, die zur Übertragung von Signalen und/oder Energie von der Werkzeugmaschine 1000 an die aufgenommene Einrichtung eingerichtet ist.

Dabei kann die Medienschnittstelle 1043 berührungslos (beispielsweise induktiv oder optisch) Signale und/oder Energie übertragen, als gesteckte Verbindung/en ausgeführt sein, per Funk Übertragungen vornehmen. Eine beliebige Kombination daraus ist ebenso möglich wie die Erweiterung um die Zuleitung von Fluiden (beispielsweise Kühl-Schmierstoff) oder dergleichen.

Ferner kann die Aufnahme 1040 auch noch zusätzlich mindestens eine Zentriervorrichtung 1045 (hier nicht gezeigt, siehe hierfür Fig. 16d) zur Ausrichtung der Palette 300 gegenüber der Aufnahme 1040 aufweisen.

Fig. 16j zeigt die Konfiguration der Aufnahme 1040 einer Werkzeugmaschine 1000 wie in Fig. 16i, jedoch aus einer anderen Perspektive zur besseren Übersicht der einzelnen Komponenten der Aufnahme 1040.

Fig. 17a zeigt schematisch eine Ausführungsform der erfindungsgemäßen Transporteinrichtung 100 mit einer Höhenverstellung der erfindungsgemäßen Transporteinrichtung 100 mittels Hubzylindern 50.

Dabei wird das Fahrgestell 10 durch die Hubzylinder 50 gegenüber den Rädern angehoben, so dass auch die aufgenommenen Handhabungseinrichtungen in ihrer Höhe relativ zu den Rädern 20 bzw. zu der Werkzeugmaschine 1000 (hier nicht gezeigt) verändert werden.

Fig. 17b zeigt schematisch eine weitere Ausführungsform der erfindungsgemäßen Transporteinrichtung 100 mit einer Höhenverstellung der erfindungsgemäßen Transporteinrichtung mittels Hubzylindern 50.

Hierin soll eine Alternative gezeigt werden, bei der neben den Hubzylindern 50 ferner ein Fahrwerk 60 (z.B. auf Basis eines Hebelmechanismus) vorgesehen ist, um das Fahrgestell 10 der Transporteinrichtung gegenüber den Rädern 20 herauszuheben, so dass auch die mitgeführten Handhabungseinrichtungen in ihrer Höhe verändert werden.

Fig. 18a zeigt schematisch eine Ausführungsform der erfindungsgemäßen Transporteinrichtung 100 mit einem Palettenhalter 350 und einer Palette 300.

Dabei soll verdeutlicht werden, welche Bewegungen die Transporteinrichtung 100 bei den Absetz-/Aufnahmevorgängen zum Absetzen /Aufnehmen einer Palette 300 von einer Aufnahme 1040 (hier nicht gezeigt) vollzieht.

Dabei wird die Transporteinrichtung 100 mittels eines Mechanismus, wie in Fig. 17a und 17b gezeigt, gegenüber dem Rad bzw. den Rädern 20 angehoben (Fahrwerkhub, senkrecht dargestellter Pfeil), um entsprechend die Palette 300 und/oder den Palettenhalter 350 über einer Aufnahme 1040 zu positionieren und sie anschließend durch Absenken der Transporteinrichtung 100 auf der Aufnahme 1040 abzusetzen.

Bei der Positionierung kann es dabei zum Kontakt zwischen Palettenhalter 350 oder Palette 300 zur Ausrichtung des Palettenhalters 350/der Palette 300 gegenüber der Aufnahme kommen, so dass ferner eine Positionierbewegung (fast waagerechter Pfeil) des Palettenhalters 350 gegenüber der Aufnahmevorrichtung 40 der Transporteinrichtung 100 erfolgt. Diese Positionierbewegung kann jedoch davon abhängig sein, inwieweit ein Antrieb 47 (wie in Fig. 2b beschrieben) zur Unterstützung für die Fixierung und/oder Positionierung des Palettenhalters 350 gegenüber der Aufnahmevorrichtung 40 der Transporteinrichtung 100.

Fig. 18b zeigt schematisch eine weitere Ausführungsform der erfindungsgemäßen Transporteinrichtung 100 mit einem Palettenhalter 350 und einer Palette 300.

Auch hier wird die Transporteinrichtung 100 mittels eines Mechanismus, wie in Fig. 17a und 17b gezeigt, gegenüber dem Rad bzw. den Rädern 20 angehoben (Fahrwerkhub, senkrecht dargestellter Pfeil), um entsprechend die Palette 300 über einer Aufnahme 1040 zu positionieren und sie anschließend durch Absenken der Transporteinrichtung 100 auf der Aufnahme 1040 abzusetzen.

Bei der Positionierung kann es dabei zum Kontakt zwischen der Palette 300 zur Ausrichtung der Palette 300 gegenüber der Aufnahme kommen, so dass ferner eine Positionierbewegung (fast waagerechter Pfeil) der Palette 300 gegenüber dem Palettenhalter 350 erfolgt. Dabei kann diese Bewegung gegen ein Druckstück (ähnlich wie das Druckstück 45 in Fig. 2b und 2c beschrieben) wirken, das dadurch weiter eingedrückt wird und die Fixierung der Palette 300 gegenüber dem Palettenhalter 350 löst und eine Ausrichtung der Palette 300 gegenüber der Aufnahme 1040 sowie das Aufnehmen der Palette durch die Aufnahme 1040 ermöglicht.

Fig. 19 zeigt schematisch eine Ausführungsform der erfindungsgemäßen Transporteinrichtung 100 mit einer Höhenverstellung der Aufnahmevorrichtung 40 zur Aufnahme von Handhabungseinrichtungen der erfindungsgemäßen Transporteinrichtung 100.

Hier wiederum wird nicht die Lage des Fahrgestells 10 gegenüber den Rädern 20 der Transporteinrichtung 100 verändert, sondern die Aufnahmevorrichtung 40 ändert ihre relative Lage gegenüber dem Fahrgestell 10 bzw. gegenüber des Plattformträgers.

Dies hat den Vorteil, dass die Hubzylinder 55 kleiner ausgestaltet sein können, da sie nicht noch das Gewicht des Fahrgestells 10 und der anderen aufgenommenen Handhabungseinrichtungen und weitere Zusatzgewichte tragen müssen.

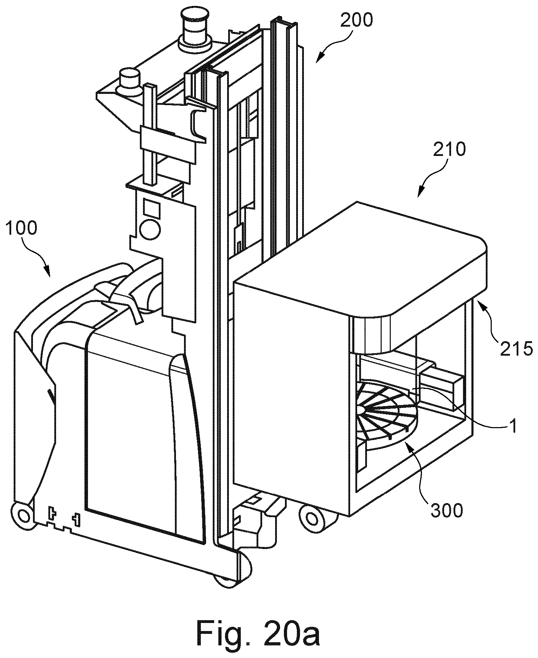

Fig. 20a zeigt schematisch eine weitere Ausführungsform der erfindungsgemäßen Transporteinrichtung 100 mit einem Palettenwechsler 200 und einer Haube 210 zum Schutz der transportierten Palette 300, vorzugsweise zum Schutz aller Seiten der Palette 300.

Dabei schützt die Haube 210 die transportierte Palette 300 vor äußeren Einwirkungen wie Schmutz, Luftströmungen oder aber auch gröberen mechanischen Einwirkungen etc. Umgekehrt schützt die Haube 210 aber ebenso die Umgebung vor eventuell von der Palette 300 herabfallenden Spänen oder abtropfendem Kühl-Schmierstoff, die beispielsweise nach einer erfolgten Bearbeitung eines Werkstücks 1 auf der Palette 300 noch an der Palette 300 anhaften könnten.

Hierfür kann zudem die Haube 210 an ihrer Öffnung, durch die die Palette 300 von dem Palettenwechsler 200 in die Haube 210 eingebracht wird, eine Verschließeinrichtung 215 aufweisen, um die Öffnung der Haube 210 zu verschließen.

Hierfür kann die Verschließeinrichtung 215 in der Form eines Rolltores, zumindest einer Falttür, zumindest einer Flügeltür, einer um eine horizontale Achse schwenkbare Klappe, oder einer Schiebetür ausgebildet sein. Die genannte Aufzählungsoll jedoch nicht als abschließend verstanden werden und kann durch weitere Ausgestaltungsmöglichkeiten ergänzt werden.

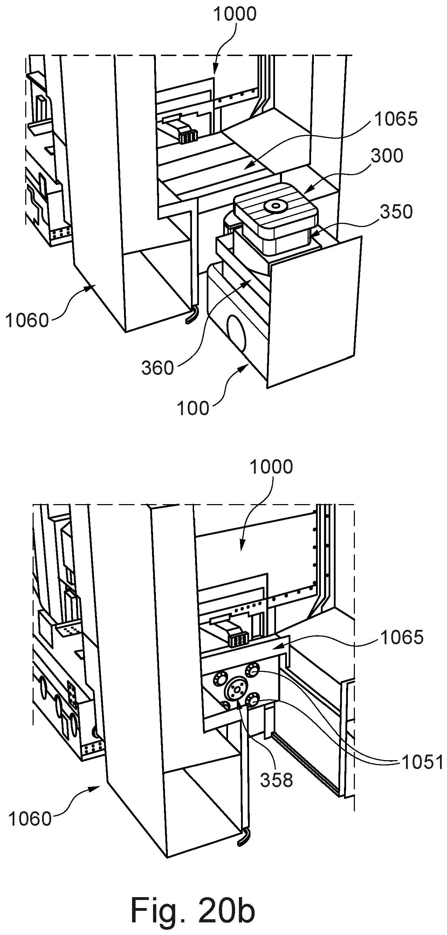

Fig. 20b zeigt eine weitere Ausführungsform der erfindungsgemäßen Transporteinrichtung 100, die eine Palette 300 in einen Arbeitsraum einer Werkzeugmaschine 1000 transportiert.

Dabei ist der Arbeitsraum durch eine Umhausung 1060 gegenüber der Umgebung abgegrenzt und weist an einer Seite, hier beispielsweise die Stirnseite der Werkzeugmaschine 1000, eine Öffnung auf, durch die hindurch beispielsweise ein Maschinenbediener in dem Arbeitsraum hantieren kann und durch die hindurch die Palette 300 in den Arbeitsraum der Werkzeugmaschine 1000 eingebracht wird. Zum Schließen dieser Öffnung kann beispielsweise ein Rolltor, eine Schiebetür, eine einflügelige oder zweiflügelige Drehtür oder eine vergleichbare Einrichtung verwendet werden.

Weiterhin weist die Werkzeugmaschine 1000, insbesondere die Umhausung 1060 einen Zugang auf, der sich vom Hallenboden bis hin zum Arbeitsraum erstreckt und in den die Transporteinrichtung 100 einfahren kann, um beispielsweise eine Palette 300 in den Arbeitsraum der Werkzeugmaschine 1000 einzubringen.

Damit der Zugang für die Transporteinrichtung 100 vor Spänen und/oder Kühl-Schmierstoffen geschützt ist, insbesondere während der Bearbeitung des auf der Palette 300 transportierten Werkstücks, kann die Transporteinrichtung 100 bzw. der Palettenhalter 350 zudem eine Auffangabdeckung 360 zum Auffangen der Späne und/oder des Kühl-Schmierstoffes aufweisen. In vorteilhafter Weise kann dann die Auffangabdeckung 360 den Zugang am oberen Ende (Übergang von Zugang zum Arbeitsraum) abschließen, so dass Späne und Kühl-Schmierstoff, die sich im Arbeitsraum verteilen / verteilt haben, **in** der Auffangabdeckung 360 der Transporteinrichtung 100 bzw. des Palettenhalters 350 aufgefangen werden.

Zudem kann es dabei möglich sein, dass eine Abdeckblende, die sich bei der Einfahrt der Transporteinrichtung 100 in den Zugang an dem dem Zugang abgewandten Ende der Transporteinrichtung 100 bzw. des Palettenhalters 350 befindet, um den Zugang von außen zusätzlich zu verschließen, nachdem die Transporteinrichtung 100 in den Zugang der Umhausung 1060 gefahren ist.

Wird jedoch die Palette 300 durch die Transporteinrichtung 100 aus dem Arbeitsraum herausgenommen, so können noch immer Späne und Kühl-Schmierstoff beispielsweise von den Innenseiten der Wände der Umhausung 1060 abfallen/ablaufen und sich im Bereich des Zugangs sammeln. Um nun zu vermeiden, dass diese Späne/Kühl-Schmierstoffe den Zugang für die Transporteinrichtung 100 verunreinigen, kann es vorteilhaft sein, eine Stahlabdeckung 1065 an dem Übergang des Zugangs der Umhausung 1060 zu dem Arbeitsraum der Werkzeugmaschine 1000 vorzusehen, die bei Einfahrt der Transporteinrichtung 100 in den Zugang durch die Transporteinrichtung 100 (oder durch die von der Transporteinrichtung 100 getragenen Handhabungseinrichtung wie beispielsweise der Palettenhalter 350, etc.) zurückgeschoben wird, um die Palette 300 bzw. den Palettenhalter 350 in dem Arbeitsraum der Werkzeugmaschine 1000 zu positionieren/einzubringen (siehe hierfür beispielsweise das untere Bild der Fig. 20b).

Dabei kann die Stahlabdeckung in vorteilhafter Weise mehrere ineinander verschiebbare Segmente aufweisen, um im zusammengeschobenen Zustand relativ kompakt zu sein. Beim Ausfahren der Transporteinrichtung 100 aus dem Zugang kann beispielsweise ein Federmechanismus (hier nicht gezeigt) die Segmente bzw. insgesamt die Stahlabdeckung 1065 für das Verschließen des oberen Endes des Zugangs wieder herausschieben (siehe hierfür beispielsweise das obere Bild der Fig. 20b).

Ferner kann die Stahlabdeckung 1065 an ihrem Ende, das der in den Zugang einfahrenden Transporteinrichtung 100 zugewandt ist, einen Abdeckungsabschnitt aufweisen, der Ausschnitte in Form der für das Andocken genutzten Aufnahme (aufweisend die konischen Aufnahmen 1051/konischen Vertiefungen 355 und die Schnittstellen 357/358; siehe hierfür auch Fig. 16c) aufweist.

Der Abdeckungsabschnitt wird, wie die Stahlabdeckung 1065 selbst auch, beim Einfahren der Transporteinrichtung 100 verschoben, wobei durch die Ausschnitte in dem Abdeckungsabschnitt die konischen Aufnahmen 1051 und entsprechend die Schnittstelle 358 der Aufnahme der Werkzeugmaschine 1000 hindurchtritt, so dass die Transporteinrichtung 100 bzw. die von der Transporteinrichtung 100 getragene Handhabungseinrichtung (beispielsweise ein Palettenhalter 350; siehe auch Fig. 16c) an der Aufnahme der Werkzeugmaschine 1000 andocken kann.

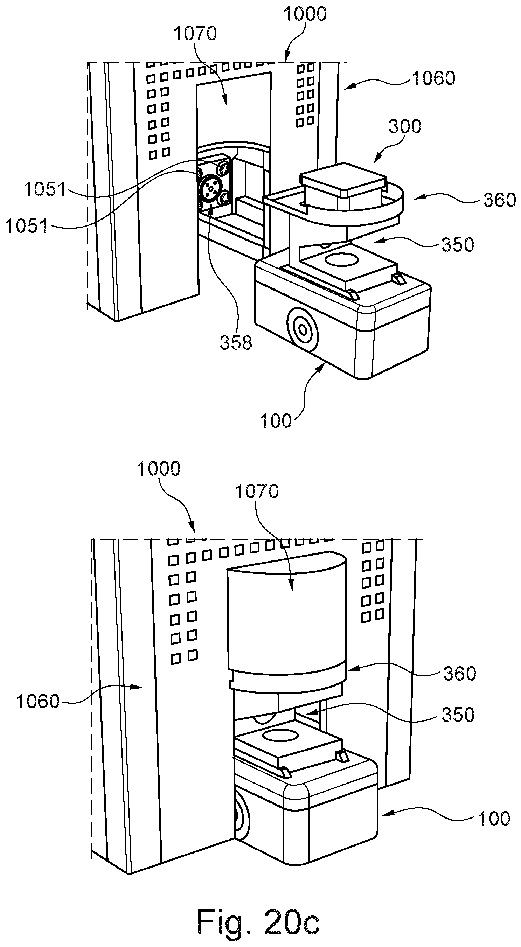

Fig. 20c zeigt eine weitere Ausführungsform der erfindungsgemäßen Transporteinrichtung 100, die eine Palette 300 in einen Arbeitsraum einer Werkzeugmaschine 1000 transportiert.

Dabei ist zum Verschließen der Öffnung, durch die hindurch beispielsweise ein Maschinenbediener in den Arbeitsraum der Werkzeugmaschine 1000 hineinlangen könnte bzw. durch die hindurch die Palette 300 in den Arbeitsraum der Werkzeugmaschine 1000 eingebracht wird, eine Rundtüre 1070 vorgesehen.

Befindet sich die Rundtüre 1070 im geöffneten Zustand (wie im oberen Bild der Fig. 20c gezeigt), so ist das Halbrund der Rundtüre 1070 beispielsweise der Arbeitsspindel 1100 (hier nicht gezeigt) der Werkzeugmaschine 1000 zugewandt und trennt somit die Arbeitsspindel 1100 von der Öffnung in der Umhausung 1060 ab. Dadurch kann beispielsweise verhindert werden, dass der Maschinenbediener unbeabsichtigt an ein in der Arbeitsspindel 1100 eingesetztes Werkzeug kommt und sich daran womöglich verletzt.

Für das Andocken der von der Transporteinrichtung 100 transportierten Handhabungseinrichtung (wie beispielsweise ein Palettenhalter 350 oder eine andere Einrichtung) an der Werkzeugmaschine 1000 kann, wie dies auch bereits in Fig. 16c beschrieben ist, eine Aufnahme (aufweisend die konischen Aufnahmen 1051/konischen Vertiefungen 355 und die Schnittstellen 357/358) verwendet werden.

Es können aber auch andere Verbindungsmöglichkeiten zwischen Werkzeugmaschine 1000 und Transporteinrichtung 100 bzw. Handhabungseinrichtung vorgesehen sein, wie beispielsweise konische Aufnahmen 1051, die am Hallenboden vorgesehen sind (siehe hierfür auch Fig. 16a und 16c)

Ist die Transporteinrichtung 100 mit der Palette 300 durch die Öffnung der Umhausung 1060 in den Arbeitsraum der Werkzeugmaschine 1000 eingefahren, so verschließt die Rundtüre 1070 die Öffnung der Umhausung 1060 durch eine Drehbewegung um eine Rotationsachse (wie im unteren Bild der Fig. 20c gezeigt), insbesondere durch eine Drehbewegung um die Symmetrieachse der Rundtüre 1070, die beispielsweise vertikal ausgerichtet sein kann.

In vorteilhafter Weise kann die Auffangabdeckung 360, insbesondere im Hinblick auf die Verwendung der Rundtüre 1070 zum Verschließen der Öffnung der Umhausung 1060, unter Berücksichtigung der Form der Rundtüre 1070 ausgebildet sein, um eine verbesserte Abdichtung des Arbeitsraumes der Werkzeugmaschine 1000 gegenüber der Umgebung im Hinblick auf umherfliegende Späne und Kühl-Schmierstoff zu gewährleisten.

Hierfür wäre es zudem von Vorteil, wenn ein vergleichbares Halbrund an dem Ende der Auffangabdeckung 360 des Palettenhalters 350 vorgesehen ist, an dem die Rundtüre 1070 im geschlossenen Zustand positioniert ist. So könnte eine optimierte Abdichtung zwischen Rundtüre 1070 und Auffangabdeckung 360 und somit zwischen Arbeitsraum und Umgebung der Werkzeugmaschine 1000 erfolgen.

Die für das Andocken genutzten Aufnahme an der Werkzeugmaschine 1000 (aufweisend die konischen Aufnahmen 1051 und die Schnittstelle 358; siehe hierfür auch Fig. 16c), kann dabei ohne zusätzliche Abdeckung (wie sie beispielsweise in Fig. 20b beschrieben ist) auskommen. Es kann aber auch eine Kombination aus der Stahlabdeckung 1065, wie in Fig. 20b beschrieben, und der Rundtüre 1070 verwendet werden, um eine zusätzliche Abdichtung in der Umhausung 1060 des Arbeitsraumes der Werkzeugmaschine 1000 vorzusehen.

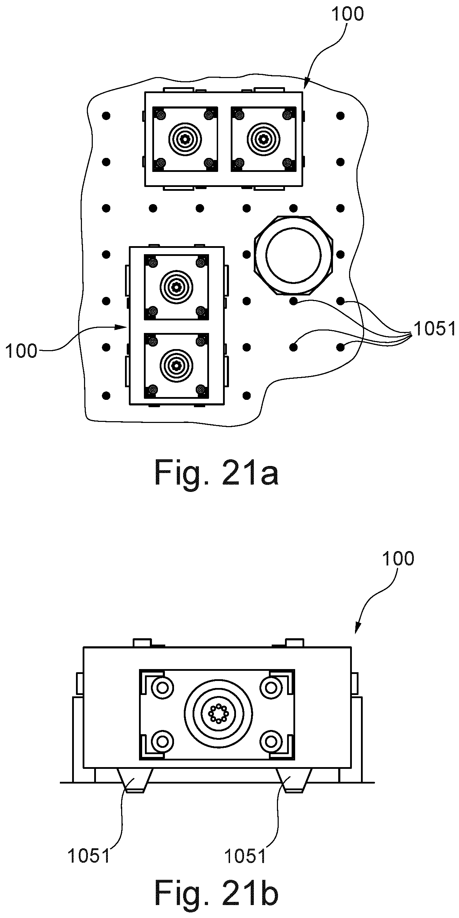

Fig. 21a zeigt schematisch einen Hallenboden mit rasterförmig angeordneten Konen 1051 zur Positionierung der Transporteinrichtungen 100 bzw. der Handhabungseinrichtungen.

Dabei können, wie bereits anhand von Fig. 16 erläutert, die Transporteinrichtung 100 abgesenkt werden, so dass entweder die Transporteinrichtung 100 selbst oder aber die von der Transporteinrichtung 100 aufgenommene Handhabungseinrichtung mittels der Konen 1051 positioniert wird.

Eine weitere Möglichkeit besteht darin, die Konen 1051 versenkbar auszugestalten, wenn beispielsweise die Konen 1051 für die Bewegungen der Transporteinrichtungen 100 auf dem Hallenboden störend sind. Hierfür müssten die Konen 1051 über eine eigene Hubvorrichtung (beispielsweise pneumatisch, hydraulisch, elektrisch oder mechanisch) verfügen, damit sie aus dem Hallenboden heraus gehoben oder darin versenkt werden können. Zudem könnte ferner eine kombinierte Hubbewegung der Konen 1051 und der Transporteinrichtung 100 erfolgen, um die Positionierung durchzuführen.

Fig. 21b zeigt eine weitere Möglichkeit, die Konen 1051 an der Unterseite der Transporteinrichtung 100 vorzusehen und lediglich in dem Hallenboden entsprechende Vertiefungen für die Konen 1051 vorzusehen.

Hierdurch könnte nun die Hubbewegung durch die Transporteinrichtung 100 oder die Aufnahmevorrichtung 40 erfolgen, um die Positionierung durchzuführen. Ferner kann es aber auch möglich sein, dass die Konen 1051 am Unterboden der Transporteinrichtung 100 in die Vertiefungen des Hallenbodens abgesenkt werden, um eine Positionierung der Transporteinrichtung 100 bzw. der Handhabungseinrichtung zu ermöglichen.

In diesen Fällen ist keine Störkontur mehr auf dem Hallenboden vorhanden, so dass die Transporteinrichtungen 100 uneingeschränkt über den Hallenboden fahren könnten. Zudem kann bei der Ausführungsform, wie in Fig. 21b gezeigt, auf eine zusätzliche Hubvorrichtung (beispielsweise für die Konen am Hallenboden) verzichtet werden.

Fig. 22a zeigt schematisch eine weitere Ausführungsform der erfindungsgemäßen Transporteinrichtung 100 mit einem Industrieroboter 600 als Handhabungseinrichtung.

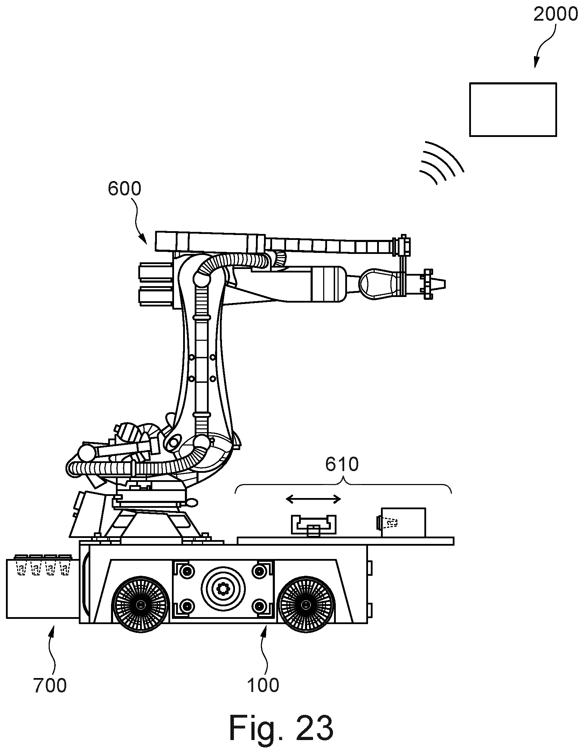

Neben bzw. statt eines Palettenwechslers 200 als Handhabungseinrichtung kann auch ein Roboter 600 (Industrieroboter) durch die Aufnahmevorrichtungen 40 der Transporteinrichtung 100 aufgenommen werden. Dieser kann für die verschiedensten Aufgaben innerhalb des Produktionsprozesses genutzt werden und je nach Anwendungsfall weiter angepasst werden. Weitere Beispiele hierzu sind in den Figuren 23 bis 28 und 35 beschrieben.

Zudem ist es von Vorteil, dass die Transporteinrichtung 100 über eine Vielzahl von Aufnahmevorrichtungen 40 verfügt, wobei an jeder Aufnahmevorrichtung 40 unterschiedliche Module / Handhabungseinrichtungen aufgenommen werden können.

Wie in Fig. 22a gezeigt können verschiedene Material-Paletten 700, Maschinenpaletten 700 oder Gitterboxen 700 durch die Transporteinrichtung 100 aufgenommen werden. Ferner können verschiedenste Hilfsmodule 750 (wie z.B. Entgrater, Aufbewahrungsbox für Werkzeuge, Wechselgreifer, etc.) von der Transporteinrichtung 100 aufgenommen werden, die der Roboter 600 nutzen kann, um z.B. Bestückungsarbeiten an der Werkzeugmaschine 1000 oder Nachbearbeitungen an einem Werkstück 1 durchzuführen, welches durch die Werkzeugmaschine 1000 gefertigt wurde.

Es sei an dieser Stelle zudem explizit darauf hingewiesen, dass die Transporteinrichtung 100 auch als reiner Material-Zulieferer bzw. Werkzeug-Zulieferer ausgestattet sein kann, beispielsweise als eine Art Werkstück-/Werkzeugwagen, der ausschließlich mit einer oder mehreren Material-Paletten 700 und/oder Werkzeugpaletten und/oder Gitterboxen 700 ausgestattet ist und entsprechend Bearbeitungsstationen oder andere Bestimmungsorte der Werkstücke/Werkzeuge dadurch anfahren kann.

Durch die Möglichkeit, einen Palettenwechsler 200 und einen Roboter 600 auf einer Transporteinrichtung 100 aufnehmen zu können, können in vorteilhafter Weise Werkstück- und Paletten-Handling beliebig kombiniert werden und auf Gegebenheiten in der Produktionskette individuell eingegangen werden.

Fig. 22b zeigt nun schematisch zwei konkretere Ausführungsbeispiele der erfindungsgemäßen Transporteinrichtung 100 mit aufgenommenen Robotern 600, wobei beide Roboter 600 sowohl für WerkzeugHandling als auch für Werkstück-Handling eingerichtet sind. Insbesondere kann für das Bewegen von Werkzeugen 102 beispielsweise ein Werkzeugwechsler von dem Roboter 600 aufgenommen sein (siehe beispielsweise auch die Detailansicht in Fig. 22b). Dieser könnte beispielsweise auch das Werkzeug 102 in der Arbeitsspindel 1100 der Werkzeugmaschine 1000 wechseln.

Fig. 23 zeigt schematisch eine weitere Ausführungsform der erfindungsgemäßen Transporteinrichtung 100 mit einem Industrieroboter 600 und einer Vermessungseinheit 610 zur Werkzeugprüfung.

Durch die in Fig. 23 gezeigte Konfiguration der Transporteinrichtung 100 mit einem Roboter 600 und einer Vermessungseinheit 610 zur Werkzeugprüfung sowie einem Modul 700 mit Pufferplätzen für die Werkzeuge kann die Transporteinheit 100 die Werkzeuge aus einer Werkzeugmaschine 1000 (hier nicht gezeigt) entnehmen, vermessen und prüfen.

Dabei kann die Prüfung taktil oder auch berührungslos erfolgen. Eine Schreib- und Leseeinheit kann ferner das Werkzeug identifizieren und entsprechend zuordnen.

Per Funksignale können nun die erhaltenen Informationen sowie die Ergebnisse der Prüfung an eine Leitrechnersteuerung 2000 übermittelt werden und entsprechend weiterverarbeitet werden.

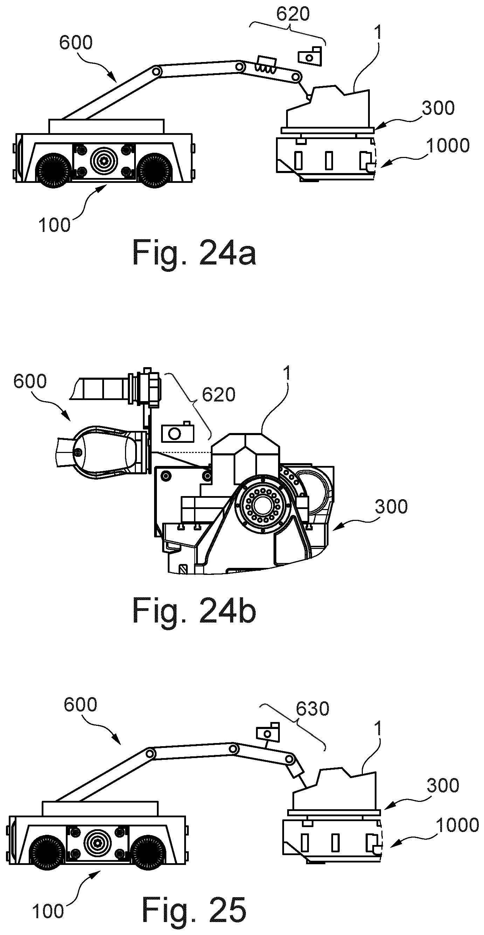

Fig. 24a zeigt schematisch eine Detailansicht einer weiteren Ausführungsform der erfindungsgemäßen Transporteinrichtung 100 mit einem Industrieroboter 600 und Mess- und Prüfmitteln 620 zur Prüfung von Bauteilen 1, die auf einer Werkzeugmaschine 1000 (hier mir Palette 300) gefertigt wurden, wie dies im Detail auch noch einmal in Fig. 24b dargestellt ist.

Dabei kann das Bauteil 1 durch den Roboter 600 sowohl taktil als auch scannend geprüft werden. Ferner kann eine optische Einheit das Bauteil 1 über ein optisches Verfahren prüfen.

Die erhaltenen Daten und Informationen können nun wieder per Funk, per Induktion oder aber durch entsprechende Anschlüsse / Verbindungen in den konischen Aufnahmen (hier nicht gezeigt) übertragen werden.

Fig. 25 zeigt schematisch eine weitere Ausführungsform der erfindungsgemäßen Transporteinrichtung 100 mit einem Industrieroboter 600 und einem Aufsatz 630 zur Nachbearbeitung von Bauteilen 1, die auf einer Werkzeugmaschine 1000 (hier mit Palette 300) gefertigt wurden.

Dabei kann der Aufsatz 630 über ein Werkzeug (z.B. eine Bürste oder einen Entgrater) verfügen, mit dem das Bauteil automatisiert nachbearbeitet werden kann. Eine optische bzw. sensorische Überwachung stellt dabei die entsprechende Qualität des fertigen Bauteils 1 sicher und überprüft, ob weitere Nacharbeiten nötig sind.

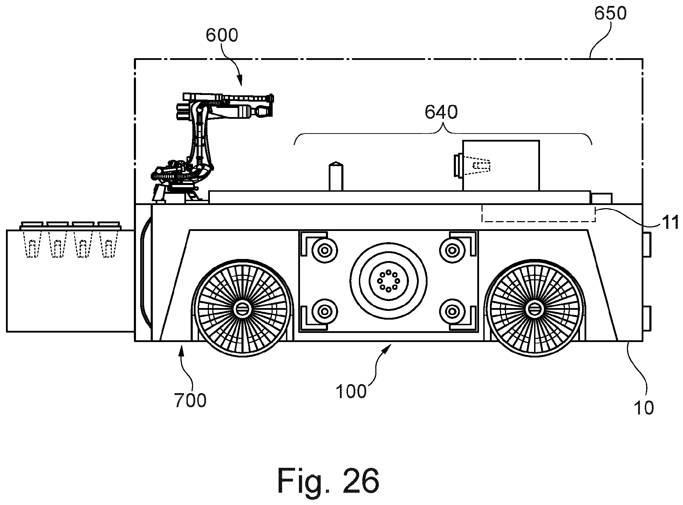

Fig. 26 zeigt schematisch eine weitere Ausführungsform der erfindungsgemäßen Transporteinrichtung 100 mit einem Industrieroboter 600 und einer Einheit 640 zum Schärfen und Abrichten von Werkzeugen.

Dabei weist die Transporteinrichtung 100 neben dem Roboter 600 und der Einheit 640 zum Schärfen und Abrichten von Werkzeugen ferner auch eine Schutzumbauung 650 auf, mit dieser die Umgebung vor umherfliegenden Spänen, die durch den Schärfungs- bzw. Abrichtprozess entstehen, geschützt wird. In vorteilhafter Weise kann (wie an der linken Seite der Schutzumbauung 650 angedeutet) eine Klappe vorgesehen sein, durch die der Roboter durchgreifen und zum Beispiel mit einer Arbeitsspindel einer Werkzeugmaschine (beide hier nicht gezeigt) interagieren kann.

Da es sich bei dem Schärfe- und Abrichtprozess um spanabhebende Bearbeitungsschritte handelt, ist es von Vorteil, wenn das Fahrgestell 10 zudem über einen internen Kühl-Schmierstofftank 11 verfügt, um entsprechend, wie bei einer Werkzeugmaschine üblich, den spanabhebenden Bearbeitungsprozess zu kühlen und zu schmieren und den Werkzeugverschleiß damit zu reduzieren. Weiterhin kann es vorteilhaft sein, an der Transporteinrichtung 100 zudem ein Modul 700 mit Pufferplätzen für die Ablage von Werkzeugen vorzusehen.

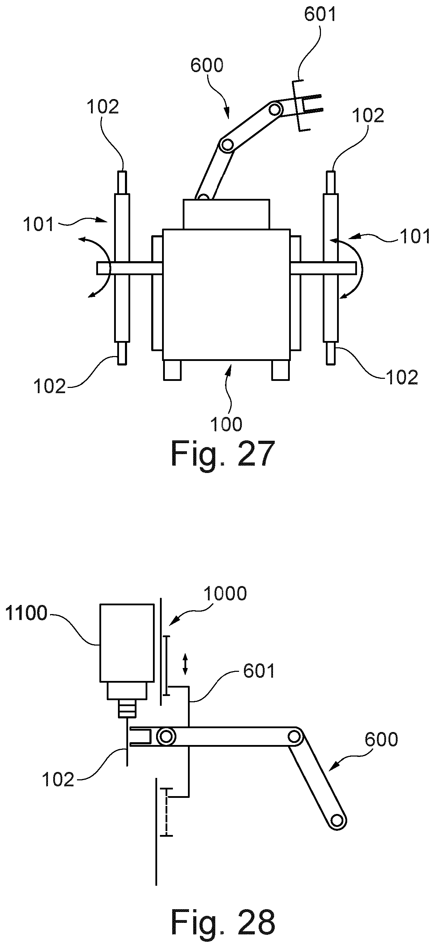

Fig. 27 zeigt schematisch eine weitere Ausführungsform der erfindungsgemäßen Transporteinrichtung 100 mit einem Industrieroboter 600 und einem Magazin 101 zur Mitführung von verschiedenen Werkzeugen 102.

Hierdurch können Werkzeuge 102 direkt in eine Arbeitsspindel der Werkzeugmaschine (hier nicht gezeigt) oder ins Magazin 101 eingewechselt werden. Dabei kann das Magazin 101 als Rad-, Turm-, Teller- oder Kettenmagazin ausgeführt sein. Weitere Varianten von Magazinen 101 sind aber ebenso anwendbar.

Insbesondere können auch, statt oder neben einem Magazin 101 für das Ablegen von Werkzeugen 102, Werkzeugpaletten (hier nicht gezeigt) von der Transporteinrichtung 100 aufgenommen werden und entsprechend für die verschiedensten Anwendungen genutzt werden.

Dabei sei ausdrücklich darauf hingewiesen, dass ein oder mehrere Werkzeugpaletten auch unabhängig vom Vorhandensein eines Industrieroboters 600 von der Transporteinrichtung 100 aufgenommen und entsprechend ihren Bestimmungsorten zugeführt werden können.

In besonders vorteilhafter Weise kann der Roboter 600 mit einem Verschlussblech 601 versehen werden, um die Sicherheit während eines Werkzeugwechsel an einer Arbeitsspindel 1100 der Werkzeugmaschine 1000 (wie in Fig. 28 gezeigt) zu gewährleisten.

Fig. 28 zeigt schematisch die Ausführungsform der erfindungsgemäßen Transporteinrichtung 100 in Fig. 27 bei der Interaktion von dem Industrieroboter 600 mit der Arbeitsspindel 1100 der Werkzeugmaschine 1000, um beispielsweise das Werkzeug 102 zu wechseln.

Dabei wird noch einmal gezeigt, welchen Vorteil das Verschlussblech 601 bietet, um die Sicherheit an der Werkzeugmaschine 1000 während des Werkzeugwechsels zu gewährleisten.

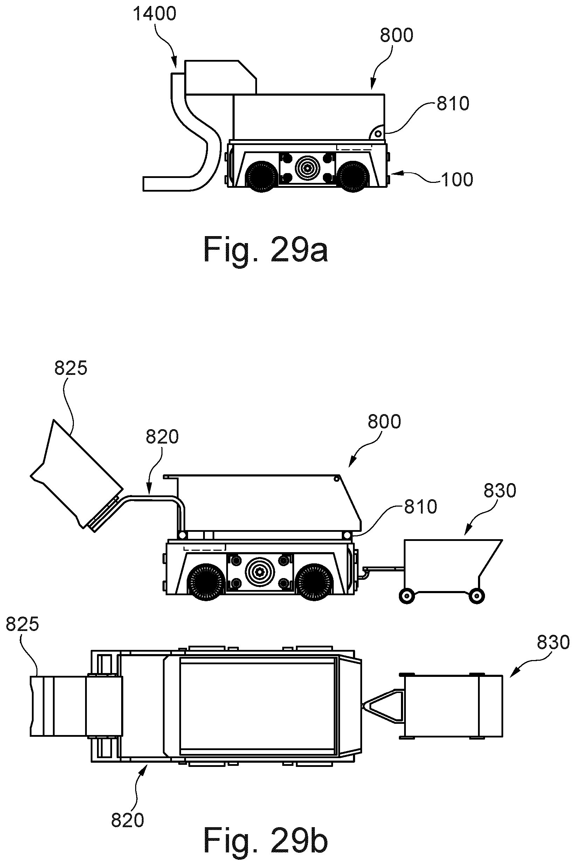

Fig. 29a zeigt schematisch eine weitere Ausführungsform der erfindungsgemäßen Transporteinrichtung 100 zur Späneentsorgung an einem Spänewagen 1400 einer Werkzeugmaschine 1000.

Dabei wird ein Modul 800 zum Auffangen der Späne auf die Transporteinrichtung 100 montiert, wobei das Modul 800 ferner über einen Kippmechanismus 810 verfügt, um die eingesammelten Späne an einem definierten Ort wieder abzuladen.

Der Kippmechanismus kann dabei verschiedenartig ausgestaltet sein. Es können sowohl elektrische, als auch hydraulische oder pneumatische Antriebe vorgesehen sein. Es können ferner zum Erzeugen der Kippbewegung des Moduls 800 Zahnstangengetriebe, Schraubengetriebe oder einfach entsprechende pneumatische oder hydraulische Hubzylinder verwendet werden. Es können jedoch auch andere Antriebe / Getriebe in verschiedenen Kombinationen miteinander verwendet werden.

Eine weitere Ausführungsform der erfindungsgemäßen Transporteinrichtung 100 mit dem Modul 800 zum Auffangen der Späne ist dabei in Fig. 29b gezeigt, wobei hier ferner die Transporteinrichtung 100 mit einem Hebemechanismus 820 versehen ist, der einen mit Spänen befüllten Spänebehälter 825 heben und in das Modul 800 entleeren kann. Hierbei kann nun in vorteilhafter Weise der Spänebehälter 825 so lange an dem Spänewagen 1400 der Werkzeugmaschine 1000 verweilen, bis dieser entsprechend befüllt ist und eine Information ergeht, beispielsweise an die zentrale Leitrechnersteuerung 2000, die daraufhin die Transporteinrichtung 100 mit dem Modul 800 und dem Hebemechanismus 820 losschickt, um den besagten Spänebehälter 825 zu entleeren.

Zusätzlich kann die Transporteinrichtung 100 ferner dazu eingerichtet sein, einen zusätzlichen Behälterwagen 830 anzukoppeln und diesen für das Auffangen und Transportieren von Spänen zusätzlich zu nutzen.

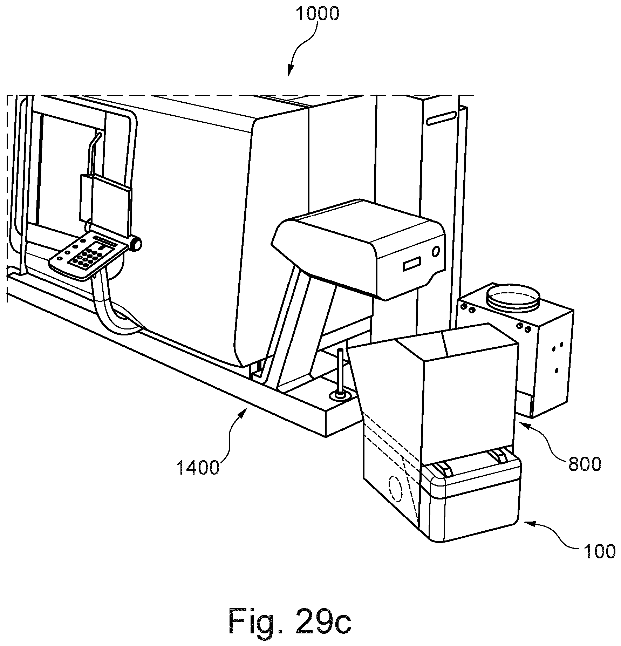

Fig. 29c zeigt eine weitere Ausführungsform der Transporteinrichtung 100, bei der das Modul zum Auffangen der Späne 800, wie bereits in Fig. 29a und 29b gezeigt, auf der Oberseite der Transporteinrichtung 100 aufgenommen ist. In vorteilhafter Weise kann das gezeigte Modul 800 durch zwei seitlich vorhandene Aufstell-Abschnitte an den verschiedensten Spänewagen/Spänesammlern 1400 abgestellt werden. Ist der Spänewagen 800 entsprechend befüllt worden, kann das Signal an die Transporteinrichtung 100 ergehen, das Modul 800 erneut aufzunehmen und die Späne einer Weiterbehandlung und/oder Entsorgung zuzuführen.

Für die Positionierung des Moduls 800 an dem Spänewagen 1400 durch die Transporteinrichtung 100 können beispielsweise wieder in/auf dem Hallenboden vorhandene konenförmige Aufnahmen 1051 genutzt werden. Weiterhin können die konenförmigen Aufnahmen 1051 auch die bereits in den Figuren 16a und 16c beschriebenen Eigenschaften aufweisen.

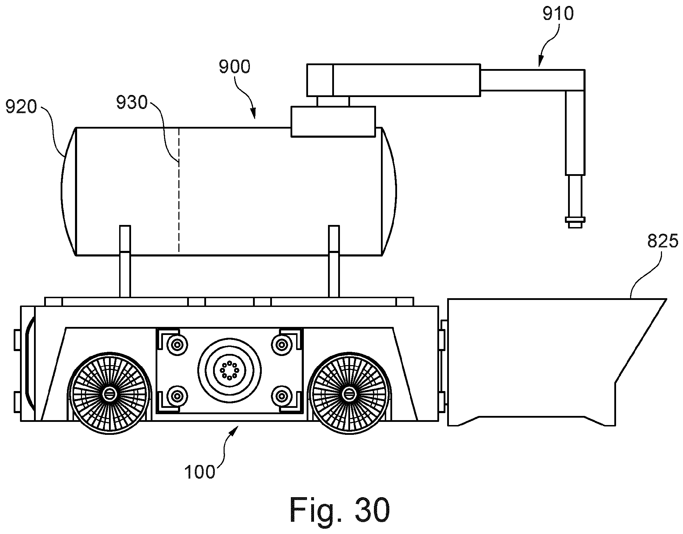

Fig. 30 zeigt schematisch eine weitere Ausführungsform der erfindungsgemäßen Transporteinrichtung 100 zur Aufbereitung und Wiederbefüllung einer Werkzeugmaschine 1000 mit Kühl-Schmierstoff.

Dabei weist die Transporteinrichtung 100 ein Modul 900 zum Auffangen bzw. Absaugen des gebrauchten Kühl-Schmierstoffes aus der Werkzeugmaschine auf, wobei das Modul 900 ferner einen Tank 920 und einen Filter 930 zur Aufbereitung des gebrauchten Kühl-Schmierstoffes aufweisen kann. Eine Absaugvorrichtung 910 kann dabei direkt mit der Werkzeugmaschine 1000 verbunden werden und den gebrauchten Kühl-Schmierstoff in den Tank 920 absaugen. Ferner kann die Absaugvorrichtung 910 aber auch dazu eingerichtet sein, Kühl-Schmierstoff, der sich in dem Spänebehälter 825 angesammelt hat, wieder aus dem Spänebehälter 825 abzusaugen und der Aufbereitung zuzuführen.

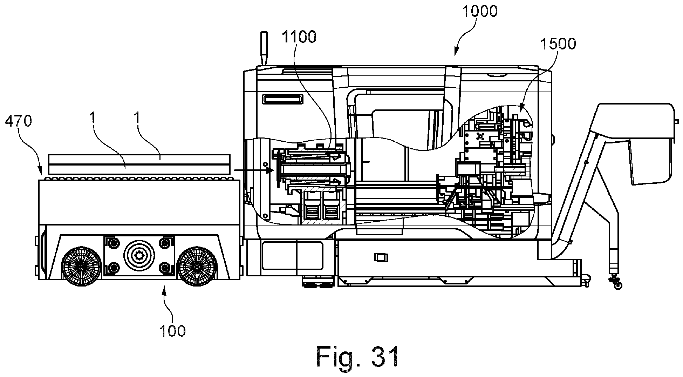

Fig. 31 zeigt schematisch eine weitere Ausführungsform der erfindungsgemäßen Transporteinrichtung 100 zur Bereitstellung und Einführungvon Werkstücken 1 in eine Werkzeugmaschine 1000 für Drehbearbeitung.

Dabei kann es sich bei den Werkstücken 1 beispielsweise um Stangenmaterial handeln, welche durch einen von der Transporteinrichtung 100 aufgenommenen Stangenlader 470 der drehbearbeitenden Werkzeugmaschine 1000 zugeführt werden.

Für das ordnungsgemäße Zusammenspiel von Stangenlader 470 und der Werkzeugmaschine 1000, insbesondere der Arbeitsspindel 1100, empfiehlt es sich, die Transporteinrichtung 100 wieder durch die bereits beschriebenen konischen Aufnahmen 1051 (hier nicht gezeigt), die an entsprechender Stelle an der Werkzeugmaschine 1000 vorgesehen sind, positionieren zu lassen.

So ist gewährleistet, dass das Stangenmaterial (Werkstücke 1) korrekt in die Werkzeugmaschine 1000 bzw. in die Arbeitsspindel 1100 eingelegt wird und so der automatisierte Fertigungsprozess reibungslos vonstattengehen kann.

Wie in der Fig. 31 gezeigt, kann die Werkzeugmaschine 1000 ferner mit einem Werkzeugrevolver 1500 ausgestattet sein, welcher das jeweils für den entsprechenden Bearbeitungsschritt notwendige Werkzeugzu dem sich drehenden Stangenmaterial zustellen kann. Darüber hinaus können die konischen Aufnahmen 1051 ferner wieder über die bereits beschriebenen Möglichkeiten zur Herstellung einer Verbindung für Energie- und/oder Signalübertragung verfügen, so dass der Energiespeicher 30 (hier nicht weiter dargestellt) der Transporteinrichtung 100 nicht weiter durch den Prozess der Materialzuführung belastet wird.

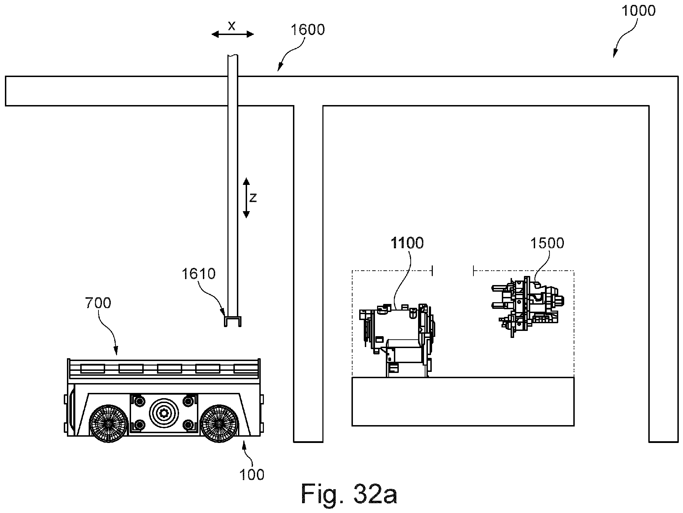

Fig. 32a zeigt schematisch eine weitere Ausführungsform der erfindungsgemäßen Transporteinrichtung 100 als Materialspeicher 700 für eine Werkzeugmaschine 1000 mit Gantry-Lader 1600.

Dabei können die Materialspeicher 700 von verschiedenen Aufnahmevorrichtungen 40 der Transporteinrichtung 100 aufgenommen werden, was durch die beiden dargestellten Transporteinrichtungen verdeutlicht werden soll. Ferner kann aber auch eine der Transporteinrichtungen 100 die Rohteile für die Werkzeugmaschine 1000 bzw. dem Gantry-Lader 1600 bereitstellen, während die andere Transporteinrichtung 100 die bearbeiteten Teile / Werkstücke aufnimmt.

Durch diese Konfiguration des Teile- bzw. Materialhandlings können die autonomen Maschinenlaufzeiten erhöht werden, da nun der Transport der Rohteile und/oder der Fertigteile automatisch erfolgen kann.

Der Gantry-Lader 1600 weist einen Greifer 1610 auf, der beispielsweise entlang einer x- und einer z-Richtung verfahren werden kann und der die Rohteile der Arbeitsspindel 1100 zuführt, bis diese in der Werkstückaufnahme der Arbeitsspindel 1100 eingespannt sind. Auch hier kann wieder ein Werkzeugrevolver 1500 das Werkzeug zu dem Rohteil / Werkstück zustellen, welches für den aktuellen Bearbeitungsprozess benötigt wird.

Diese Ausführungsform der Transporteinrichtung 100 eignet sich jedoch nicht nur für Drehmaschinen, sondern kann ebenso für bekannte Fräsmaschinen verwendet werden.

Ferner ist diese Ausführungsform der Transporteinrichtung 100 dahingehend besonders von Vorteil, da ein Großteil der Gantry-Lader, die bereits an einer Werkzeugmaschine 1000 zum Einsatz kommen, ohne größeren Aufwand auf die Transporteinrichtungen 100 für Materialhandling adaptiert werden können.

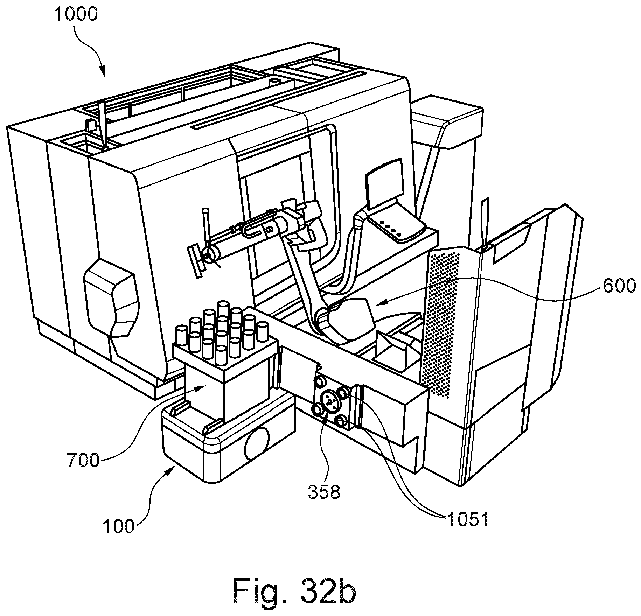

Fig. 32b zeigt eine weitere Ausführungsform der erfindungsgemäßen Transporteinrichtung 100 als Materialspeicher 700 für eine Werkzeugmaschine 1000 mit Roboter 600 zum Ein- und Auswechseln von Werkstücken in die Werkzeugmaschine 1000.

Dabei kann, wie dies auch bereits in Fig. 16c beschrieben ist, die Transporteinrichtung 100 mit der Handhabungseinrichtung bzw. in diesem Fall mit einem von der Transporteinrichtung 100 aufgenommenen Modul 700 (hier Speicher für Rohmaterial) an der Werkzeugmaschine 1000 andocken (mittels konenförmiger Aufnahmen 1051 und Schnittstelle 358).

Weiterhin kann nun die Transporteinrichtung 100 gegebenenfalls den Materialspeicher 700 zunächst an der Werkzeugmaschine 1000 "absetzen", um anderen Aufgaben zur Verfügung zu stehen. Erst wenn das in dem Materialspeicher 700 vorgehaltene Rohmaterial aufgebraucht ist müsste die Transporteinrichtung 100 zurückkommen und das Modul 700 erneut aufnehmen und entsprechend abtransportieren.

In vorteilhafter Weise stehen hierfür der Werkzeugmaschine 1000 mindestens einer, in besonders vorteilhafter Weise jedoch mindestens zwei Andock-Plätze zur Verfügung. Damit kann die Transporteinrichtung 100 einen neuen, mit Rohteilen gefüllten Materialspeicher 700 an der Werkzeugmaschine 1000 andocken und im Anschluss einen geleerten Materialspeicher 700 vom anderen Andock-Platz aufnehmen und entsprechend abtransportieren.

Das hier gezeigte Konzept der Werkzeugmaschine 1000 ist jedoch nicht darauf beschränkt, dass der Roboter 600 außerhalb der Werkzeugmaschine 1000 angeordnet ist, vielmehr kann der Roboter 600 auch im Arbeitsraum der Werkzeugmaschine 1000 vorgesehen sein und bei Bedarf aus der Werkzeugmaschine 1000 heraus in den angedockten Materialspeicher 700 für ein neues Rohteil greifen. Es können jedoch auch noch völlig andere Maschinenkonzepte mit der Transporteinrichtung 100 mit Materialspeicher 700 (oder einem anderen Modul 700) versorgt werden.

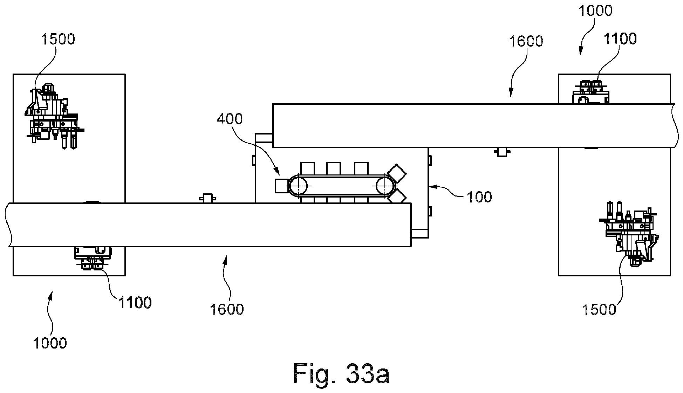

Fig. 33a zeigt schematisch eine weitere Ausführungsform der erfindungsgemäßen Transporteinrichtung 100 mit Förderband 400 zwischen zwei Werkzeugmaschinen 1000 mit Gantry-Ladern 1600. Ferner weisen die beiden Werkzeugmaschinen 1000 beispielhaft jeweils eine Arbeitsspindel 1100 und einen Werkzeugrevolver 1500 auf.

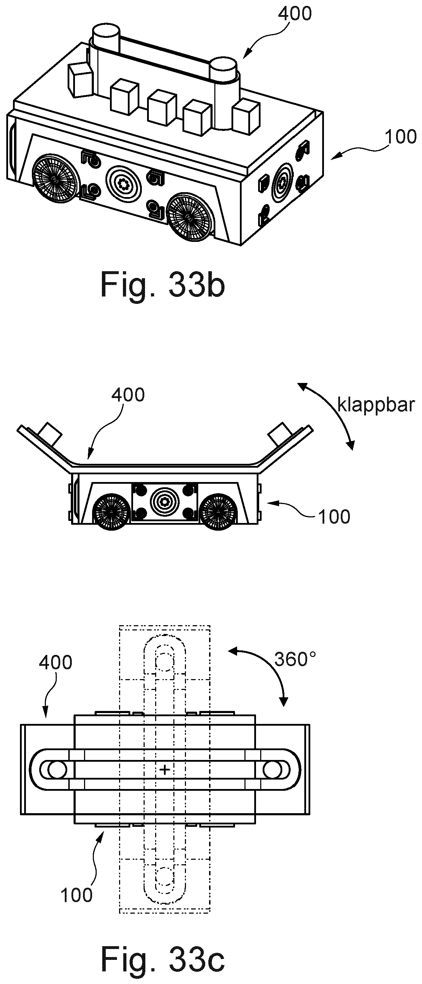

Dabei kann das von der Transporteinrichtung 100 aufgenommene Förderband 400 ferner mit Aufnahmen für Bauteile bzw. Werkstücke ausgestattet sein (siehe hierfür beispielsweise die Detaildarstellung in Fig. 33b). Zudem ist es in besondere Weise von Vorteil, dass die Transporteinrichtung 100 mit dem Förderband 400 als "stand alone"-Einheit genutzt werden kann, um zum Beispiel Rohteile oder bereits bearbeitet Werkstücke zwischen zwei Werkzeugmaschinen 1000 auszutauschen. Weiterhin ist es möglich, dass das Förderband bestimmte Bereiche für das Rüsten bereithält (Rüstplätze), durch die eine Bestückung des Förderbandes 400 mit Rohteilen / bearbeiteten Werkstücken erfolgen kann.

Zudem kann es besonders vorteilhaft sein, dass das Förderband 400 durch eine entsprechende Mechanik (hier nicht weiter gezeigt) an der Transporteinrichtung 100 angestellt (geklappt) werden kann (siehe hierfür beispielsweise Fig. 33c), um zum Beispiel größere Distanzen zu überbrücken. Hierfür können dann auch mehrere Transporteinrichtungen 100 mit Förderbändern 400 versehen sein, welche sich in Reihe anordnen, um beispielsweise eine Art Förderbrücke zu erzeugen.

Ferner sei an dieser Stelle darauf hingewiesen, dass die Ausführungsform des Förderbandes 400 nicht allein auf die gezeigte Ausführungsform beschränkt ist. Vielmehr können anstatt eines Förderbandes auch eine Art Förderkette oder dergleichen verwendet werden.

Ferner kann es auch möglich sein, dass das Förderband 400 gegenüber der Transporteinrichtung 100, die das Förderband aufgenommen und transportiert hat, drehbar gelagert ist, so dass eine Ausrichtung des Förderbandes 400 für den jeweiligen Einsatzzweck separat von der Positionierung der Transporteinrichtung 100 stattfinden kann (siehe hierfür Fig. 33c). Hierdurch konnte eine erhöhte Flexibilität für den Einsatz des Förderbandes 400 erzielt werden.

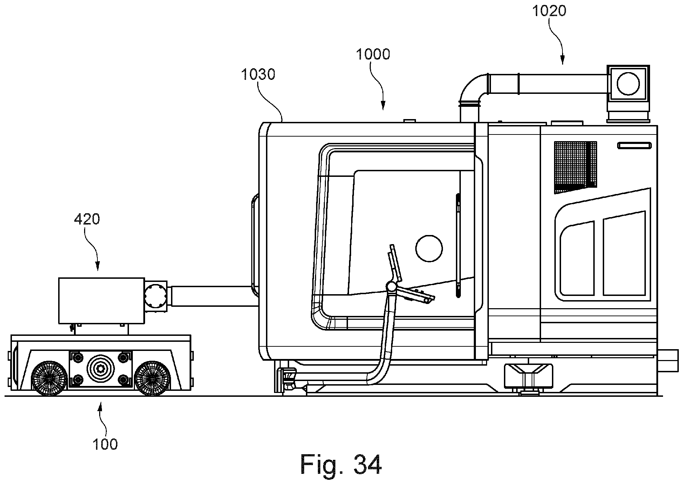

Fig. 34 zeigt schematisch eine weitere Ausführungsform der erfindungsgemäßen Transporteinrichtung 100 für die unterstützende Absaugung 420 des Arbeitsraumes einer Werkzeugmaschine 1000.

Hierfür ist es vorteilhaft, dass die Transporteinrichtung 100 eine entsprechende Absaugung 420 aufnehmen kann und sich entsprechend an einem Zugang in der Umhausung 1030 der Werkzeugmaschine 1000 positionieren kann, um entstehenden Schmutz und Verunreinigungen vor, während und nach einer spanenden Bearbeitung eines Werkstücks abzusaugen.

Dabei ist die Absaugung 420 vorrangig dafür gedacht, die häufig bereits in einer Werkzeugmaschine 1000 vorhandene Standard-Absaugung 1020 zu unterstützen. Sollte jedoch diese defekt oder gar nicht erst vorhanden sein, so kann die Absaugung 420 diese ersetzen. Der abgesaugte und aufgefangene Schmutz kann in einem Behälter gespeichert werden und bei Bedarf geleert werden.

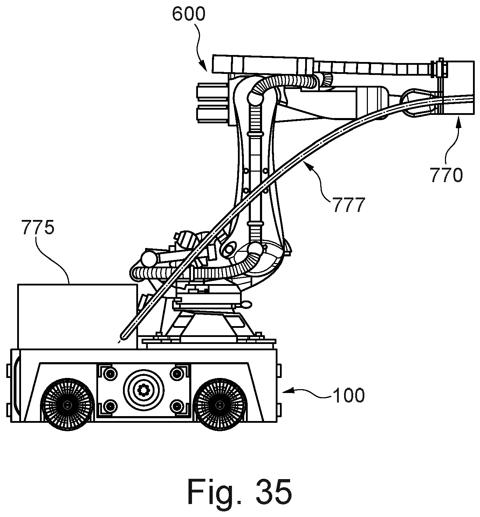

Fig. 35 zeigt nun schematisch eine weitere Ausführungsform der erfindungsgemäßen Transporteinrichtung 100 mit Roboter 600 und einer von dem Roboter 600 aufgenommenen Auftragvorrichtung 770.

Durch die Auftragvorrichtung 770 kann nun beispielsweise an einer Werkzeugmaschine 1000 ein Bauteil/Werkstück additiv gefertigt werden, da die Auftragvorrichtung 770 beispielsweise für das Auftragschweißen (oder ein anderes additives Fertigungsverfahren) eingerichtet ist. Hierfür kann beispielswiese die Transporteinrichtung 100 ferner einen Pulver- bzw. einen Medientank 775 aufnehmen, der das aufzubringende Material (beispielsweise Metallpulver etc.) speichert. Eine Zubringung bzw. Absaugung 777 zwischen dem Pulver- bzw. Medientank 775 und der Auftragvorrichtung 770 sorgt dafür, dass Material vom Pulver- bzw. Medientank 775 zur Auftragvorrichtung 770 geleitet oder aber beim Fertigungsprozess überschüssiges Material wieder abgesaugt und dem Pulver- bzw. Medientank 775 zugeführt werden kann.

Der Vorteil bei einer mobilen additiven Fertigung besteht darin, dass im Wesentlichen jede Werkzeugmaschine 1000 um eine solche additive Fertigung erweitert werden kann, ohne dass dabei ein Umbau der entsprechenden Werkzeugmaschine 1000 erfolgen muss. Weiterhin kann in vorteilhafter Weise zudem für die additive Fertigung die bereits an der Werkzeugmaschine 1000 vorhandene Maschinenkabine und/oder Absaugung als Schutz für den Fertigungsprozess und für die Bediener genutzt werden.

Es sei jedoch darauf hingewiesen, dass nicht zwingend eine Werkzeugmaschine 1000 vorhanden sein muss, damit die mobile additive Fertigung zum Einsatz kommen kann. Beispielsweise kann die Auftragvorrichtung 770 das gewünschte Bauteil/Werkstück auch auf einer beliebigen Unterlage oder in einer beliebigen Umgebung additiv erzeugen. Oder die Transporteinrichtung 100 kann zu dem bereits vorhandenen Werkstück/Bauteil fahren und bearbeitet dieses durch die aufgenommene Auftragvorrichtung 770 an Ort und Stelle.

Wie bereits weiter oben beschrieben, könnten beispielweise wieder Konen 1051 (hier nicht gezeigt) dazu verwendet werden, die Transporteinrichtung 100 optimal an der Werkzeugmaschine 1000 oder an dem Bauteil/Werkstück zu positionieren, um eine qualitative Fertigung zu gewährleisten.

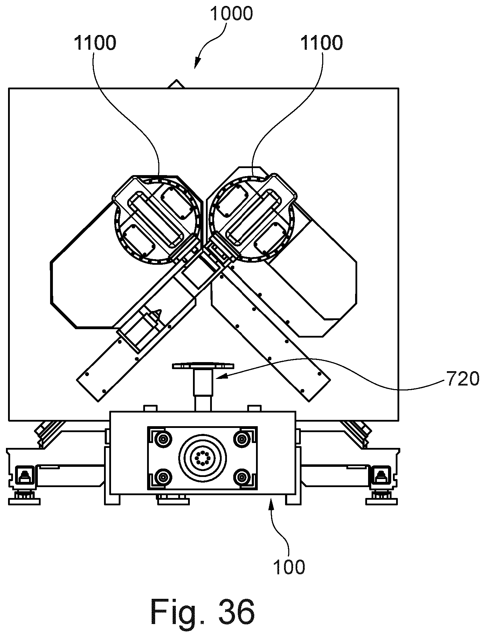

Fig. 36 zeigt nun schematisch eine weitere Ausführungsform der erfindungsgemäßen Transporteinrichtung 100 mit einem Werkzeugwechsler 720.

Dabei kann beispielsweise die Transporteinrichtung 100 mit einem in dem Werkzeugwechsler 720 aufgenommenen Werkzeug an die Werkzeugmaschine 1000, insbesondere an die Arbeitsspindel 1100 heranfahren, und dort den Werkzeugwechsel durch eine Drehbewegung des Werkzeugwechslers 720 durchführen.

Weiterhin kann anstelle des Werkzeugwechslers 720 auch eine Wechsler-Speicher-Kombination 720 durch die Transporteinrichtung 100 zu der Werkzeugmaschine 1000 transportiert werden. Der Vorteil besteht darin, dass diese Wechsler-Speicher-Kombination 720 eine deutlich größere Kapazität zur Aufnahme von Werkzeugen hat als ein einfacher Werkzeugwechsler wie beispielsweise ein Gabelgreifer oder ein Hakengreifer.

Ist nun die Wechsler-Speicher-Kombination 720 vor der Werkzeugmaschine 1000 bzw. der Arbeitsspindel 1100 positioniert, so kann die Arbeitsspindel 1100 das gewünschte Werkzeug aus der Wechsler-Speicher-Kombination 720 (beispielweise ein Kettenmagazin oder Radmagazin mit entsprechenden Antrieben) herausnehmen, wobei die Wechsler-Speicher-Kombination 720 beispielsweise durch eine Zustelldrehung des gewünschten Werkzeugs zur Arbeitsspindel 1100 den Werkzeugwechsel beschleunigen bzw. vereinfachen kann.

Jedoch kann auch die Transporteinrichtung 100 lediglich über einen Werkzeugspeicher 720 (beispielsweise als Kettenmagazin, Radmagazin oder Regalmagazin etc.) verfügen, der zur Werkzeugmaschine 1000 transportiert wird und aus diesem die Arbeitsspindel 1100 der Werkzeugmaschine 1000 selbstständig das gewünschte Werkzeug entnehmen kann.

Ferner können aber auch die oben genannten Möglichkeiten miteinander kombiniert werden, so dass beispielsweise eine Transporteinrichtung 100 mit einem Werkzeugspeicher 720 zusammen mit einer Transporteinrichtung 100 mit einem Werkzeugwechsler 720 vor der Werkzeugmaschine 1000 positioniert wird und den Werkzeugwechsel an der Werkzeugmaschine 1000 im Zusammenspiel miteinander durchführen.

Die oben genannten Möglichkeiten sind des Weiteren nicht nur auf Werkzeuge beschränkt, da beispielsweise statt der Werkzeuge auch Werkstücke bzw. Werkzeuge und Werkstücke gleichzeitig gespeichert und/oder gewechselt werden können.

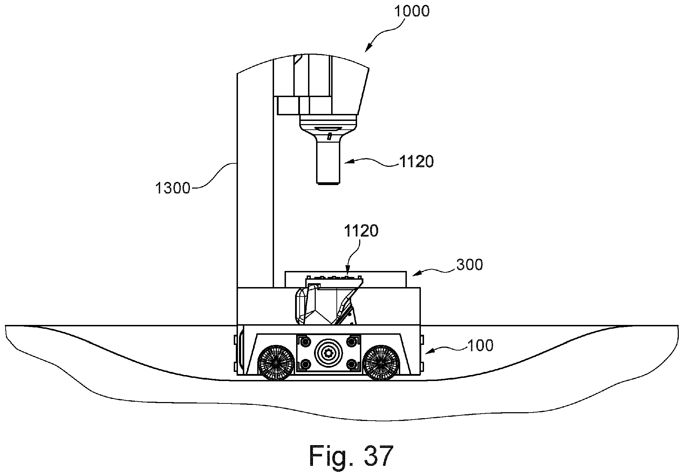

Fig. 37 zeigt schematisch eine weitere Ausführungsform der erfindungsgemäßen Transporteinrichtung 100 zum Transport von Fräsköpfen 1120 zu einer Werkzeugmaschine 1000 mit Ständerelement 1300 und Palette 300 (kann aber auch als Maschinentisch ausgebildet sein).

Dabei ist es insbesondere von Vorteil, dass durch die Flexibilität der Transporteinrichtungen 100 die Fräsköpfe 1120 schnell und unkompliziert an die jeweilige Werkzeugmaschine 1000 transportiert werden können. Wo früher noch aufwendig ein Kopfbahnhof von Nöten war, um die Fräsköpfe 1120 entsprechend bereitzustellen, können diese mittels der Transporteinrichtungen 100 in Zusammenspiel mit der Leitrechnersteuerung 2000 (hier nicht gezeigt) "bestellt" werden und kommen dann per Transporteinheit 100 an ihren jeweiligen Einsatzort. Ein Kopfbahnhof wird dadurch komplett überflüssig.

Zudem können durch diese Konfiguration der Transporteinrichtungen 100 Fräsköpfe 1120, insbesondere Sonderfräsköpfe, zwischen allen Werkzeugmaschinen 1000 mit Kopfschnittstelle ausgetauscht werden. Zudem brauchen dann die jeweiligen Fräsköpfe nicht mehrfach angeschafft werden, was ein hohes Kosteneinsparpotential birgt.

Beispielsweise können die Transporteinrichtungen 100 unter der Werkzeugmaschine 1000 hindurchfahren, um die Fräsköpfe 1120 an ihren gewünschten Einsatzort zu bringen, es können aber ebenso andere Wege der Zuführung der Fräsköpfe 1120 an die Werkzeugmaschine 1000 gewählt werden.

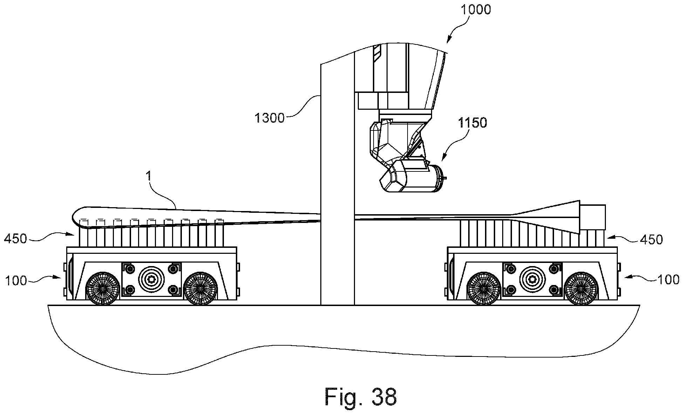

Fig. 38 zeigt schematisch eine weitere Ausführungsform der erfindungsgemäßen Transporteinrichtung 100 mit einer Werkstückaufnahme 450 für Großteile.

Dabei können mehrere Transporteinrichtungen 100 wieder im Verbund arbeiten, um die Großteile (hier als Werkstück 1 markiert) entsprechend zu transportieren. Dafür können die Werkstückaufnahmen 450 mit Spannvorrichtungen (hydraulisch, pneumatisch, Vakuum, mechanische Spanner etc.) ausgerüstet sein, durch diese die Großteile auf den Transporteinrichtungen 100 gehalten werden und einer dafür eingerichteten Bearbeitungsmaschine (Werkzeugmaschine 1000, hier mit Ständer-elementen 1300 und einem Schleifaufsatz 1150) zugeführt werden.

Zudem können, wie bereits beschrieben, konische Aufnahmen 1051 (hier nicht gezeigt), neben der Positionierung der Transporteinrichtungen 100 unter dem Schleifaufsatz 1150 der Werkzeugmaschine 1000, wieder eine Verbindung für das Übertragen von Energie und/oder (Steuer-)Signalen von Werkzeugmaschine 1000 zu Transporteinrichtung 100 ermöglichen.

Dabei verbinden die Transporteinrichtungen 100, durch die Verwendung der Werkstückaufnahme 450, das Konzept einer Werkstückwechseleinrichtung mit einem Bearbeitungstisch zu einer Art modularen Werkzeugmaschine 1000, um die Bearbeitung von Großteilen so effizient und flexibel wie möglich zu gestalten.

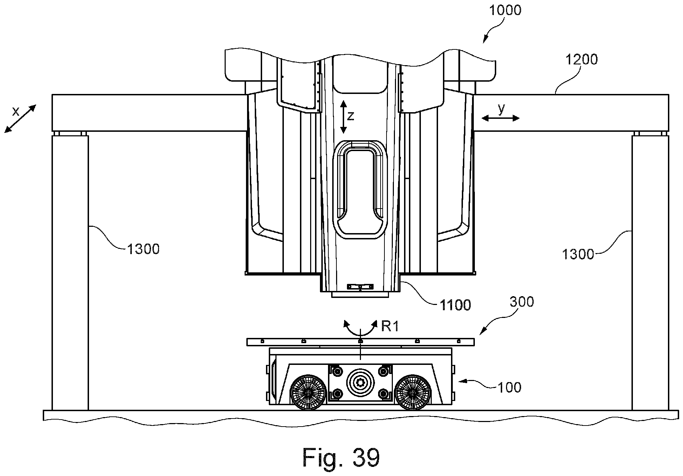

Fig. 39 zeigt schematisch eine weitere Ausführungsform der erfindungsgemäßen Transporteinrichtung 100 als Bestandteil verschiedener Maschinenkonzepte einer (modularen) Werkzeugmaschine 1000.

Dabei ist es besonders vorteilhaft, wenn die Transporteinrichtung 100 eine Palette 300 aufnimmt und dann direkt als Werkstück-/ oder Maschinentischträger in einer Werkzeugmaschine 1000 genutzt werden kann.

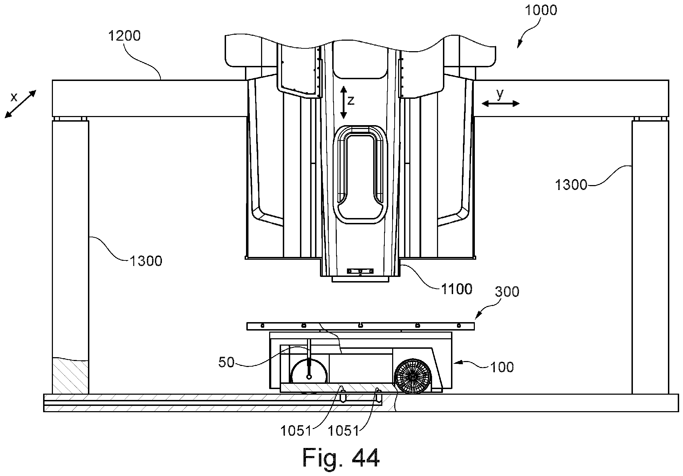

Hierbei ergeben sich Vorteile darin, dass durch die zur Positionierung und Fixierung genutzten Konen (konische Aufnahmen, z.B. wie die bereits beschriebenen konischen Aufnahmen 1051) die Transporteinrichtung 100 direkt als Werkstück- oder Maschinentischträger genutzt werden kann (siehe hierfür auch Fig. 44). Eine Werkzeugmaschine 1000 kann somit ohne eigenen Maschinentisch ausgestattet werden.

Die Transporteinrichtung 100 kann somit als Werkstückträger mehrere Werkzeugmaschinen 1000 nacheinander anfahren und dort die jeweilige Bearbeitung (z.B. Fräsen, Schleifen,..) ohne Umspannung und damit ohne einen Genauigkeitsverlust durchführen.

Messvorgänge am Werkstück können damit direkt in der gegebenen Aufspannsituation durchgeführt werden. Die Transporteinrichtung 100 kann mitsamt des Werkstückes in den Messraum (z.B. einer Koordinatenmessmaschine o.ä.) fahren. Ein Verspannen oder Verziehen durch öffnen der Werkstückeinspannung entfällt dadurch

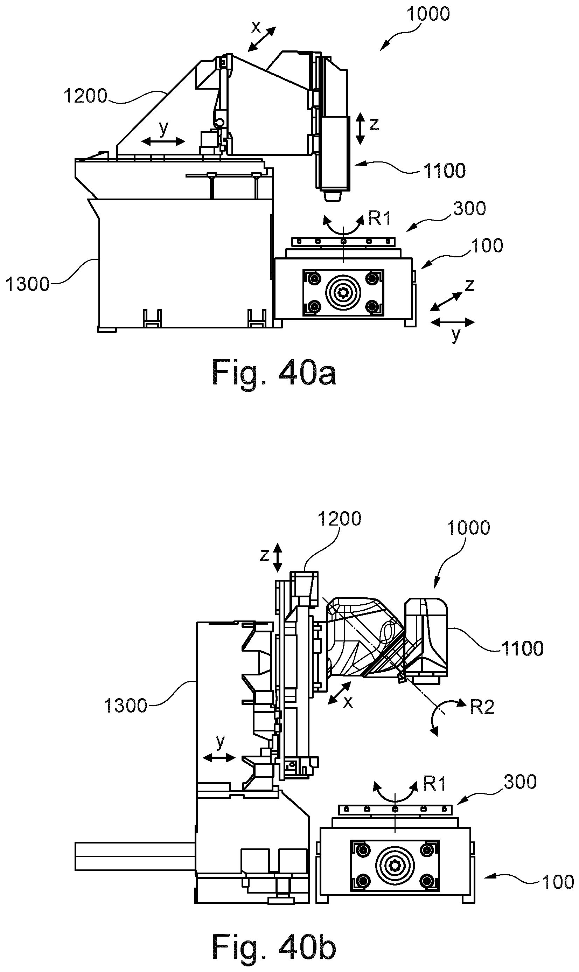

Es ergeben sich daraus völlig neue Maschinenkonzepte, wie beispielhaft bei einer Konsolmaschine (Fig. 40a) und einer Portalmaschine (Fig. 39) schematisch verdeutlicht.

Fig. 40a zeigt schematisch eine Ausführungsform der erfindungsgemäßen Transporteinrichtung 100 mit aufgenommener Palette 300 an einer Konsolmaschine als (modulare) Werkzeugmaschine 1000.

Dabei kann die von der Transporteinrichtung 100 aufgenommene Palette 300 mit einer zusätzlichen Achse (siehe Konsolmaschine; hier eine Rotationsachse R1) versehen sein, um gegebenenfalls ein Fräs-Dreh-Maschinenkonzept zu erzeugen.

Ferner kann die Verbindung von Transporteinrichtung 100 und Palette 300 (hier mit einer zusätzlichen Rotationsachse R1) als Frästisch, NC-Rundtisch, Schwenkrundtisch, als Fräs-Drehtisch oder dergleichen ausgebildet sein und so für die verschiedensten Anwendungsfälle von Werkstückbearbeitung verwendet werden.

In dem gezeigten Beispiel wird außerdem eine Werkzeugmaschine 1000 in Konsolbauweise genutzt, welche neben einem Ständerelement 1300 und einem Querelement 1200 eine Arbeitsspindel 1100 aufweist, wobei die Arbeitsspindel 1100 in x-, y- und z-Richtung gegenüber dem Ständerelement verfahrbar ist. Zusätzlich kann die Transporteinrichtung 100 in x- und y-Richtung verfahren werden und kann die Palette 300 über die Rotationsachse R1 um die z-Achse herum drehen. Ferner kann die Konsolmaschine auch um eine zusätzliche Rotationsachse R2 erweitert werden, wie dies in Fig. 40b beschrieben ist.

Fig. 40b zeigt schematisch eine weitere Ausführungsform der erfindungsgemäßen Transporteinrichtung 100 als Bestandteil weiterer verschiedener Maschinenkonzepte einer (modularen) Werkzeugmaschine 1000.

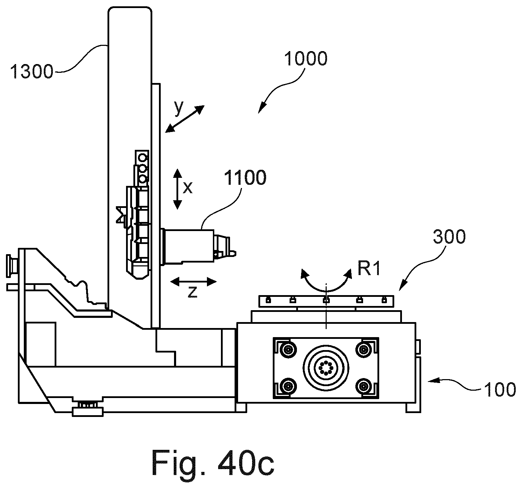

Dabei kann, wie bereits anhand der Konzepte in Fig. 39 und 40a erläutert, eine Konsolmaschine mit einer zusätzlichen Rotationsachse R2 an der Arbeitsspindel 1100 versehen sein, um die Lage der Arbeitsspindel 1100 zur Palette 300 bzw. zur Transporteinrichtung 100 um 90° durch Schwenken der Arbeitsspindel 1100 um 180° um die Rotationsachse R2 herum zu ändern. Dies ist deswegen vorteilhaft möglich, da die Rotationsachse R2 und die Ebene/Oberfläche der Palette 300 im Wesentlichen in einem 45°-Winkel zueinander stehen. Weiterhin kann aber auch, wie in Fig. 40c dargestellt, eine Anwendung der Transporteinrichtung 100 bei einem Horizontal-Bearbeitungszentrum denkbar sein, wobei dieses auch wieder um eine zusätzliche Rotationsachse R2 (hier nicht gezeigt) wie diese an der Konsolmaschine in Fig. 40a zu sehen ist, erweitert werden kann, damit auch die Arbeitsspindel 1100 des Horizontal-Bearbeitungszentrums bei Bedarf um 90° zur Palette 300 bzw. zur Transporteinrichtung 100 geschwenkt werden kann.

In beiden Fällen ist auch hier wieder die Transporteinrichtung 100 mit einer Palette 300 (in Fig. 40b und 40c jeweils mit einer Rotationsachse R1) als "Maschinentisch" eingerichtet, wobei der Maschinentisch durch die Rotationsachse R1 bei Bedarf ebenfalls als Rundtisch verwendet werden kann, um eine noch höhere Flexibilität der mit der Palette 300 ausgerüsteten Transporteinrichtung 100 zu gewährleisten. Hierdurch kann die Transporteinrichtung 100 wieder eine Bearbeitungsstation nach der anderen anfahren und wieder verlassen, um an der jeweiligen Bearbeitungsstation entsprechende Bearbeitungsschritte an dem Werkstück 1 (hier nicht gezeigt) durchführen zu lassen.

In beiden Darstellungen (Fig. 40b und 40c) werden die Arbeitsspindeln 1100 weiterhin über die Linearachsen in x-, y- und z-Richtung zur Palette 300 bzw. zur Transporteinrichtung 100 zugestellt.

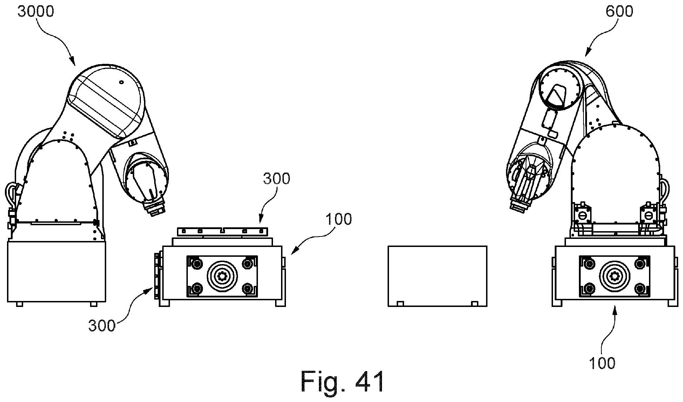

Fig. 41 zeigt schematisch eine weitere Ausführungsform der erfindungsgemäßen Transporteinrichtung 100, die mehrere Paletten 300 bzw. Werkstücke trägt, in Interaktion mit einem stationären Industrieroboter 3000 zur Handhabung/Bearbeitung der Werkstücke (links) und eine weitere Ausführungsform der erfindungsgemäßen Transporteinrichtung 100 mit einem Fräsroboter 600 (rechts).

Dabei kann der im linken Bild gezeigte stationäre Industrieroboter 3000 ebenso durch eine Transporteinrichtung 100, die mit einem entsprechenden Roboter 600 als Aufsatz ausgerüstet ist, ersetzt werden und so die Flexibilität der Produktionsabläufe weiter erhöhen. In beiden Fällen (stationärer Industrieroboter 3000 oder Transporteinrichtung 100 mit Roboter 600) werden durch den Roboter die Werkstücke auf den Paletten 300 der rechten Transporteinrichtung 100 bearbeitet bzw. gehandhabt.

Der im rechten Bild gezeigte Fräsroboter 600 ist durch seine Verfahrbarkeit mithilfe der Transporteinrichtung 100 in der Lage, an eine Vielzahl von Bearbeitungsstationen innerhalb kürzester Zeit gebracht zu werden und zur Verfügung zu stehen (z.B. um bei einer fräsenden Bearbeitung eines Werkstücks in einer Werkzeugmaschine unterstützend zusätzliche Fräsarbeiten auszuführen oder vollständig allein die Fräsarbeiten durchzuführen). Ferner können mit dem fahrbaren Fräsroboter 600 auch Bauteile bearbeitet werden, die in ihrer Größe kaum oder gar nicht in einer Werkzeugmaschine aufgenommen werden könnten, so dass quasi das Bauteil nicht zur Bearbeitungsmaschine gebracht werden muss, sondern die Bearbeitungsmaschine kommt zum Bauteil. Dies erhöht zusätzlich die Flexibilität in den Produktionsabläufen.

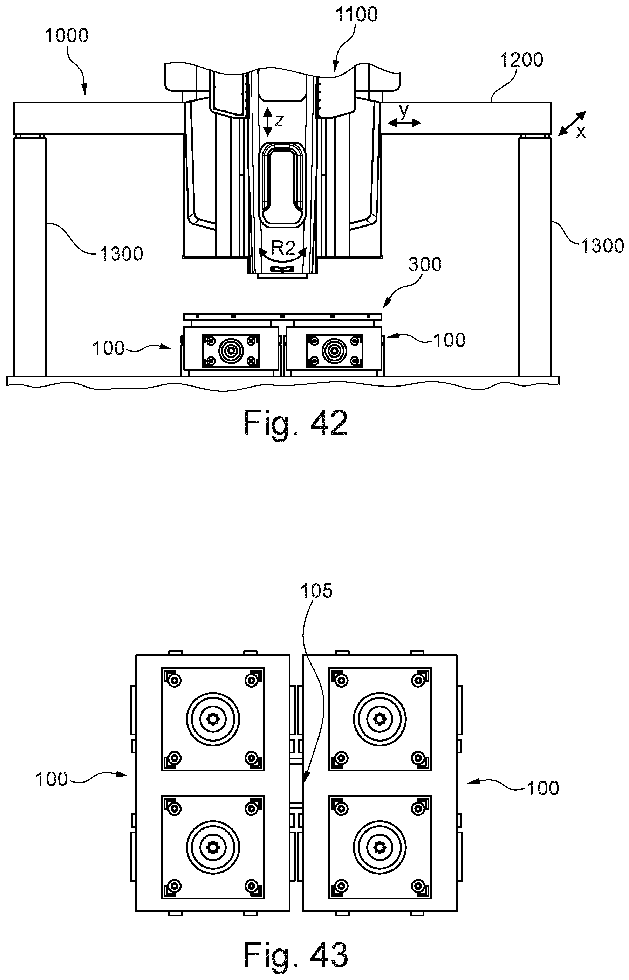

Fig. 42 zeigt schematisch eine weitere Ausführungsform der erfindungsgemäßen Transporteinrichtung 100 als Bestandteil eines Maschinenkonzeptes einer (modularen) Werkzeugmaschine 1000 mit Portalbauweise und mehreren Transporteinrichtungen 100.

Wie bereits in Fig. 39 gezeigt kann die Transporteinrichtung 100 mit einer Palette 300 bestückt in den Arbeitsbereich oder Arbeitsraum einer Werkzeugmaschine 1000 in Portalbauweise einfahren, wobei die Werkzeugmaschine 1000 das Werkstück direkt auf der durch die Transporteinrichtung eingefahrenen Palette 300 bearbeitet. Hierbei weist die Werkzeugmaschine 1000 wieder Ständerelemente 1300 sowie ein Querelement 1200 auf, an diesem die Arbeitsspindel 1100 in y- und z-Richtung verfahren werden kann. Das Querelement 1200 kann nun wiederum in x-Richtung gegenüber den Ständerelementen 1300 verfahren werden.

Insbesondere ist es vorteilhaft, wenn zum Handhaben bzw. Tragen schwerer Werkstücke mehrere Transporteinrichtungen 100 zusammen das Werkstück bzw. die Palette 300 (oder einen Maschinentisch) in die Werkzeugmaschine 1000 transportieren.

Hierfür können die Transporteinrichtungen 100 über die Palette miteinander mechanisch gekoppelt sein (siehe aber auch Fig. 43; eventuell mit einer Verbindung zum Übertragen von Signalen und/oder Energie), oder aber durch die Leitrechnersteuerung 2000 (hier nicht gezeigt) so präzise und synchron gesteuert werden, dass eine Kupplung bzw. eine Signal- und/oder Energieübertragung nicht nötig sind.

Fig. 43 zeigt schematisch eine weitere Ausführungsform der erfindungsgemäßen Transporteinrichtung 100, bei der mehrere Transporteinrichtungen 100 durch Kupplungen 105 miteinander zu einer Einheit verbunden sind.

Wie bereits in Fig. 42 kurz dargestellt, kann es von Vorteil sein, eine Kupplung 105 jeweils zwischen zwei Transporteinrichtungen 100 vorzusehen, um zum einen mechanische Kräfte auf beide Transporteinrichtungen 100 zu verteilen und dabei auch die Möglichkeit zu haben, sowohl Signale als auch Energie zwischen den beiden Transporteinrichtungen 100 über die Kupplung 105 auszutauschen.

Weiterhin sei an dieser Stelle angemerkt, dass anstelle der Kupplungen 105 oder in Verbindung mit den Kupplungen 105 ebenfalls die Aufnahmen 1040 zum Andocken einer Einrichtung an einer Werkzeugmaschine 1000, wie sie beispielsweise in Fig. 16c gezeigt sind, für das Verbinden/Andocken zweier (oder mehrerer) Transporteinrichtungen 100 bzw. verfahrbare Werkzeugmaschinenaufbauten miteinander verwendet werden können. Auch durch die verwendeten konischen Aufnahmen können Signale und/oder Energie übertragen werden sowie eine Verriegelung stattfinden.

Fig. 44 zeigt schematisch eine weitere Ausführungsform der erfindungsgemäßen Transporteinrichtung 100 bei einer Positionierung und Energie- und/oder Signalverbindungsschluss unterhalb einer Werkzeugmaschine 1000 in Portalbauweise.

Dabei sind, neben den bereits beschriebenen Komponenten der Werkzeugmaschine 1000, wie Ständerelemente 1300, Querelement 1200 und Arbeitsspindel 1100, auch konische Aufnahmen 1051 der Werkzeugmaschine gezeigt, wobei diese, neben dem Positionieren der Transporteinrichtung 100, wenn diese sich mittels ihrer Hubzylinder 50 über den konischen Aufnahmen 1051 absenkt, eine Verbindung schließen können, über diese zum Beispiel Energie und/oder Signale zur Steuerung bzw. Überwachung der Transporteinrichtung 100 an die Transporteinrichtung 100 und umgekehrt von der Transporteinrichtung 100 an die Werkzeugmaschine 1000 übertragen werden können.

Durch die konischen Aufnahmen 1051 kann die Palette 300 präzise unter der Werkzeugmaschine 1000 positioniert werden und, und das ist im besonderen Maße vorteilhaft, eine Steuerung der Transporteinrichtung 100 bzw. der aufgenommenen Palette 300 erfolgen, ohne dabei den internen Energiespeicher (hier nicht gezeigt) der Transporteinrichtung 100 zu belasten, da die Energie seitens der Werkzeugmaschine 1000 bereitgestellt und über die beschriebene Verbindung in die Transporteinrichtung 100 eingespeist wird.

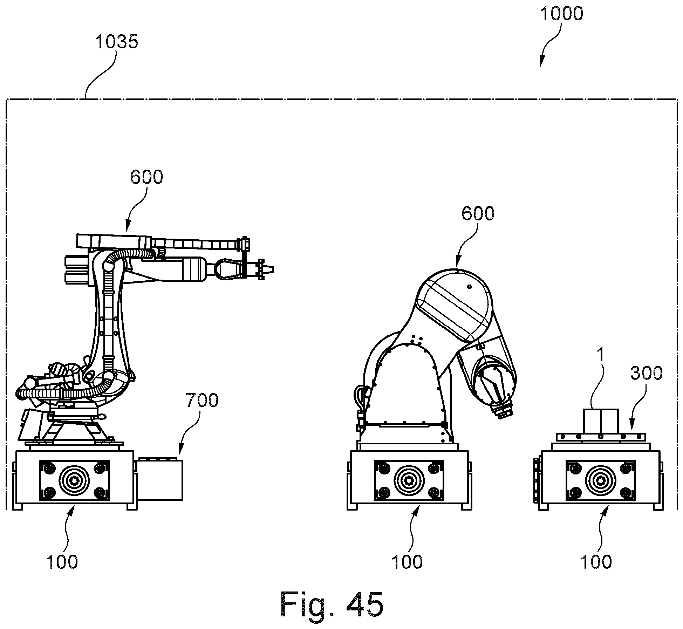

Fig. 45 zeigt schematisch eine (modulare) Werkzeugmaschine 1000, die mehrere erfindungsgemäße Transporteinrichtungen 100 mit unterschiedlichen Teilaufgaben umfasst.

Im Beispiel gezeigt sind dabei eine Transporteinrichtung 100 mit einer aufgenommenen Palette 300 (oder Maschinentisch, beispielweise auch mit einer zusätzlichen Rotationsachse R1) und einem darauf befindlichen Werkstück 1. In unmittelbarer Nähe davon befindet sich eine zweite Transporteinrichtung 100 mit einem Roboter 600 zur Bearbeitung des Werkstücks 1. Dafür kann der Roboter 600 über verschiedenste Werkzeuge verfügen, beispielsweise über einen Fräser, ein Schleifwerkzeug oder aber auch über ein Material auftragende Vorrichtung.

Überdies umfasst die Werkzeugmaschine 1000 eine dritte Transporteinrichtung 100 mit einem Roboter 600, der beispielsweise zum Auswechseln des von dem anderen Roboter 600 aufgenommenen Werkzeugs eingerichtet ist. Diese Transporteinrichtung kann zudem, wie bereits weiter oben beschrieben, zusätzliche Module 700 (wie Gitterboxen, Materialpaletten, weitere Materialträger, Maschinenpalette, Modul von Pufferplätze für Werkzeuge) tragen, aus denen der Roboter 600 beispielsweise Werkzeuge entnehmen und sie an den anderen Roboter 600 zur Bearbeitung des Werkstücks 1 übergeben kann.

Zudem kann die (modulare) Werkzeugmaschine 1000 über eine optionale Kabine 1035 verfügen, innerhalb dieser die Transporteinrichtungen 100 die Bearbeitung des Werkstücks 1 und das Wechseln des Werkzeugs durchführen können. Dabei kann es zudem vorteilhaft sein, wenn die optionale Kabine 1035 über Ein- und Ausgänge für die Transporteinrichtungen 100 verfügt und zudem eine Absaugung (wie beispielsweise die Absaugung 420 oder die Standard-Absaugung 1020 bei ortsfesten Werkzeugmaschinen 1000) zum Absaugen von Schmutz aus der Kabine 1035. Zusätzlich können hier auch weitere Transporteinrichtungen 100 zum Einsatz kommen, um beispielsweise eine zusätzliche Absaugung von Schmutz (beispielsweise durch die Absaugung 420), das Bereitstellen von Kühl-Schmierstoff (Modul 900 zum Auffangen bzw. Absaugen des gebrauchten Kühl-Schmierstoffes aus der Werkzeugmaschine) und/oder die Späneentsorgung (Modul zum Auffangen der Späne 800) zu gewährleisten.

Der Vorteil einer solchen (modularen) Werkzeugmaschine 1000 ist dabei, dass sie beliebig um weitere Transporteinrichtungen 100 mit weiteren Teilaufgaben ergänzt werden kann. Weiterhin ist es aber auch möglich, die (modulare) Werkzeugmaschine 1000 als Ergänzung zu einer bereits bestehenden, feststehenden Werkzeugmaschine 1000 in unmittelbarer Nähe dieser aufzubauen um beispielweise Restarbeiten (Entgraten, Schleifen, etc.) am Werkstück 1 vorzunehmen.

Ein deutlicher Vorteil einer modular aufgebauten Werkzeugmaschine 1000 besteht zudem darin, dass große Bauteile (wie beispielsweise bereits in Fig. 38 gezeigt) direkt an den das Bauteil tragenden Transporteinrichtungen 100 bearbeitet werden kann, ohne dass dabei eine Umspannung des Bauteils erfolgen muss. So können diverse (große) Bauteile in den Arbeitsbereich einer beispielsweise einen Roboter 600 mit Fräswerkzeug tragenden Transporteinrichtung 100 gefahren und dort entsprechend weiter bearbeitet werden.

Wieder können dabei für die genaue Positionierung der Transporteinrichtungen 100 zueinander am Hallenboden befindliche Konen (wie beispielsweise konenförmige Aufnahmen 1051; siehe auch Erläuterungen zu Fig. 16a, 16b, 21a, 21b und 44) genutzt werden, wobei diese, wie bereits weiter oben beschrieben, über Klemmungen verfügen können, so dass nicht nur eine genaue Positionierung der Transporteinrichtungen 100 erfolgt, sondern diese auch durch die Klemmungen gesichert wird.

Zudem können auch die Transporteinrichtungen 100 durch eine Kupplung 105 miteinander verbunden werden (beispielsweise auch zu einer Einheit), um beispielsweise sowohl Signale als auch Energie zwischen den Transporteinrichtungen 100 auszutauschen (siehe hierfür auch Erläuterungen zu Fig. 43).

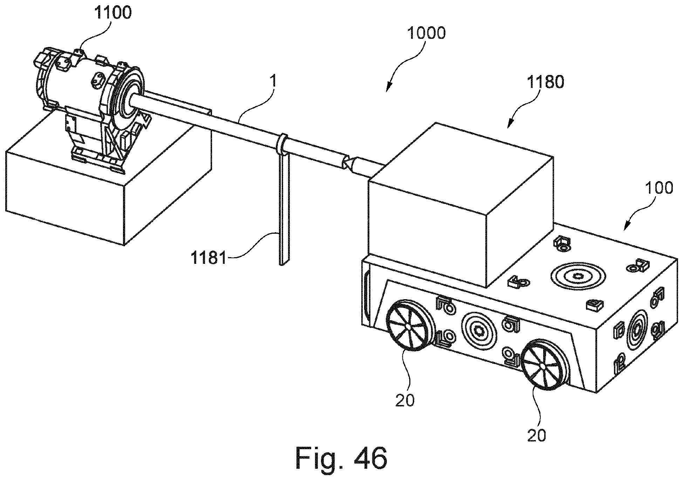

Fig. 46 zeigt schematisch eine weitere Ausführungsform der erfindungsgemäßen Transporteinrichtung 100 mit einem Reitstockaufsatz 1180 für das Dreh-Bearbeiten von (beispielweise großen/langen) Werkstücken 1 als weiteres Konzept einer (modularen) Werkzeugmaschine 1000.

Dabei kann die Ausrichtung des Reitstockaufsatzes 1180 gegenüber der Arbeitsspindel 1100 (hier eine feststehende Arbeitsspindel 1100) in x- und z-Richtung beispielsweise durch den Antrieb 20 der Transporteinrichtung 100 erfolgen. Eine Ausrichtung des Reitstockaufsatzes 1180 in y-Richtung kann nun beispielsweise durch die Hubzylinder 50 (wie in Fig. 17 und 18 gezeigt) der Transporteinrichtung 100 erfolgen.

Jedoch kann zusätzlich oder ausschließlich eine feinere Justierung des Reitstockaufsatzes 1180 gegenüber der Transporteinrichtung 100 in x-, y- und z-Richtung durch entsprechende Antriebe und Führungen zwischen dem Reitstockaufsatz und der Aufnahmevorrichtung 40 der Transporteinrichtung 100 realisiert werden. Dies kann beispielsweise dann erforderlich sein, wenn die Positionierungsgenauigkeit über die Antriebe 20 der Transporteinrichtung 100 nicht ausreicht, oder aber wenn die Positionierung der Transporteinrichtung 100 durch konische Aufnahmen 1051 im Hallenboden festgelegt ist.

Zudem kann eine Lünette 1181 bei sehr langen Werkstücken 1 als Abstützung verwendet werden, um eine höhere Genauigkeit beim Drehen und beim Rundschleifen zu erhalten. Für die spanende Bearbeitungselbst kann nun beispielsweise eine weitere Transporteinrichtung 100 an das Werkstück 1 heranfahren und einen aufgenommenen Werkzeugträger (beispielweise einen Werkzeugschlitten, hier nicht gezeigt) für die Bearbeitung des Werkstücks 1 verwenden. Für die Zustellung des Werkzeugs zu dem Werkstück 1 können nun wieder die Antriebe 20 der Transporteinrichtung 100 verwendet werden und/oder eine zusätzliche Zustellmechanik (für feiner Zustellbewegungen) zwischen Werkzeugträger und Transporteinrichtung 100 vorgesehen sein.

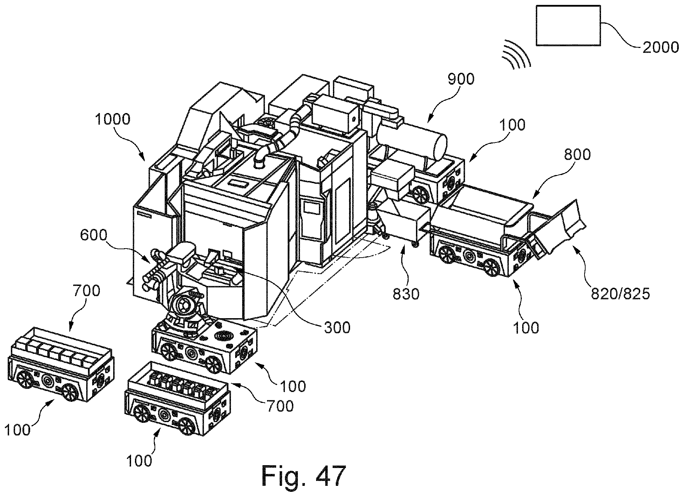

Fig. 47 zeigt schematisch eine Vielzahl an erfindungsgemäßen Transporteinrichtungen 100 mit unterschiedlichen Aufgaben innerhalb einer Produktionskette.

Das fahrerlose Transportsystem (FTS) verfügt vorzugsweise über eine in der Leitrechnersteuerung 2000 integrierte, übergeordnete Leitrechnersoftware, welche die einzelnen Aufträge steuert und überwacht. Die Leitrechnersoftware ist vorzugsweise in der Lage n+1 Transporteinrichtungen 100 gleichzeitig zu steuern und zu überwachen.

Die Kommunikation zwischen den Transporteinrichtungen 100 und der Leitrechnersteuerung 2000 funktioniert vorzugsweise drahtlos über z. B. WLAN oder Funk.

Die Transporteinrichtung 100 verfügt vorzugsweise um eine optische Informationsquelle wie z.B. eine Statusleuchte (hier nicht gezeigt), welche als grafische Darstellung des Zustandes der Transporteinrichtung 100 dient. Hierbei wird vorzugsweise die Ampellogik verwendet. Grün= Status in Ordnung, Gelb: Störung, Rot: Problem. Alternativ kann diese Leuchte durch weitere optische Signale wie blinken auch weitere Zustände anzeigen.

Sind mehrere Transporteinrichtungen 100 im Einsatz, können diese vorzugsweise die Handhabungseinrichtungen (wie Palettenwechsler 200, Roboter 600, Module 700 (wie Materialpaletten, Gitterboxen, etc.), Modul 800 zum Auffangen der Späne, Modul 900 zum Auffangen bzw. Absaugen des gebrauchten Kühl-Schmierstoffes aus der Werkzeugmaschine 1000) miteinander teilen. Dadurch wird eine noch flexiblere Automationslösung gewährleistet.

Vorzugsweise platziert die Transporteinrichtung 100 eine nicht mehr benötigte Handhabungseinrichtung an einem bekannten Platz. Dort kann eine weitere Transporteinrichtung 100 diese Handhabungseinrichtung anfahren, aufnehmen und nutzen.

Vorzugsweise verfügen die Transporteinrichtungen 100 über eine Kommunikationsmöglichkeit mit anderen Transporteinrichtungen 100. Dadurch kann z. B. auf Störquellen wie belegte Verfahrwege, auf gemeinsam genutzte Handhabungseinrichtungen und deren Standort und auf beliebige andere Informationen hingewiesen und reagiert werden. Optional übernimmt diese Aufgabe die Leitrechnersteuerung 2000.

Vorzugsweise verfügt die Transporteinrichtung 100 über eine Schnittstelle, welche die Kommunikation, Energieübertragung zu Werkzeugmaschinen 1000 oder Stationen zulässt. Vorzugsweise sind diese Schnittstellen berührungslos, können aber auch alternativ über Stecker oder Nahfeldkommunikation bewerkstelligt werden.

Dabei können die gezeigten Aufgaben ebenfalls um die vorher beschriebenen Konzepte einer modularen Werkzeugmaschine 1000 (siehe Fig. 38 bis 46) und Linearspeicher (siehe Fig. 13) ergänzt werden, um so insgesamt eine flexible und effiziente Produktion bzw. Bearbeitung von Werkstücken zu gewährleisten.

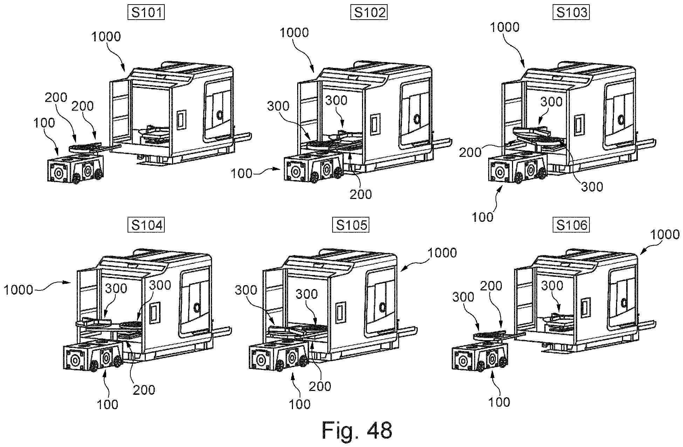

Fig. 48 zeigt schematisch das erfindungsgemäße Verfahren zur Handhabung einer Palette 300 und/oder eines Werkstücks an einer Werkzeugmaschine 1000 mittels eines Palettenwechslers 200.

Zu Beginn muss die Transporteinrichtung 100 einen Palettenwechsler 200 aufnehmen, welcher bevorzugt bereits eine Palette 300, die in die Werkzeugmaschine 1000 eingelegt werden soll, trägt.

Beim Aufnehmen des Palettenwechslers 200 (Handhabungseinrichtung) kann eine Verbindung zwischen der Transporteinrichtung 100 und dem Palettenwechsler 200 über Anschlusselemente der Transporteinrichtung 100 hergestellt werden, über die Steuerungssignale und/oder Energie von der Transporteinrichtung 100 zum Palettenwechsler 200 übertragen werden.

Auf diesen Schritt soll in der bildlichen Darstellung jedoch verzichtet werden, da bereits in den vorherigen Ausführungsformen mehrfach die Aufnahme einer Handhabungseinrichtung (wie einen Palettenwechsler 200) und das Herstellen der Verbindung für Energie- und/oder Signalübertragung beschrieben wurde.

Wie im Schritt S101 gezeigt ist, nähert sich die Transporteinrichtung 100 mit dem aufgenommenen Palettenwechsler 200 und der Palette 300 der Werkzeugmaschine 1000, welche selbst bereits eine Palette 300 in ihrem Arbeitsraum aufweist.

Im darauf folgenden Schritt S102 wird der Palettenwechsler 200 vor der Werkzeugmaschine 1000 positioniert. Dies kann, wie bereits beschrieben, in der Art erfolgen, dass entweder die Transporteinrichtung 100 selbst die Positionierung mittels Fahrbewegungen vornimmt, oder aber die Transporteinrichtung 100 durch Absenken ihres Fahrgestells 10 auf konische Aufnahmen 1051 (hier nicht gezeigt) gegenüber der Werkzeugmaschine 1000 positioniert wird, oder aber die Transporteinrichtung 100 den Palettenwechsler 200 auf konische Aufnahmen 1051 absetzt.

Hierdurch können nun entweder Energie und/oder Signale (z.B. zur Steuerung des Palettenwechsels) von der Transporteinrichtung 100 auf den Palettenwechsler 200 übertragen werden, oder aber durch das Absetzen des Palettenwechslers 200 auf die konischen Aufnahmen 1051 der Werkzeugmaschine 1000 der Palettenwechsler 200 mit der Werkzeugmaschine 1000 direkt verbunden werden, so dass Signale und/oder Energie von der Werkzeugmaschine 1000 direkt an den abgesetzten Palettenwechsler 200 übertragen werden.

Weiterhin ist gezeigt, dass der Palettenwechsler 200 bereits die bisher in der Werkzeugmaschine 1000 eingelegte Palette 300 aufgenommen hat.

Im Schritte S103 wird nun die in der Werkzeugmaschine 1000 befindliche Palette 300 durch den Palettenwechsler 200 herausgehoben und eine Drehung des Palettenwechslers eingeleitet, so dass die von dem Palettenwechsler 200 getragene Palette 300 sich der Palettenaufnahme der Werkzeugmaschine 1000 nähert, wie dies auch ferner im Schritt S104 gezeigt ist.

Im darauf folgenden Schritt S105 wird die von dem Palettenwechsler 200 bisher getragene Palette 300 über der Palettenaufnahme der Werkzeugmaschine 1000 durch Drehung des Palettenwechslers 200 positioniert und auf die Palettenaufnahme der Werkzeugmaschine 1000 abgesetzt.

Im Anschluss daran erfolgt wieder das Hochheben des Palettenwechslers 200 von den konischen Aufnahmen 1051 und ein Entfernen / Wegfahren der Transporteinrichtung 100 mit Palettenwechsler 200 und der aus der Werkzeugmaschine 1000 entnommenen Palette 300, wie dies im Schritt S106 gezeigt ist.

Ferner kann das Verfahren aber auch derart ablaufen, dass nach dem Absetzen des Palettenwechslers 200 an der Werkzeugmaschine 1000 die Transporteinrichtung 100 ohne den Palettenwechsler weiterfährt, um z.B. in der Zwischenzeit eine andere Handhabungseinrichtung (einen anderen Palettenwechsler 200 oder dergleichen) aufzunehmen und diesen entsprechend des Auftrages einer Werkzeugmaschine 1000 oder einem Ablageplatz 500 (hier nicht gezeigt) zu bringen.

Im Anschluss daran kann die Transporteinrichtung 100 oder eine andere Transporteinrichtung 100 den vor der Werkzeugmaschine 1000 abgesetzten Palettenwechsler 200 nach erfolgtem Wechsel der Palette wiederaufnehmen und entsprechend weiter verfahren.

Die vorstehend genannten Verfahrensschritte können dabei aber auch um die jeweiligen, funktionstypischen Schritte der einzelnen Module und Vorrichtungen, die durch die Transporteinrichtung 100 aufgenommen werden. ergänzt werden. Diese können beispielsweise umfassen: Bearbeiten des Werkstücks mittels eines Werkzeugs und/oder einer Auftragvorrichtung durch einen Roboter 600; Auswechseln des Werkzeugs und/oder Werkstücks mittels eines Werkzeugwechslers 720/einer Wechsler-Speicher-Kombination 720/eines Werkzeugspeichers 720; Absaugen und Aufbereiten von Kühl-Schmierstoff; Auffangen und Entsorgen von Materialspänen; Entgraten und/oder Messen der Kontur des Werkstücks 1; Transportieren von Werkstück 1 tragenden Paletten 300; Transportieren eines Fräskopfes 1120; Zusammenkuppeln von zumindest zwei Transporteinrichtungen 100; etc. (siehe hierfür auch die Erläuterungen zu den Figuren 3 bis 46).

Vorstehend wurden Beispiele bzw. Ausführungsbeispiele der vorliegenden Erfindung sowie deren Vorteile detailliert unter Bezugnahme auf die beigefügten Figuren beschrieben.

Es sei erneut hervorgehoben, dass die vorliegende Erfindungjedoch in keinster Weise auf die vorstehend beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

Insbesondere sein an dieser Stelle darauf hingewiesen, dass die verschiedensten Ausgestaltungen und Funktionen, die die erfindungsgemäße Transporteinrichtung 100 erfüllen kann, miteinander kombiniert werden können, um ein überaus flexibles Maschinenkonzept bereitzustellen, um das Bearbeiten von Werkstücken 1 noch flexibler und effizienter zu gestalten. Insbesondere können hierbei die oben genannten Konzepte der modularen Werkzeugmaschine um die verschiedenen, weiter oben genannten Zusatzfunktionen der erfindungsgemäßen Transporteinrichtung 100 sowie um das Bereitstellen und Austauschen von Werkstücken 1 und/oder Paletten 300 ergänzt werden.

Es können aber auch bereits bestehende Werkzeugmaschinen 1000 einfach um die Zusatzfunktionen und/oder um das Werkstück- und Paletten-Handling ergänzt werden. Weiterhin können aber auch modulare Werkzeugmaschinen mit feststehenden Werkzeugmaschinen kombiniert werden, um die Produktion/Bearbeitung von Werkstücken 1 flexibler zu gestalten.

Weiterhin kann beispielsweise eine Transorteinrichtung 100 erfindungsgemäß sowohl Aufgaben aus dem Bereich der modularen Werkzeugmaschine, als auch Zusatzfunktionen zur gleichen Zeit übernehmen. Eine erfindungsgemäße Transporteinrichtung ist dabei nicht auf nur einen Bereich beschränkt sondern kann gleichzeitig verschiedenste Aufgaben aus verschiedenen Bereichen übernehmen.

Die oben genannten Möglichkeiten sind daher nicht als einschränkend aufzufassen und können ausdrücklich in beliebiger Weise, im Rahmen des durch die Ansprüche definierten Schutzumfangs, miteinander kombiniert werden.

### LISTE DER BEZUGSZEICHEN

- **1**: Bauteil / Werkstück
- **10**: Fahrgestell / Plattform
- **20**: Rad / Räder /Antrieb
- **30**: Energiespeicher
- **35**: interne Steuerung
- **40**: Aufnahmevorrichtung
- **41**: konenförmige Abschnitte der Aufnahmevorrichtung
- **42**: Schnittstelle der Aufnahmevorrichtung
- **43**: Befestigungsmittel und Anschlüsse
- **44**: Vertiefung
- **45**: Druckstück
- **46**: Zentriervorrichtung
- **47**: Antrieb zum Verfahren der Vertiefungen
- **48**: Bolzen
- **50**: Hubzylinder (für Rad bzw. Fahrwerk)
- **55**: Hubzylinder (für Aufnahmevorrichtung)
- **60**: Fahrwerk
- **70**: Stecker
- **71**: Druckstück des Steckers
- **72**: Steckerfixierung
- **73**: mechanischer Anschlag
- **74**: Anschlussschnittstelle
- **75**: Steckerkörper
- **100**: Transporteinrichtung
- **101**: Magazin
- **102**: Werkzeug
- **103**: Gegenstück (zum Prisma)
- **105**: Kupplung (zwischen zwei Transporteinrichtungen)
- **200**: Palettenwechsler
- **210**: Haube
- **215**: Verschließeinrichtung
- **300**: Palette
- **301**: Ausrichtelement der Palette
- **350**: Palettenhalter
- **351**: Ausrichtelement des Palettenhalters
- **355**: konische Vertiefungen
- **357**: Schnittstelle des Palettenhalters
- **358**: Schnittstelle der Werkzeugmaschine
- **360**: Auffangabdeckung
- **400**: Förderband
- **420**: Absaugung
- **450**: Werkstückaufnahme
- **470**: Stangenlader
- **500**: Ablageplatz
- **510**: konische Aufnahme (bei Ablageplatz)
- **520**: Ablageplatz mit Rollentechnik
- **600**: Roboter / Industrieroboter / Fräsroboter
- **601**: Verschlussblech
- **610**: Vermessungseinheit
- **620**: Mess- und Prüfmittel
- **630**: Aufsatz zur Nachbearbeitung von Bauteilen
- **640**: Einheit zum Schärfen und Abrichten von Werkzeugen
- **650**: Schutzumbauung
- **700**: Modul (Gitterboxen, Materialpaletten, weitere Materialträger, Maschinenpalette, Modul von Pufferplätze für Werkzeuge)
- **720**: Werkzeugwechsler, Wechsler-Speicher-Kombination, Werkzeugspeicher
- **750**: Roboterzubehör (Wechselgreifer, Entgrater, Aufbewahrungsbox für Werkzeuge)
- **770**: Auftragvorrichtung
- **775**: Pulver-/Medientank
- **777**: Zubringung/Absaugung von Pulver/Medien
- **800**: Modul zum Auffangen der Späne
- **810**: Kippmechanismus
- **820**: Hebemechanismus
- **825**: Spänebehälter
- **830**: Behälterwagen
- **900**: Modul zum Auffangen bzw. Absaugen des gebrauchten Kühl-Schmierstoffes aus der Werkzeugmaschine
- **910**: Absaugvorrichtung
- **920**: Tank
- **930**: Filter (für Späne im Kühl-Schmierstoff)
- **1000**: Werkzeugmaschine
- **1010**: Prisma
- **1020**: Standard-Absaugung
- **1030**: Umhausung
- **1035**: optionale Kabine
- **1040**: Palettenhalteraufnahme
- **1041**: Einrichtungskonus
- **1042**: Zentriervorrichtung zur Ausrichtung der Einrichtung
- **1043**: Medienschnittstelle
- **1044**: Palettenkonus
- **1045**: Zentriervorrichtung zur Ausrichtung der Palette
- **1051**: konische Aufnahme
- **1060**: Umhausung
- **1065**: Stahlabdeckung
- **1070**: Rundtüre
- **1100**: Arbeitsspindel
- **1120**: Fräskopf
- **1150**: Schleifaufsatz
- **1180**: Reitstockaufsatz
- **1181**: Lünette
- **1200**: Querelement (Werkzeugmaschine)
- **1300**: Ständerelement (Werkzeugmaschine)
- **1350**: Maschinenbett
- **1400**: Spänesammler/Spänewagen
- **1500**: Werkzeugrevolver
- **1600**: Gantry-Lader
- **1610**: Greifer (Gantry-Lader)
- **1700**: Rundspeicher
- **1800**: Zwischenspeicher für Paletten
- **1850**: Zuführeinrichtung für Paletten
- **2000**: Leitrechnersteuerung
- **3000**: stationärer Roboter
- **4000**: Rüstplatz für Palette
- **5000**: Ablageplatz für Palette

## Patentansprüche

1. Werkzeugmaschine zum spanenden Bearbeiten eines Werkstücks, umfassend:
- zumindest ein auf einer Grundfläche frei verfahrbarer erster Werkzeugmaschinenaufbau, der ein fahrerloses Transportfahrzeug und einen Industrieroboter (600) umfasst, und
- zumindest ein auf der Grundfläche aufstellbarer, stationärer zweiter Werkzeugmaschinenaufbau mit einer Arbeitsspindel (1100) für Werkzeuge,
wobei das fahrerlose Transportfahrzeug des ersten Werkzeugmaschinenaufbaus eingerichtet ist, zur Positionierung des ersten Werkzeugmaschinenaufbaus am zweiten Werkzeugmaschinenaufbau unabhängig von einer Art Schienensystem auf der Grundfläche verfahren zu werden,
der erste Werkzeugmaschinenaufbau weiter ein Werkzeugmagazin zum Tragen verschiedener Werkzeuge umfasst, wobei der Industrieroboter (600) eingerichtet ist, ein vom Werkzeugmagazin getragenes Werkzeug direkt in die Arbeitsspindel (1100) des zweiten Werkzeugmaschinenaufbaus einzuwechseln und/oder ein von der Arbeitsspindel (1100) getragenes Werkzeug in das Werkzeugmagazin einzuwechseln, wenn der erste Werkzeugmaschinenaufbau an dem zweiten Werkzeugmaschinenaufbau positioniert ist,
**dadurch gekennzeichnet, dass**
das Werkzeugmagazin als Radmagazin oder als Kettenmagazin ausgeführt ist.

2. Werkzeugmaschine gemäß Anspruch 1, **dadurch gekennzeichnet, dass**
der zweite Werkzeugmaschinenaufbau zumindest einen weiteren auf der Grundfläche frei verfahrbaren Werkzeugmaschinenaufbau mit zumindest einem Werkzeugmaschinenbauteil aufweist.

3. Werkzeugmaschine gemäß Anspruch 2, **dadurch gekennzeichnet, dass**
der zumindest eine weitere frei verfahrbare Werkzeugmaschinenaufbau und der erste Werkzeugmaschinenaufbau zusammen die zur Bearbeitung des Werkstücks eingerichtete Werkzeugmaschine ausbilden, wenn der erste Werkzeugmaschinenaufbau an dem zumindest einen weiteren frei verfahrbaren Werkzeugmaschinenaufbau positioniert ist und/oder der zumindest eine weitere frei verfahrbare Werkzeugmaschinenaufbau an dem ersten Werkzeugmaschinenaufbau positioniert ist.

4. Werkzeugmaschine gemäß einem der vorstehenden Ansprüche, **dadurch gekennzeichnet, dass**
der zweite Werkzeugmaschinenaufbau ein Maschinengestell aufweist, an dem ein oder mehrere Werkzeugmaschinenbauteile angeordnet sind.

5. Werkzeugmaschine gemäß Anspruch 4, **dadurch gekennzeichnet, dass**
der zweite Werkzeugmaschinenaufbau ein oder mehrere an dem Maschinengestell verfahrbare Werkzeugmaschinenschlitten aufweist.

6. Werkzeugmaschine gemäß Anspruch 5, **dadurch gekennzeichnet, dass**
zumindest einer der einen oder mehreren Werkzeugmaschinenschlitten die Arbeitsspindel (1100) oder einen die Arbeitsspindel (1100) tragenden Spindelkopf oder Spindelschwenkkopf trägt.

7. Werkzeugmaschine gemäß einem der Ansprüche 4 bis 6, **dadurch gekennzeichnet, dass**
das Maschinengestell in Portalbauweise, in Fahrständerbauweise oder in Konsolbauweise ausgestaltet ist.

8. Werkzeugmaschine gemäß Anspruch 5 oder 6, **dadurch gekennzeichnet, dass**
zumindest einer der einen oder mehreren Werkzeugmaschinenschlitten eine Horizontalbearbeitungs-Arbeitsspindel und/oder eine Vertikalbearbeitungs-Arbeitsspindel trägt.

9. Werkzeugmaschine gemäß einem der vorstehenden Ansprüche, **dadurch gekennzeichnet, dass**
der zweite Werkzeugmaschinenaufbau einen die Arbeitsspindel (1100) tragenden Fräsroboter (600) aufweist.

10. Werkzeugmaschine gemäß einem der vorstehenden Ansprüche, **gekennzeichnet durch**:
- einen Antrieb zum Verfahren des Transportfahrzeugs, und
- eine Steuereinheit zum Steuern des Transportfahrzeugs.

11. Werkzeugmaschine gemäß einem der vorstehenden Ansprüche, **dadurch gekennzeichnet, dass**
der erste Werkzeugmaschinenaufbau einen internen Energiespeicher (30), der den ersten Werkzeugmaschinenaufbau mit Energie, insbesondere elektrischer Energie versorgt, und/oder eine Sensoreinheit, die zur Überwachung der Umgebung ersten Werkzeugmaschinenaufbaus einen oder mehrere optische, Infrarot- und/oder Radarsensoren umfasst, aufweist und/oder
der erste Werkzeugmaschinenaufbau eine oder mehrere Antriebsketten und/oder eine Mehrzahl von Rädern (20) zum Bewegen bzw. Verfahren des ersten Werkzeugmaschinenaufbaus aufweist, wobei eines, mehrere oder alle Räder einzeln ansteuer- und/oder lenkbar sind, wobei insbesondere eines, mehrere oder alle Räder der Transporteinrichtung als einzeln ansteuerbare Mecanum-Räder ausgebildet sind.

12. Werkzeugmaschine gemäß einem der vorstehenden Ansprüche, **dadurch gekennzeichnet, dass**
der erste Werkzeugmaschinenaufbau dazu eingerichtet ist, mit einer externen Steuereinrichtung zu kommunizieren, insbesondere mit einer zentralen Steuereinrichtung, die dazu eingerichtet ist, mit mehreren frei verfahrbaren Werkzeugmaschinenaufbauten gleichzeitig in Verbindung zu stehen, insbesondere mittels einer drahtlosen Kommunikationsverbindung, und die mehreren frei verfahrbaren Werkzeugmaschinenaufbauten zu steuern, insbesondere per automatischer Fernsteuerung.

13. Werkzeugmaschine gemäß einem der vorstehenden Ansprüche, **dadurch gekennzeichnet, dass**
der erste Werkzeugmaschinenaufbau dazu eingerichtet ist, über eine Kommunikationsschnittstelle mit einer Steuereinrichtung der Werkzeugmaschine zu kommunizieren, wobei die Steuereinrichtung der Werkzeugmaschine an dem zweiten Werkzeugmaschinenaufbau angeordnet ist, wobei
die Kommunikationsschnittstelle insbesondere eine drahtlose Kommunikationsschnittstelle aufweist und der erste Werkzeugmaschinenaufbau dazu eingerichtet ist, über die drahtlose Kommunikationsschnittstelle mit der Steuereinrichtung der Werkzeugmaschine per drahtloser Kommunikationsverbindung zu kommunizieren.

14. Werkzeugmaschine gemäß einem der vorstehenden Ansprüche, **dadurch gekennzeichnet, dass**
der erste Werkzeugmaschinenaufbau eine Andockeinrichtung aufweist und dazu eingerichtet ist, mittels der Andockeinrichtung an einer Andockstation des zweiten Werkzeugmaschinenaufbaus zum Ausbilden der Werkzeugmaschine zusammen mit dem zweiten Werkzeugmaschinenaufbau anzudocken,
wobei der erste Werkzeugmaschinenaufbau zusammen mit dem zweiten Werkzeugmaschinenaufbau die zur Bearbeitung des Werkstücks eingerichtete Werkzeugmaschine ausbildet, wenn der erste Werkzeugmaschinenaufbau an der Andockstation des zweiten Werkzeugmaschinenaufbaus angedockt ist.

15. Werkzeugmaschine gemäß Anspruch 14, **dadurch gekennzeichnet, dass**
der erste Werkzeugmaschinenaufbau weiterhin dazu eingerichtet ist, mittels der Andockeinrichtung an einer auf der Grundfläche installierten Andockstation einer weiteren Werkzeugmaschine oder an einer Andockstation zumindest eines dritten Werkzeugmaschinenaufbaus zum Ausbilden einer weiteren Werkzeugmaschine zusammen mit dem dritten Werkzeugmaschinenaufbau anzudocken, wobei
der erste Werkzeugmaschinenaufbau insbesondere dazu eingerichtet ist, zusammen mit dem zumindest einen dritten Werkzeugmaschinenaufbau eine weitere zur Bearbeitung des Werkstücks eingerichtete Werkzeugmaschine auszubilden, wenn der erste Werkzeugmaschinenaufbau an der Andockstation der weiteren Werkzeugmaschine bzw. der Andockstation des zumindest einen dritten Werkzeugmaschinenaufbaus angedockt ist.

## Claims

1. Machine tool for machining a workpiece, comprising:
- at least one first machine tool structure which is freely movable on a base surface and which comprises a driverless transport vehicle and an industrial robot (600), and
- at least one stationary second machine tool structure which can be set up on the base surface and has a work spindle (1100) for tools,
wherein the driverless transport vehicle of the first machine tool structure is configured to be moved on the base surface independently of a type of rail system in order to position the first machine tool structure on the second machine tool structure,
wherein the industrial robot (600) is configured to change a tool carried by the tool magazine directly into the work spindle (1100) of the second machine tool structure and/or to change a tool carried by the work spindle (1100) into the tool magazine when the first machine tool structure is positioned on the second machine tool structure,
**characterized in that**
the tool magazine is designed as a wheel magazine or as a chain magazine.

2. Machine tool according to Claim 1, **characterized in that**
the second machine tool structure has at least one further machine tool structure which is freely movable on the base surface and has at least one machine tool component.

3. Machine tool according to Claim 2, **characterized in that**
the at least one further freely movable machine tool structure and the first machine tool structure together form the machine tool set up for machining the workpiece when the first machine tool structure is positioned on the at least one further freely movable machine tool structure and/or the at least one further freely movable machine tool structure is positioned on the first machine tool structure.

4. Machine tool according to one of the preceding claims, **characterized in that**
the second machine tool structure has a machine frame on which one or more machine tool components are arranged.

5. Machine tool according to Claim 4, **characterized in that**
the second machine tool structure has one or more machine tool slides which are movable on the machine frame.

6. Machine tool according to Claim 5, **characterized in that**
at least one of the one or more machine tool slides carries the work spindle (1100) or a spindle head or spindle pivot head which carries the work spindle (1100).

7. Machine tool according to one of Claims 4 to 6, **characterized in that**
the machine frame is configured in a portal construction, in a traveling column construction or in a bracket construction.

8. Machine tool according to Claim 5 or 6, **characterized in that**
at least one of the one or more machine tool slides carries a horizontal machining work spindle and/or a vertical machining work spindle.

9. Machine tool according to one of the preceding claims, **characterized in that** the second machine tool structure has a milling robot (600) which carries the work spindle (1100).

10. Machine tool according to one of the preceding claims, **characterized by**:
- a drive for moving the transport vehicle, and
- a control unit for controlling the transport vehicle.

11. Machine tool according to one of the preceding claims, **characterized in that**
the first machine tool structure has an internal energy store (30) which supplies the first machine tool structure with energy, in particular electrical energy, and/or a sensor unit which comprises one or more optical, infrared and/or radar sensors for monitoring the surroundings of the first machine tool structure, and/or
the first machine tool structure has one or more drive chains and/or a plurality of wheels (20) for moving or moving the first machine tool structure, wherein one, more or all of the wheels can be actuated and/or steered individually, wherein in particular one, more or all of the wheels of the transport device are configured as mecanum wheels which can be actuated individually.

12. Machine tool according to one of the preceding claims, **characterized in that**
the first machine tool structure is set up to communicate with an external control device, in particular with a central control device which is set up to be connected to a plurality of freely movable machine tool structures at the same time, in particular by means of a wireless communication connection, and to control the plurality of freely movable machine tool structures, in particular by automatic remote control.

13. Machine tool according to one of the preceding claims, **characterized in that**
the first machine tool structure is set up to communicate with a control device of the machine tool via a communication interface, wherein the control device of the machine tool is arranged on the second machine tool structure, wherein
the communication interface has in particular a wireless communication interface and the first machine tool structure is set up to communicate with the control device of the machine tool via the wireless communication interface by wireless communication connection.

14. Machine tool according to one of the preceding claims, **characterized in that**
the first machine tool structure has a docking device and is set up to dock together with the second machine tool structure by means of the docking device at a docking station of the second machine tool structure in order to form the machine tool,
wherein the first machine tool structure together with the second machine tool structure forms the machine tool set up for machining the workpiece when the first machine tool structure is docked at the docking station of the second machine tool structure.

15. Machine tool according to Claim 14, **characterized in that**
the first machine tool structure is furthermore set up to dock together with the third machine tool structure by means of the docking device at a docking station, which is installed on the base surface, of a further machine tool or at a docking station of at least one third machine tool structure in order to form a further machine tool, wherein
the first machine tool structure is in particular set up to form, together with the at least one third machine tool structure, a further machine tool set up for machining the workpiece when the first machine tool structure is docked at the docking station of the further machine tool or the docking station of the at least one third machine tool structure.

## Revendications

1. Machine-outil pour l'usinage par enlèvement de copeaux d'une pièce, comprenant
- au moins une première structure de machine-outil pouvant être déplacée librement sur une surface de base, qui comprend un véhicule de transport sans conducteur et un robot industriel (600), et
- au moins une deuxième structure de machine-outil stationnaire pouvant être posée sur la surface de base, avec une broche de travail (1100) pour des outils,
le véhicule de transport sans conducteur de la première structure de machine-outil étant conçu pour être déplacé sur la surface de base indépendamment d'un type de système de rails pour le positionnement de la première structure de machine-outil sur la deuxième structure de machine-outil,
la première structure de machine-outil comprenant en outre un magasin d'outils pour porter différents outils, le robot industriel (600) étant conçu pour remplacer un outil porté par le magasin d'outils directement dans la broche de travail (1100) de la deuxième structure de machine-outil et/ou pour remplacer un outil porté par la broche de travail (1100) dans le magasin d'outils lorsque la première structure de machine-outil est positionnée sur la deuxième structure de machine-outil,
**caractérisée en ce que**
le magasin d'outils est réalisé sous forme de magasin de roues ou de magasin de chaînes.

2. Machine-outil selon la revendication 1, **caractérisée en ce que**
la deuxième structure de machine-outil présente au moins une autre structure de machine-outil pouvant être déplacée librement sur la surface de base avec au moins un composant de machine-outil.

3. Machine-outil selon la revendication 2, **caractérisée en ce que**
l'au moins une autre structure de machine-outil pouvant être déplacée librement et la première structure de machine-outil forment ensemble la machine-outil conçue pour l'usinage de la pièce lorsque la première structure de machine-outil est positionnée sur l'au moins une autre structure de machine-outil pouvant être déplacée librement et/ou l'au moins une autre structure de machine-outil pouvant être déplacée librement est positionnée sur la première structure de machine-outil.

4. Machine-outil selon l'une quelconque des revendications précédentes, **caractérisée en ce que**
la deuxième structure de machine-outil présente un bâti de machine sur lequel sont disposés un ou plusieurs composants de machine-outil.

5. Machine-outil selon la revendication 4, **caractérisée en ce que**
la deuxième structure de machine-outil présente un ou plusieurs chariots de machine-outil pouvant être déplacés sur le bâti de machine.

6. Machine-outil selon la revendication 5, **caractérisée en ce que**
au moins l'un des un ou plusieurs chariots de machine-outil porte la broche de travail (1100) ou une tête de broche ou une tête pivotante de broche portant la broche de travail (1100).

7. Machine-outil selon l'une quelconque des revendications 4 à 6, **caractérisée en ce que**
le bâti de machine est réalisé sous forme de portique, sous forme de support mobile ou sous forme de console.

8. Machine-outil selon la revendication 5 ou 6, **caractérisée en ce que**
au moins l'un des un ou plusieurs chariots de machine-outil porte une broche de travail d'usinage horizontal et/ou une broche de travail d'usinage vertical.

9. Machine-outil selon l'une quelconque des revendications précédentes, **caractérisée en ce que**
la deuxième structure de machine-outil présente un robot de fraisage (600) portant la broche de travail (1100).

10. Machine-outil selon l'une quelconque des revendications précédentes, **caractérisée par** :
- un entraînement pour déplacer le véhicule de transport, et
- une unité de commande pour commander le véhicule de transport.

11. Machine-outil selon l'une quelconque des revendications précédentes, **caractérisée en ce que**
la première structure de machine-outil présente un accumulateur d'énergie interne (30) qui alimente la première structure de machine-outil en énergie, en particulier en énergie électrique, et/ou une unité de capteur qui comprend un ou plusieurs capteurs optiques, infrarouges et/ou radar pour surveiller l'environnement de la première structure de machine-outil, et/ou
la première structure de machine-outil présente une ou plusieurs chaînes d'entraînement et/ou une pluralité de roues (20) pour déplacer ou déplacer la première structure de machine-outil, une, plusieurs ou toutes les roues pouvant être commandées et/ou dirigées individuellement, en particulier une, plusieurs ou toutes les roues du dispositif de transport étant réalisées sous forme de roues Mecanum pouvant être commandées individuellement.

12. Machine-outil selon l'une quelconque des revendications précédentes, **caractérisée en ce que**
la première structure de machine-outil est conçue pour communiquer avec un dispositif de commande externe, en particulier avec un dispositif de commande central qui est conçu pour être en liaison simultanément avec plusieurs structures de machine-outil pouvant être déplacées librement, en particulier au moyen d'une liaison de communication sans fil, et pour commander les plusieurs structures de machine-outil pouvant être déplacées librement, en particulier par télécommande automatique.

13. Machine-outil selon l'une quelconque des revendications précédentes, **caractérisée en ce que**
la première structure de machine-outil est conçue pour communiquer par le biais d'une interface de communication avec un dispositif de commande de la machine-outil, le dispositif de commande de la machine-outil étant disposé sur la deuxième structure de machine-outil,
l'interface de communication présentant en particulier une interface de communication sans fil et la première structure de machine-outil étant conçue pour communiquer par le biais de l'interface de communication sans fil avec le dispositif de commande de la machine-outil par liaison de communication sans fil.

14. Machine-outil selon l'une quelconque des revendications précédentes, **caractérisée en ce que**
la première structure de machine-outil présente un dispositif d'amarrage et est conçue pour s'amarrer au moyen du dispositif d'amarrage à une station d'amarrage de la deuxième structure de machine-outil pour former la machine-outil conjointement avec la deuxième structure de machine-outil,
la première structure de machine-outil formant conjointement avec la deuxième structure de machine-outil la machine-outil conçue pour l'usinage de la pièce lorsque la première structure de machine-outil est amarrée à la station d'amarrage de la deuxième structure de machine-outil.

15. Machine-outil selon la revendication 14, **caractérisée en ce que**
la première structure de machine-outil est en outre conçue pour s'amarrer au moyen du dispositif d'amarrage à une station d'amarrage installée sur la surface de base d'une autre machine-outil ou à une station d'amarrage d'au moins une troisième structure de machine-outil pour former une autre machine-outil conjointement avec la troisième structure de machine-outil,
la première structure de machine-outil étant en particulier conçue pour former conjointement avec l'au moins une troisième structure de machine-outil une autre machine-outil conçue pour l'usinage de la pièce lorsque la première structure de machine-outil est amarrée à la station d'amarrage de l'autre machine-outil ou à la station d'amarrage de l'au moins une troisième structure de machine-outil.
